# EUROPÄISCHE PATENTSCHRIFT

(11) **EP 4 020 973 B1**
(45) Veröffentlichungstag und Bekanntmachung des Hinweises auf die Patenterteilung: **20.08.2025**
(21) Anmeldenummer: 21213713.7
(22) Anmeldetag: 10.12.2021
(51) Int. Cl.: H04N 5/272, H04N 5/222, G06T 7/73, H04N 23/20

(54) **HINTERGRUND-WIEDERGABEEINRICHTUNG, HINTERGRUNDWIEDERGABESYSTEM, AUFNAHMESYSTEM, KAMERASYSTEM, DIGITALE KAMERA UND VERFAHREN ZUM STEUERN EINER HINTERGRUND-WIEDERGABEEINRICHTUNG**
BACKGROUND REPRODUCTION DEVICE, BACKGROUND REPRODUCTION SYSTEM, RECORDING SYSTEM, CAMERA SYSTEM, DIGITAL CAMERA, AND METHOD FOR CONTROLLING A BACKGROUND REPRODUCTION DEVICE
DISPOSITIF DE REPRODUCTION D'ARRIÈRE-PLAN, SYSTÈME DE REPRODUCTION D'ARRIÈRE-PLAN, SYSTÈME D'ENREGISTREMENT, SYSTÈME DE CAMÉRA, CAMÉRA NUMÉRIQUE ET PROCÉDÉ DE COMMANDE D'UN DISPOSITIF D'AFFICHAGE D'ARRIÈRE-PLAN

(30) Priorität: 23.12.2020 US 202063130120 P
(43) Veröffentlichungstag der Anmeldung: 29.06.2022
(73) Patentinhaber: Arnold & Richter Cine Technik GmbH & Co. Betriebs KG, 80807 München (DE)
(72) Erfinder: Ukas-Bradley, Stephan, Simi Valley, 93063 (US)
(74) Vertreter: Manitz Finsterwald Patent- und Rechtsanwaltspartnerschaft mbB

(56) Entgegenhaltungen:
- EP-A1- 0 895 429
- WO-A1-2019/195884
- GB-A- 2 399 248
- US-A1- 2020 145 644

## Beschreibung

Die Erfindung betrifft eine Hintergrund-Wiedergabeeinrichtung für ein virtuelles Bildaufnahmestudio, welche dazu ausgebildet ist, hinter oder über einem realen Motiv eine Darstellung eines virtuellen Hintergrunds für eine Aufnahme mittels einer zugeordneten Kamera wiederzugeben.

Ferner betrifft die Erfindung ein Hintergrundwiedergabesystem mit einer solchen Hintergrund-Wiedergabeeinrichtung, ein Aufnahmesystem mit einer solchen Hintergrund-Wiedergabeeinrichtung und einer zugeordneten Kamera, digitale Kameras, ein Kamerasystem und ein Verfahren zum Steuern einer solchen Hintergrund-Wiedergabeeinrichtung.

Derartige Hintergrund-Wiedergabeeinrichtungen können insbesondere dazu dienen, in einem Bildaufnahmestudio eine Landschaft oder eine Umgebung wiederzugeben, in welcher eine Aufnahme erfolgen soll und welche einen virtuellen Hintergrund für eine aufzunehmende Szene bildet. Dabei kann es sich bei dem Bildaufnahmestudio beispielsweise um ein Filmstudio zum Aufnehmen von Bewegtbildsequenzen oder um ein Fotostudio handeln, in welchem Einzelbilder bzw. Stillbilder aufgenommen werden. Generell kann eine derartige Aufnahme ein lokales Speichern von Bilddaten oder eine Übertragung an einen entfernten Ort (z.B. Broadcast, Streaming) umfassen. In dem virtuellen Bildaufnahmestudio kann somit ein virtueller Hintergrund bzw. eine Umgebung geschaffen werden, in welcher sich ein Schauspieler während einer Bewegtbildaufnahme bewegen oder welche einen Hintergrund für eine Stillbildaufnahme bilden kann.

Beispielsweise bei Bewegtbildaufnahmen kann eine solche Hintergrund-Wiedergabeeinrichtung zum Wiedergeben einer Darstellung eines virtuellen Hintergrunds zum Einsatz kommen, um eine Szene unmittelbar in der vorgesehenen Umgebung aufnehmen zu können. Insbesondere kann dadurch das Schauspiel erleichtert werden, da etwaige in dem virtuellen Hintergrund ablaufende Ereignisse von einem Schauspieler wahrgenommen werden können und der Schauspieler auf diese Ereignisse reagieren kann. Anders als beispielsweise bei der Verwendung eines Green-Screen, bei welchem die Umgebung für den Schauspieler nicht sichtbar ist, kann der Schauspieler sein Schauspiel somit an etwaige Hintergrundgeschehnisse anpassen und ein Regisseur, eine Kameraperson oder sonstige am Dreh beteiligte Personen kann bzw. können bereits während des Drehs einen Gesamteindruck der Szene gewinnen und die Szene beurteilen. Zudem kann die gesamte Szene bzw. ein entsprechender Ausschnitt eines Films unmittelbar nach der Aufnahme angesehen und überprüft werden, ohne dass zunächst der Hintergrund hinzugefügt werden muss.

Bei Stillbildaufnahmen kann eine solche Hintergrund-Wiedergabeeinrichtung insbesondere dazu genutzt werden, in einem Bildaufnahmestudio und somit in einem kontrollierbaren Umfeld Fotografien in grundsätzlich beliebigen Umgebungen aufnehmen zu können und dabei während des Fotografierens das entstehende Bild vollständig im Blick zu haben. Der Hintergrund und das reale Motiv bzw. eine zu fotografierende Person können somit optimal aufeinander abgestimmt werden bzw. zusammenwirken. Zudem kann die Aufnahme bzw. das aufgenommene Foto unmittelbar angesehen werden, um gegebenenfalls erforderliche Anpassungen vornehmen zu können.

Eine solche Hintergrund-Wiedergabeeinrichtung kann es somit ermöglichen, in einem Bildaufnahmestudio beliebige Landschaften oder Umgebungen als einen virtuellen Hintergrund für eine Aufnahme wiederzugeben und die Aufnahme vor einem solchen virtuellen Hintergrund durchzuführen. Hinsichtlich des Zusammenwirkens mit der zugeordneten Kamera besteht dabei jedoch die Problematik, dass ein dem virtuellen Hintergrund entsprechender realer Hintergrund infolge von Bewegungen bzw. Positionsänderungen der Kamera meist anders von der Kamera abgebildet würde als die Darstellung des virtuellen Hintergrunds von der Kamera tatsächlich abbildet wird. Insbesondere bei dreidimensionalen virtuellen Hintergründen, beispielsweise bei Landschaften, können zumindest einige Hintergrundbereiche in einem virtuellen Bildaufnahmestudio meist nicht in einer Distanz zu dem realen Motiv wiedergegeben werden, in welcher der betreffenden Hintergrundbereich in einem dem virtuellen Hintergrund entsprechenden realen Hintergrund zu dem realen Motiv angeordnet wäre. Vielmehr ist es meist erforderlich, einen dreidimensionalen virtuellen Hintergrund zumindest abschnittsweise auf zweidimensionalen Flächen der Hintergrund-Wiedergabeeinrichtung wiederzugeben, was jedoch dazu führt, dass die Darstellung des virtuellen Hintergrunds bei einer Positionsänderung der Kamera anders abgebildet wird, als es ein Betrachter einer tatsächlichen dreidimensionalen Szene erwarten würde.

Um dieser Problematik begegnen zu können, wäre es grundsätzlich zumindest erforderlich, die Position der Kamera zu kennen, um basierend auf dieser Information etwaige Anpassungen vornehmen zu können. Eine Ermittlung der Position der Kamera kann jedoch zumeist allenfalls mit einem hohen konstruktiven Aufwand und unter entsprechend hohen Kosten erreicht werden. Beispielsweise können mehrere weitere Kameras in dem Bildaufnahmestudio angeordnet werden, welche auf die für die Aufnahme vorgesehene Kamera ausgerichtet sind, um aus deren Abbildungen die Position der Kamera zu bestimmen. Jedoch erfordert dies eine Vielzahl zusätzlicher Kameras, welche räumlich hochaufgelöste Abbildungen erstellen müssen und deren Abbildungen durch komplexe Bildanalyseverfahren ausgewertet werden müssen, um die für die Aufnahme vorgesehene Kamera von sonstigen abgebildeten Elementen unterscheiden zu können.

Beispielsweise ist in US 2020/145644 A1 ein System mit mehreren Displays beschrieben, um eine virtuelle Umgebung erzeugen und mittels einer Kamera abbilden zu können. Dabei können Sensoren, beispielsweise GPS-Sensoren, oder auf die aufnehmende Kamera ausgerichtete weitere Kameras vorgesehen sein, um die Position der aufnehmenden Kamera bestimmen zu können.

Wie bereits erläutert, kann bei Aufnahmen vor einem Green- oder Blue-Screen ein virtueller Hintergrund nachträglich während der Bildbearbeitung hinzugefügt werden, indem sämtliche Bildbestandteile der vorgegebenen Farbe entfernt und durch den virtuellen Hintergrund ersetzt werden. In EP 0 895 429 A1 ist eine solche Green- oder Blue-Screen Anwendung beschrieben, wobei während der Aufnahme auf eine nachträglich in den Bilddaten zu entfernende Hintergrund-Platte Punkte in der zu entfernenden Farbe projiziert werden, um eine Ermittlung der Kameraposition zu ermöglichen.

In WO 2019/195884 A1 ist ferner ein System beschrieben, um mittels jeweiliger Projektoren auf eine Projektionsfläche projizierte Teilbilder zueinander auszurichten, so dass die Teilbilder ein korrekt zusammengesetztes Gesamtbild ergeben. Dazu umfasst das System Kameras, welche in den Teilbildern erzeugte Marker erfassen, um die Positionen der Teilbilder zu bestimmen.

Es ist daher eine Aufgabe der Erfindung, einfachere, schnellere und kostengünstigere Möglichkeiten zum Ermitteln einer Position einer zugeordneten Kamera für Aufnahmen in einem virtuellen Bildaufnahmestudio zu schaffen.

Diese Aufgabe wird gelöst durch eine Hintergrund-Wiedergabeeinrichtung mit den Merkmalen des Anspruchs 1.

Die Hintergrund-Wiedergabeeinrichtung ist dazu ausgebildet, mehrere vorbestimmte optisch detektierbare Positionsmarker wiederzugeben, um eine Ermittlung einer Position der zugeordneten Kamera relativ zu der Hintergrund-Wiedergabeeinrichtung durch Identifizieren der Positionsmarker in einer Abbildung der Hintergrund-Wiedergabeeinrichtung zu ermöglichen.

Indem an der Hintergrund-Wiedergabeeinrichtung mehrere optisch detektierbare Positionsmarker wiedergegeben werden, können die Positionsmarker und/oder zumindest ein sich in einem Gesichtsfeld der zugeordneten Kamera befindender Teil der Positionsmarker beispielsweise von der zugeordneten Kamera während einer Aufnahme, insbesondere zusätzlich zu der Darstellung des virtuellen Hintergrunds, abgebildet werden. Durch Identifizieren der Positionsmarker in der Abbildung, insbesondere durch Ermitteln von Lagen der einzelnen Positionsmarker innerhalb der Abbildung, kann sodann darauf geschlossen werden, wo bzw. in welcher räumlichen Position sich die Kamera relativ zu den Positionsmarkern und somit zu der Hintergrund-Wiedergabeeinrichtung befindet. Alternativ oder zusätzlich können bei einigen Ausführungsformen die Positionsmarker auch mittels zumindest einer Hilfskamera erfasst werden. Die Ermittlung der Position der Kamera anhand der Lagen der Positionsmarker innerhalb der Abbildung kann beispielsweise auf Grundlage eines Triangulationsverfahrens geschehen, wie nachfolgend noch erläutert wird.

Die mehreren Positionsmarker können dabei insbesondere räumlich voneinander beabstandet sein (innerhalb einer Ebene oder im dreidimensionalen Raum), so dass aus den Lagen der Positionsmarker in einer Abbildung der Hintergrund-Wiedergabeeinrichtung die Position der Kamera ermittelt werden kann, welche die Abbildung erzeugt.

Die von der Hauptkamera und/oder einer Hilfskamera erzeugte Abbildung kann generell einer Projektion eines Frustrums (auch als Viewing Frustum bezeichnet) der betreffenden Kamera auf einen Bildsensor entsprechen. Insofern kann mittels der jeweiligen Kamera ein dreidimensionales, insbesondere kegelstumpfartiges, Blickfeld der Kamera, in welchem die dreidimensionale Szene in dem virtuellen Bildaufnahmestudio stattfindet, auf einen zweidimensionalen Bildsensor projiziert werden, um eine zweidimensionale Abbildung des Frustrums der Kamera zu erzeugen. Die Lagen der Positionsmarker innerhalb der Abbildung bzw. die Lagen der abgebildeten Positionsmarker können somit insbesondere angeben, wo sich die Positionsmarker innerhalb der zweidimensionalen Abbildung befinden. Daher können die Lagen der abgebildeten Positionsmarker beispielsweise als zweidimensionale Koordinaten angegeben werden. Diese Lagen und insbesondere deren Koordination können in der Abbildung selbst bzw. in Bilddaten ermittelt werden, welche der Abbildung entsprechen und von einem Bildsensor der zugeordneten Kamera oder einer Hilfskamera erzeugt werden. Alternativ dazu können sich die Lagen auch unmittelbar auf den Bildsensor beziehen und angegeben, wo von den Positionsmarkern ausgehendes Licht auf den Bildsensor auftrifft. Dazu können beispielsweise diejenigen Sensorelemente des Bildsensors identifiziert und angegeben werden, welche von einem Positionsmarker ausgehendes Licht detektieren.

Zusätzlich zu den Lagen der Positionsmarker innerhalb der Abbildung kann auch die Anzahl der abgebildeten Positionsmarker bei der Ermittlung der Position der zugeordneten Kamera berücksichtigt werden, da sich beispielsweise die Größe einer im Bereich der Hintergrund-Wiedergabeeinrichtung von der Kamera erfassten Fläche in Abhängigkeit von der Entfernung zwischen der Kamera und der Hintergrund-Wiedergabeeinrichtung verändern kann. Durch Entfernen der Kamera von der Hintergrund-Wiedergabeeinrichtung können entsprechend zunehmend weitere Positionsmarker in das Frustum der Kamera geraten und abgebildet werden, so dass die Anzahl der abgebildeten Positionsmarker mit der Entfernung zwischen der Kamera und der Hintergrund-Wiedergabeeinrichtung korrelieren und eine Information über die Position der Kamera im Raum bieten kann.

Während die Positionsmarker von der Hintergrund-Wiedergabeeinrichtung wiedergegeben werden, tragen die Positionsmarker nicht zu der Darstellung des virtuellen Hintergrunds bei. Die Positionsmarker sind dementsprechend nicht Teil des dargestellten Bildinhalts, welcher den virtuellen Hintergrund repräsentiert. Vielmehr können die Positionsmarker lediglich bzw. ausschließlich dazu dienen, Positionen an der Hintergrund-Wiedergabeeinrichtung zu markieren. Dabei können die Positionsmarker innerhalb der Darstellung des virtuellen Hintergrunds angeordnet sein und gemeinsam mit der Darstellung des virtuellen Hintergrunds abbildbar, jedoch optisch von der Darstellung des virtuellen Hintergrunds bzw. von gegebenenfalls angrenzenden Hintergrundbereichen des virtuellen Hintergrunds unterscheidbar sein und somit in der Abbildung identifizierbar sein. Eine optische Unterscheidbarkeit kann beispielsweise durch eine Wiedergabe der Positionsmarker in bestimmten Wellenlängenbereichen, insbesondere in nicht-sichtbaren (d.h. für das menschliche Auge nicht wahrnehmbaren) Wellenlängenbereichen wie einem infraroten und/oder einem ultravioletten Wellenlängenbereich erreicht werden. Eine optische Unterscheidbarkeit kann bei einigen Ausführungsformen beispielsweise auch durch eine Wiedergabe als bestimmte Markierungsmuster erreicht werden. Beispielsweise kommen geometrische Formen oder Farbmuster (Wellenlängenmuster) in Betracht. Insbesondere können die Positionsmarker ferner unabhängig von einem jeweiligen dargestellten virtuellen Hintergrund und insbesondere unabhängig von während der Aufnahme auftretenden Veränderungen bzw. Anpassungen des virtuellen Hintergrunds in stets gleicher Weise wiedergegeben werden, um eine einfache und gleichbleibende Identifikation in der Abbildung zu ermöglichen.

Grundsätzlich kann der virtuelle Hintergrund eine dreidimensionale Szene repräsentieren. Diese dreidimensionale Szene kann von der Hintergrund-Wiedergabeeinrichtung insbesondere zumindest abschnittsweise auf einer zweidimensionalen Fläche wiedergegeben werden, wozu die Hintergrund-Wiedergabeeinrichtung beispielsweise eine aktive Beleuchtungsmatrix, insbesondere eine LED-Wand, oder eine Leinwand für eine Rückprojektion aufweisen kann. Dabei kann sich die Hintergrund-Wiedergabeeinrichtung hinter und/oder über dem realen Motiv erstrecken und abschnittweise plan und/oder abschnittsweise gekrümmt ausgebildet sein. Auch die Positionsmarker können an solchen zweidimensionalen Abschnitten der Hintergrund-Wiedergabeeinrichtung angeordnet sein, wobei die Position der zugeordneten Kamera anhand der Lagen zumindest zweier Positionsmarker innerhalb einer Abbildung der Hintergrund-Wiedergabeeinrichtung ermittelbar sein kann.

Insbesondere kann es vorgesehen sein, dass die Positionsmarker von der zugeordneten Kamera abbildbar sind, welche auch für die Aufnahme der Darstellung des virtuellen Hintergrunds sowie des realen Motivs vorgesehen ist. Dadurch kann aus der ohnehin von der zugeordneten Kamera erzeugten Abbildung auf die Position der zugeordneten Kamera geschlossen bzw. deren Position ermittelt werden, ohne dass weitere Aufnahmen erstellt werden müssen oder zusätzliche optische Komponenten erforderlich sind. Alternativ dazu kann es beispielsweise, bei einigen Ausführungsformen, vorgesehen sein, dass die Positionsmarker von zumindest einer mit der für die Aufnahme in dem virtuellen Bildaufnahmestudio vorgesehenen zugeordneten Kamera verbundenen Hilfskamera detektierbar sind, so dass aus der von der Hilfskamera erzeugten Abbildung die Position der Hilfskamera und daraus die Position der zugeordneten Kamera ermittelt werden kann. Alternativ oder zusätzlich kann bei einer Abbildung der Positionsmarker durch eine solche Hilfskamera zunächst eine Parallaxenkorrektur erfolgen, so dass die Position der zugeordneten Kamera unmittelbar anhand der von der Hilfskamera erzeugten Abbildung bestimmt werden kann, ohne dass zunächst die Position der Hilfskamera ermittelt wird.

In einem solchen Kamerasystem mit zumindest einer Hilfskamera kann die zugeordnete Kamera eine Hauptkamera bilden, welche die Aufnahme erzeugt bzw. die Darstellung des virtuellen Hintergrunds und das reale Motiv abbildet, während die Hilfskamera oder Hilfskameras dazu dienen kann/können, die Position dieser Hauptkamera zu ermitteln. Hierbei kann die Hilfskamera eine lediglich geringfügige Erweiterung der Hauptkamera bilden und beispielsweise als ein Modul mit der Hauptkamera verbindbar, insbesondere anschraubbar und/oder aufsteckbar, sein. Eine physische Verbindung zwischen der Hauptkamera und der oder den Hilfskamera(s) ist jedoch nicht zwingend erforderlich, sofern die räumliche Beziehung zwischen der Hauptkamera und der oder den Hilfskamera(s) bekannt ist.

Zudem können bei derartigen Kamerasystemen generell mehrere Hilfskameras mit einer Hauptkamera verbunden sein, wobei die jeweiligen Hilfskameras bzw. deren Bildsensoren beispielsweise in voneinander verschiedenen Wellenlängenbereichen und/oder einem nicht-sichtbaren Wellenlängenbereich lichtempfindlich sein können. Insbesondere können mittels der Hauptkamera Abbildungen einer aufzunehmenden Szene in einem sichtbaren Wellenlängenbereich erzeugt werden, während die Hilfskameras oder einige der Hilfskameras beispielsweise zum Abbilden infraroter und/oder ultravioletter Wellenlängenbereiche ausgebildet sein können. Insbesondere können die Hilfskameras eines solchen Kamerasystems in nicht-sichtbaren Wellenlängenbereichen erzeugte Positionsmarker abbilden, um anhand der Lagen der Positionsmarker in einer von zumindest einer der Hilfskameras erzeugten Abbildung die Position der Hauptkamera im Raum ermitteln zu können.

Ferner können in einem Kamerasystem eine Hilfskamera oder mehrere Hilfskameras dazu vorgesehen sein, zusätzliche Informationen zu gewinnen, welche bei der Ermittlung der Position der zugeordneten Kamera zusätzlich zu den anhand der abgebildeten Positionsmarker gewonnenen Informationen herangezogen werden können. Beispielsweise kann mit der Hauptkamera zumindest eine vertikal nach oben in Richtung einer Decke oder einer oberen Begrenzung des virtuellen Bildaufnahmestudios ausgerichtete Hilfskamera (auch als dome camera bezeichnet) verbunden sein. Eine derart ausgerichtete Hilfskamera kann es ermöglichen, einen Abstand zwischen der Hilfskamera und der Decke bzw. der Begrenzung sowie, aufgrund einer vorgegebenen bzw. bekannten Relativposition zwischen der Hilfskamera und der Hauptkamera, einen Abstand zwischen der Hauptkamera und der Decke bzw. der Begrenzung zu bestimmen, um anhand dieser Information eine Höhe der zugeordneten Kamera im Raum ermitteln oder diese Information bei der Ermittlung der Höhe heranziehen zu können. Dazu kann die Hilfskamera insbesondere einen Tiefensensor umfassen oder mit einem solchen gekoppelt sein, welcher den Abstand zu der Decke oder der Begrenzung des virtuellen Bildaufnahmestudios beispielsweise nach dem Prinzip der Laufzeitermittlung (Time of Flight) oder der Phasenverschiebung (Phase Shift) ermitteln kann.

Alternativ oder zusätzlich können mit der Hauptkamera auch eine Hilfskamera oder mehrere Hilfskameras verbunden sein, mittels derer Informationen über die Position der Hauptkamera im Raum durch ein Depth Mapping gewonnen werden können, indem beispielsweise Schärfe- und/oder Kontrastverläufe der erzeugten Abbildung analysiert und mit jeweiligen Entfernungen der abgebildeten Objekte zu der Hilfskamera und somit der Hauptkamera korreliert werden. Ein solches Depth Mapping kann auch anhand einer von der Hauptkamera erzeugten Abbildung erfolgen. Ferner können eine oder mehrere Hilfskameras in einem Kamerasystem dazu vorgesehen sein, Informationen über die Position der Hauptkamera durch eine Structured Light Methode zu gewinnen. Bei einer solchen Methode kann ein vorgegebenes Lichtmuster, beispielsweise ein Gitter oder ein Linienmuster, auf die Hintergrund-Wiedergabeeinrichtung bzw. die aufzunehmende Szene projiziert werden, um anhand der Deformation des reflektierten Lichtmusters Tiefeninformationen im Hinblick auf die das Licht reflektierenden Objekte gewinnen zu können, welche bei der Ermittlung der Position der zugeordneten Kamera herangezogen werden können. Das Lichtmuster kann dabei insbesondere in einem nicht-sichtbaren Wellenlängenbereich erzeugt werden, um die mittels der Hauptkamera erzeugte Abbildung der Szene im sichtbaren Wellenlängenbereich nicht zu beeinträchtigen, wobei die Hilfskamera oder die Hilfskameras entsprechend zum Abbilden nicht-sichtbaren Lichts ausgebildet sein können. Beispielsweise können mehrere solcher Verfahren zusätzlich zu dem Abbilden der Positionsmarker mittels eines Kamerasystems, insbesondere in Echtzeit, durchgeführt werden, um die Position der zugeordneten Kamera im Raum möglichst präzise in Echtzeit bestimmen und verfolgen zu können. Sowohl ein Depth Mapping als auch eine Structured Light Methode kann unter Zuhilfenahme eines Bildanalyseverfahrens erfolgen, welches beispielsweise mittels eines Mikroprozessors und/oder einer CPU der Hintergrund-Wiedergabeeinrichtung und/oder der betreffenden Kamera durchgeführt werden kann.

Um die Positionsmarker mit der zugeordneten Kamera abbilden und in der erzeugten Abbildung identifizieren zu können, können die Positionsmarker insbesondere in einem sichtbaren Wellenlängenbereich wiedergegeben werden und beispielsweise mittels Bildanalyseverfahren in der von der Kamera erzeugten Abbildung identifiziert werden. Dabei können die Positionsmarker beispielsweise im Zuge einer Post-Production bzw. nachträglichen Bildbearbeitung wieder aus der von der zugeordneten Kamera erzeugten Abbildung entfernt werden, so dass die Positionsmarker in der letztlich gezeigten Abbildung nicht mehr enthalten bzw. sichtbar sind. Alternativ dazu kann es beispielsweise vorgesehen sein, dass die Hintergrund-Wiedergabeeinrichtung dazu ausgebildet ist, die Positionsmarker in einem nicht-sichtbaren Wellenlängenbereich wiederzugeben, so dass die Positionsmarker für das menschliche Auge nicht wahrnehmbar sind. Jedoch kann die zugeordnete Kamera oder, bei einigen Ausführungsformen, eine mit der zugeordneten Kamera verbundene Hilfskamera dazu ausgebildet sein, Licht in dem betreffenden nicht-sichtbaren Wellenlängenbereich zu detektieren, um eine Detektion der Positionsmarker und ein Ermitteln der Position der zugeordneten Kamera zu ermöglichen. Dadurch kann eine Ermittlung der Position der zugeordneten Kamera erreicht werden, ohne dass die Abbildung der Darstellung des virtuellen Hintergrunds bzw. einer aufzunehmenden Szene durch die Wiedergabe der Positionsmarker beeinflusst wird. Ein nachträgliches Entfernen der Positionsmarker ist in diesem Fall nicht erforderlich.

Allgemein wird im Zusammenhang mit der Erfindung nicht-sichtbare elektromagnetische Strahlung (insbesondere in einem infraroten oder einem ultravioletten Wellenlängenbereich) vereinfachend als Licht bezeichnet. Die Unterscheidung zwischen sichtbarem und nicht-sichtbarem Licht bezieht sich dabei auf die Wahrnehmbarkeit durch das menschliche Auge.

Die anhand der Positionsmarker ermittelte Position der zugeordneten Kamera relativ zu der Hintergrund-Wiedergabeeinrichtung kann insbesondere dazu verwendet werden, die Darstellung des virtuellen Hintergrunds in Abhängigkeit von der ermittelten Position der Kamera derart anzupassen, dass die Abbildung der Darstellung des virtuellen Hintergrunds einer von dem Betrachter erwarteten Abbildung eines dem virtuellen Hintergrund entsprechenden realen, insbesondere dreidimensionalen, Hintergrund entspricht. Beispielsweise können Hintergrundbereiche bzw. in dem virtuellen Hintergrund vorhandene Objekte in der Darstellung des virtuellen Hintergrunds verschoben werden, so dass die Hintergrundbereiche bzw. Objekte in der von der zugeordneten Kamera erzeugten Abbildung an einer Stelle abgebildet werden, an welcher ein Betrachter die Hintergrundbereiche bzw. Objekte bei einer Abbildung des realen Hintergrunds erwarten würde. Dabei können sowohl die Ermittlung der Position der Kamera als auch die Anpassung der Darstellung des virtuellen Hintergrunds insbesondere in Echtzeit erfolgen, um die Darstellung des virtuellen Hintergrunds beispielsweise während eines schnellen Kameraschwenks in Abhängigkeit von der sich ändernden Position der Kamera anpassen zu können.

Insbesondere kann es sich bei der zugeordneten Kamera um eine Bewegtbildkamera handeln, welche dazu dienen kann, eine in dem virtuellen Bildaufnahmestudio stattfindende Szene einschließlich der Darstellung des virtuellen Hintergrunds als eine Abfolge mehrerer Abbildungen bzw. als eine Bewegtbildsequenz aufzunehmen. Alternativ dazu kann die zugeordnete Kamera als eine Stillbildkamera zum Aufnehmen von Einzelbildern ausgebildet sein, um in dem virtuellen Bildaufnahmestudio beispielsweise Fotografien in einer grundsätzlich beliebigen virtuellen Umgebung bzw. vor dem virtuellen Hintergrund aufnehmen zu können.

Indem die Hintergrund-Wiedergabeeinrichtung dazu ausgebildet ist, mehrere optisch detektierbare Positionsmarker wiederzugeben, kann die Position der zugeordneten Kamera relativ zu der Hintergrund-Wiedergabeeinrichtung auf einfache Weise aus einer Abbildung der Hintergrund-Wiedergabeeinrichtung ermittelt werden. Dies kann dabei mit verhältnismäßig geringem konstruktivem Aufwand erreicht werden, da lediglich die Wiedergabe einer insbesondere geringen Anzahl von Positionsmarkern an der Hintergrund-Wiedergabeeinrichtung erforderlich ist, was beispielsweise durch einige an der Hintergrund-Wiedergabeeinrichtung angebrachte Lichtquellen erfolgen kann. Abgesehen von solchen geringfügigen, gegebenenfalls vorzunehmenden Anpassungen der Hintergrund-Wiedergabeeinrichtung kann das Bildaufnahmestudio hingegen gegenüber herkömmlichen Lösungen konstruktiv unverändert bleiben.

Gewissermaßen stellt die hierin offenbarte Hintergrund-Wiedergabeeinrichtung somit eine Abkehr von der möglichen Herangehensweise dar, die zugeordnete Kamera unter hohem Aufwand zu beobachten und aus diesen Beobachtungen auf die Position der Kamera zu schließen. Im Gegensatz dazu bietet die hierin offenbarte Hintergrund-Wiedergabeeinrichtung die Möglichkeit, die Position der zugeordneten Kamera anhand von Daten bzw. einer Abbildung zu ermitteln, welche an der Position der Kamera erzeugt werden/wird, bei einigen Ausführungsformen insbesondere durch die ohnehin verwendete zugeordnete Kamera. Dies ermöglicht eine vereinfachte, schnelle und kostengünstige Ermittlung der Position der zugeordneten Kamera, um insbesondere die Darstellung des virtuellen Hintergrunds in Abhängigkeit von der Kameraposition in Echtzeit anpassen zu können.

Weitere Ausführungsformen sind den abhängigen Ansprüchen, der Beschreibung sowie den Zeichnungen zu entnehmen.

Bei einigen Ausführungsformen kann die Hintergrund-Wiedergabeeinrichtung eine Wiedergabefläche für die Darstellung des virtuellen Hintergrunds aufweisen. Insbesondere kann die Hintergrund-Wiedergabeeinrichtung dabei dazu ausgebildet sein, einen dreidimensionalen virtuellen Hintergrund auf der Wiedergabefläche, insbesondere in zwei Dimensionen, wiederzugeben. Die Wiedergabefläche kann sich dabei zumindest abschnittsweise in einer Ebene erstrecken und/oder zumindest abschnittsweise gekrümmt ausgebildet sein. Beispielsweise kann sich die Hintergrund-Wiedergabeeinrichtung gekrümmt und/oder kreisbogenförmig in dem Bildaufnahmestudio um das reale Motiv herum erstrecken und eine ebenfalls gekrümmte Wiedergabefläche aufweisen, auf welcher der virtuelle Hintergrund dargestellt werden kann. Ferner kann die Hintergrund-Wiedergabeeinrichtung eine oder mehrere plane, sich in jeweiligen Ebenen erstreckende Wiedergabeflächen zum Darstellen des virtuellen Hintergrunds aufweisen. Dabei können mehrere der planen Wiedergabeflächen miteinander verbunden sein, wobei zwischen zwei planen Wiedergabeflächen eine weitere plane Wiedergabefläche oder eine gekrümmte Wiedergabefläche angeordnet sein kann.

Bei einigen Ausführungsformen können die Positionsmarker an der Wiedergabefläche angeordnet sein. Insbesondere können die Positionsmarker dadurch an jeweiligen Positionen angeordnet sein, auf welche die zugeordnete Kamera zur Aufnahme der Darstellung des virtuellen Hintergrunds ohnehin ausgerichtet ist, so dass die Positionsmarker von der zugeordneten Kamera detektiert und in der von der zugeordneten Kamera erzeugten Abbildung identifiziert werden können. Indem dabei mehrere, insbesondere räumlich voneinander beabstandete, Positionsmarker vorgesehen sind, kann ferner sichergestellt werden, dass sich stets eine ausreichende Anzahl von Positionsmarkern in einem Gesichtsfeld der zugeordneten Kamera befindet, um die Position der zugeordneten Kamera ermitteln zu können. Die zugeordnete Kamera muss daher nicht die gesamte Wiedergabefläche erfassen und die Position der zugeordneten Kamera kann auch erfasst werden, wenn ein Teil der Positionsmarker durch das reale Motiv verdeckt ist.

Ferner kann die Hintergrund-Wiedergabeeinrichtung bei einigen Ausführungsformen dazu ausgebildet sein, das reale Motiv zu beleuchten. Die Hintergrund-Wiedergabeeinrichtung kann dabei insbesondere zusätzlich zu einer sonstigen Beleuchtung des Bildaufnahmestudios wirken, um möglichst real anmutende Lichtverhältnisse erreichen zu können. Insbesondere können von dem realen Motiv geworfene Schatten, beispielsweise aufgrund einer in dem virtuellen Hintergrund dargestellten Laterne, durch eine solche Beleuchtung in gleicher Weise wie bei einer Aufnahme vor bzw. in einem dem virtuellen Hintergrund entsprechenden realen Hintergrund erzeugt und abgebildet werden.

Bei einigen Ausführungsformen kann sich die Hintergrund-Wiedergabeeinrichtung in einer vertikalen und/oder horizontalen Ausrichtung erstrecken. Die Hintergrund-Wiedergabeeinrichtung kann sich dabei insbesondere in einer vertikalen Ausrichtung hinter dem realen Motiv und/oder in einer horizontalen Ausrichtung über dem realen Motiv erstrecken, wobei die Hintergrund-Wiedergabeeinrichtung beispielsweise einen gekrümmten Übergangsabschnitt zwischen einem Abschnitt mit vertikaler Ausrichtung und einem Abschnitt mit horizontaler Ausrichtung aufweisen kann. Sowohl in Abschnitten mit vertikaler Ausrichtung als auch in Abschnitten mit horizontaler Ausrichtung und/oder in Übergangsabschnitten kann die Hintergrund-Wiedergabeeinrichtung jeweilige Wiedergabeflächen zum Erzeugen der Darstellung des virtuellen Hintergrunds aufweisen.

Die mehreren Positionsmarker können insbesondere an der Hintergrund-Wiedergabeeinrichtung angeordnet sein, wobei die Anordnung der Positionsmarker bei einigen Ausführungsformen eine dreidimensionale Struktur bilden kann. Bei einigen Ausführungsformen kann es somit vorgesehen sein, dass nicht sämtliche der mehreren Positionsmarker innerhalb einer gemeinsamen Ebene angeordnet sind, sondern die mehreren Positionsmarker im Raum verteilt sind. Jedoch können auch bei einer solchen dreidimensionalen Anordnung einige der mehreren Positionsmarker in einer gemeinsamen Ebene und beispielsweise an einem planen Abschnitt der bereits genannten Wiedergabefläche angeordnet sein. Insbesondere kann die Anordnung der mehreren Positionsmarker in einer dreidimensionalen Struktur die Möglichkeiten zur Ermittlung der Position der zugeordneten Kamera erweitern und/oder eine präzisere Positionsermittlung ermöglichen. Beispielsweise können eine Ausrichtung der Kamera im Raum, insbesondere eine Drehstellung und/oder eine Kippstellung der Kamera, und/oder ein Gesichtsfeld der Kamera durch Abbilden von in einer dreidimensionalen Struktur angeordneten Positionsmarkern zusätzlich zu der Position der zugeordneten Kamera bestimmt werden.

Bei einigen Ausführungsformen können die mehreren Positionsmarker zueinander unterschiedlich ausgebildet sein. Beispielsweise können sich die mehreren Positionsmarker hinsichtlich einer Form und/oder Farbe unterscheiden, in welcher die Positionsmarker wiedergegeben werden. Dadurch können die jeweiligen Positionsmarker auch innerhalb der zum Ermitteln der Position der zugeordneten Kamera vorgesehenen Abbildung voneinander unterscheidbar sein, so dass ein jeweiliger abgebildeter Positionsmarker eindeutig einem bestimmten Positionsmarker an der Hintergrund-Wiedergabeeinrichtung zugeordnet werden kann. Auch dadurch kann die Ermittlung der Position der zugeordneten Kamera präzisiert werden.

Ferner kann es bei einigen Ausführungsformen vorgesehen sein, dass die mehreren Positionsmarker in verschiedene Gruppen von Positionsmarkern unterteilt sind, wobei die Positionsmarker einer Gruppe gleich, jedoch unterschiedlich zu den Positionsmarkern zumindest einer anderen Gruppe ausgebildet sind (z.B. hinsichtlich Form und/oder Farbe). Beispielsweise können die Positionsmarker in einzelnen Abschnitten der Hintergrund-Wiedergabeeinrichtung zueinander gleich ausgebildet sein bzw. wiedergegeben werden, so dass anhand der jeweiligen abgebildeten Positionsmarker unmittelbar die Ausrichtung der zugeordneten Kamera auf den entsprechenden Abschnitt der Hintergrund-Wiedergabeeinrichtung gefolgert und/oder das Gesichtsfeld der zugeordneten Kamera bestimmt werden kann.

Die Hintergrund-Wiedergabeeinrichtung weist eine Lichtquellen-Wand auf, die eine Vielzahl von Lichtquellen umfasst, wobei die Lichtquellen dazu ausgebildet sind, die Darstellung des virtuellen Hintergrunds wiederzugeben und die mehreren Positionsmarker zu erzeugen. Insbesondere können die Lichtquellen ferner individuell ansteuerbar sein.

Die Lichtquellen können dabei insbesondere dazu ausgebildet sein, Lichtsignale in einer flächigen Anordnung zu erzeugen, um die Darstellung des virtuellen Hintergrunds sowie die Positionsmarker wiederzugeben. Ferner kann die Vielzahl von Lichtquellen oder ein Teil der Vielzahl von Lichtquellen als aktive und/oder separate Leuchtmittel ausgebildet sein. Alternativ dazu kann die Vielzahl der Lichtquellen oder ein Teil der Vielzahl von Lichtquellen durch Lichtpunkte gebildet sein, die durch Reflektion oder Transmission an der Lichtquellen-Wand, beispielsweise einer Leinwand für eine Rückprojektion, erzeugt werden. Bei einer solchen Ausführungsform kann die aktive Lichterzeugung durch einen Projektor erfolgen, wobei an der Leinwand die Lichtquellen lediglich indirekt gebildet sind.

Insbesondere kann ein Teil der Vielzahl von Lichtquellen die Darstellung des virtuellen Hintergrunds wiedergeben, während ein anderer Teil der Vielzahl von Lichtquellen dazu vorgesehen ist (z.B. durch entsprechende Ansteuerung oder durch entsprechende physikalische Ausgestaltung), die mehreren Positionsmarker zu erzeugen. Bei einigen Ausführungsformen kann ein vorbestimmter erster Teil der Vielzahl von Lichtquellen dazu vorgesehen (z.B. ausgebildet) sein, die Darstellung des virtuellen Hintergrunds wiederzugeben, während ein vorbestimmter zweiter Teil der Vielzahl von Lichtquellen dazu vorgesehen (z.B. ausgebildet) sein kann, die mehreren Positionsmarker zu erzeugen. Die Positionsmarker können dabei folglich an festen Positionen an der Hintergrund-Wiedergabeeinrichtung erzeugt werden, um eine Ermittlung der Position der zugeordneten Kamera zu ermöglichen.

Alternativ dazu kann es jedoch bei einigen Ausführungsformen auch vorgesehen sein, dass sämtliche der Vielzahl von Lichtquellen dazu ausgebildet sind, wahlweise einen Abschnitt der Darstellung des virtuellen Hintergrunds wiederzugeben oder einen Positionsmarker (vollständig oder teilweise) zu erzeugen. Insbesondere kann dabei derjenige Teil der Lichtquellen, welche die Positionsmarker erzeugen, während der Aufnahme variierbar sein, so dass die Positionsmarker beispielsweise während einer Aufnahme bei sich ändernden Positionen an der Hintergrund-Wiedergabeeinrichtung erzeugt bzw. wiedergegeben werden können. Dadurch können die Positionsmarker während der Aufnahme beispielsweise stets in einem Gesichtsfeld der zugeordneten Kamera geführt werden, um ein Abbilden der Positionsmarker und ein Ermitteln der räumlichen Position der zugeordneten Kamera zu ermöglichen. Sofern eine jeweilige Lichtquelle zunächst zum Erzeugen eines Positionsmarkers genutzt wird, der Positionsmarker in einem nachfolgenden Zeitabschnitt jedoch an einer anderen Position bzw. zumindest nicht mehr von der jeweiligen Lichtquelle erzeugt wird, kann die jeweilige Lichtquelle in dem nachfolgenden Zeitabschnitt insbesondere zum Wiedergegeben eines Teils der Darstellung des virtuellen Hintergrunds verwendet werden. Die Positionsmarker können dabei insbesondere Überlagerungen der Darstellung des virtuellen Hintergrunds bilden, so dass ein wahlweises Erzeugen eines Positionsmarkers mittels einer Lichtquelle beispielsweise ein Wiedergeben eines Teils der Darstellung des virtuellen Hintergrunds übersteuern kann, während die Lichtquelle bei einem ausbleibenden Übersteuern den entsprechenden Teil der Darstellung des virtuellen Hintergrunds wiedergeben kann.

Ferner können sämtliche der Vielzahl von Lichtquellen beispielsweise gleichartig ausgebildet sein. Insbesondere kann es bei einigen Ausführungsformen vorgesehen sein, dass sämtliche der Vielzahl von Lichtquellen dazu ausgebildet sind, Licht im sichtbaren Wellenlängenbereich zu emittieren. Bei solchen Ausführungsformen sind folglich sowohl die Darstellung des virtuellen Hintergrunds als auch die Positionsmarker für das menschliche Auge wahrnehmbar. Dies kann es insbesondere ermöglichen, die mehreren Positionsmarker mit der zugeordneten Kamera abbilden und anhand der von der zugeordneten Kamera erzeugten Abbildung eine räumliche Position der zugeordneten Kamera ermitteln zu können. Hierbei kann die Position der Kamera somit anhand von Daten ermittelt werden, die von der zugeordneten Kamera selbst und während der Aufnahme ohnehin erzeugt werden. Da dabei beispielsweise lediglich einige der auch bei einer herkömmlichen Hintergrund-Wiedergabeeinrichtung möglicherweise vorgesehenen Lichtquellen dazu genutzt werden können, die Positionsmarker zu erzeugen, kann das Ermitteln der räumlichen Position der zugeordneten Kamera bei einigen Ausführungsformen ohne wesentlichen konstruktiven Zusatzaufwand erfolgen.

Alternativ dazu kann es auch vorgesehen sein, dass die Lichtquellen der Vielzahl von Lichtquellen zumindest teilweise voneinander verschieden ausgebildet sind. Beispielsweise kann ein erster Teil der Vielzahl von Lichtquellen, mittels dessen die Darstellung des virtuellen Hintergrunds wiedergegeben wird, dazu ausgebildet sein, Licht im sichtbaren Wellenlängenbereich zu emittieren, während ein zweiter Teil der Vielzahl von Lichtquellen dazu ausgebildet sein kann, die Positionsmarker zu erzeugen und Licht in einem nicht-sichtbaren, insbesondere infraroten und/oder ultravioletten, Wellenlängenbereich zu emittieren. Alternativ hierzu kann der zweite Teil der Vielzahl von Lichtquellen dazu ausgebildet sein kann, die Positionsmarker zu erzeugen und Licht in einem speziellen sichtbaren Wellenlängenbereich zu emittieren, der von dem Emissionsspektrum der Lichtquellen des ersten Teils verschieden ist und hierdurch in der zugeordneten Kamera oder einer Hilfskamera unterscheidbar ist. Folglich unterscheiden sich die Lichtquellen des ersten Teils und des zweiten Teils der Vielzahl von Lichtquellen, wobei die Positionsmarker insbesondere von den dazu ausgebildeten Lichtquellen an festen Positionen an der Hintergrund-Wiedergabeeinrichtung erzeugt werden können. Die Positionsmarker können dabei beispielsweise von einer in dem nicht-sichtbaren Wellenlängenbereich bzw. in dem speziellen sichtbaren Wellenlängenbereich sensitiven Hilfskamera detektiert werden, welche mit der zugeordneten Kamera verbunden und in einer definierten Position relativ zu der zugeordneten Kamera angeordnet ist. Dadurch können die Positionsmarker detektiert und die Position der zugeordneten Kamera kann ermittelt werden, ohne dass die Aufnahme der Szene bzw. die von der zugeordneten Kamera erzeugte Abbildung durch die von der Hintergrund-Wiedergabeeinrichtung wiedergegebenen Positionsmarker beeinträchtigt wird.

Jeder der mehreren Positionsmarker kann bei einigen Ausführungsformen von einer jeweiligen Lichtquelle erzeugt werden. Entsprechend können die mehreren Positionsmarker beispielsweise punktförmig bzw. kreisförmig abbildbar sein. Bei anderen Ausführungsformen kann hingegen jeder der mehreren Positionsmarker durch eine jeweilige Mehrzahl von Lichtquellen erzeugt werden. Insbesondere können die Positionsmarker dabei als vorbestimmte Markierungsmuster von mehreren, in dem Markierungsmuster angeordneten Lichtquellen erzeugt werden, um eine einfachere Identifikation in der von der zugeordneten Kamera erzeugten Abbildung zu ermöglichen. Hierbei sind beispielsweise konzentrische Kreise, Vielecke oder Kreuze als Markierungsmuster möglich. Die Markierungsmuster können einfarbig oder mehrfarbig sein. Die Markierungsmuster können durch Mustererkennung identifizierbar sein. Ferner kann es auch vorgesehen sein, dass verschiedene Positionsmarker oder verschiedene Gruppen von Positionsmarkern als verschiedene Markierungsmuster wiedergegeben werden, um eine eindeutige Identifikation des jeweiligen Positionsmarkers oder der Gruppe von Positionsmarkern in der Abbildung zu ermöglichen.

Indem die Lichtquellen insbesondere individuell ansteuerbar sein können, können beispielsweise die Farbe und/oder die Helligkeit der Lichtquellen individuell einstellbar sein. Durch ein entsprechendes Ansteuern der Lichtquellen kann somit insbesondere eine Darstellung eines grundsätzlich beliebigen virtuellen Hintergrunds erzeugt werden. Auch Bewegungen in dem virtuellen Hintergrund können durch entsprechendes Variieren der Einstellungen der Lichtquellen, welche die Darstellung des virtuellen Hintergrunds erzeugen, mittels der Hintergrund-Wiedergabeeinrichtung wiedergegeben werden.

Ferner können die Lichtquellen, insbesondere sämtliche Lichtquellen, bei einigen Ausführungsformen in einem regelmäßigen Raster angeordnet sein. Beispielsweise können die Lichtquellen dabei in mehreren Zeilen und Spalten oder in sonstigen Wiederholungsmustern in einer flächigen Anordnung angeordnet sein, um eine Wiedergabefläche der Hintergrund-Wiedergabeeinrichtung zu bilden bzw. an einer Wiedergabefläche angeordnet zu sein.

Die Vielzahl von Lichtquellen kann bei einigen Ausführungsformen Leuchtdioden umfassen. Zumindest einige der Vielzahl von Lichtquellen können somit als Leuchtdioden ausgebildet sein. Ferner können, bei einigen Ausführungsformen, sämtliche der Lichtquellen als Leuchtdioden ausgebildet sein. Insbesondere können einige oder sämtliche der Vielzahl von Lichtquellen dabei als LED (Light Emitting Diode) oder OLED (Organic Light Emitting Diode bzw. organische Leuchtdiode) ausgebildet sein. Die Leuchtdioden können ferner insbesondere Teil einer Flüssigkristallanzeige sein.

Bei solchen Ausführungsformen kann die Hintergrund-Wiedergabeeinrichtung insbesondere eine LED-Wand aufweisen, welche eine Vielzahl von individuell ansteuerbaren Leuchtdioden in einer flächigen Anordnung umfasst. Die LED-Wand kann dabei die bereits genannte Wiedergabefläche zum Darstellen des virtuellen Hintergrunds bilden, wobei ein erster Teil der Leuchtdioden die Darstellung des virtuellen Hintergrunds erzeugen kann. Auch die Positionsmarker können dabei an der LED-Wand angeordnet und durch einen zweiten Teil der Leuchtdioden erzeugt werden. Durch individuelles Ansteuern des ersten Teils der Leuchtdioden kann die Darstellung des virtuellen Hintergrunds dabei beliebig verändert bzw. angepasst werden, wobei die Position der Kamera anhand der von dem zweiten Teil der Leuchtdioden erzeugten Positionsmarker ermittelt werden kann. In Abhängigkeit von der ermittelten Position der zugeordneten Kamera können die Leuchtdioden des ersten Teils von Leuchtdioden dabei derart angesteuert werden, dass die von der Kamera erzeugte Abbildung der Darstellung des virtuellen Hintergrunds einer von einem Betrachter erwarteten Abbildung eines dem virtuellen Hintergrund entsprechenden realen, insbesondere dreidimensionalen, Hintergrunds entspricht bzw. angenähert wird.

Ferner kann eine Zuordnung einer jeweiligen Leuchtdiode zu dem ersten Teil und/oder dem zweiten Teil von Leuchtdioden während einer Aufnahme gleichbleibend oder variabel sein. Bei einer gleichbleibenden Zuordnung werden dabei insbesondere die Positionsmarker stets von denselben, dem zweiten Teil zugeordneten Leuchtdioden erzeugt, so dass die Positionsmarker während einer Aufnahme immer in derselben bzw. einer unveränderten Position an der Hintergrund-Wiedergabeeinrichtung wiedergegeben werden. Dabei können die Positionsmarker insbesondere von der zugeordneten Kamera abgebildet werden, um eine Ermittlung der räumlichen Position der Kamera zu ermöglichen, jedoch in einer nachträglichen Bildbearbeitung aus der Abbildung entfernt werden, beispielsweise mittels einer Interpolation basierend auf Kantendetektion.

Alternativ dazu kann die Zuordnung einer jeweiligen Leuchtdiode zu dem ersten Teil der Leuchtdioden oder dem zweiten Teil der Leuchtdioden während einer Aufnahme variierbar sein. Beispielsweise kann eine erste Leuchtdiode in einem ersten Zeitabschnitt der Aufnahme einen Positionsmarker oder einen Teil eines Positionsmarkers erzeugen, während eine zu der ersten Leuchtdiode benachbarte zweite Leuchtdiode in dem ersten Zeitabschnitt einen Teil der Darstellung des virtuellen Hintergrunds wiedergibt, wobei die erste Leuchtdiode in einem nachfolgenden zweiten Zeitabschnitt der Aufnahme dazu verwendet werden kann, einen Teil der Darstellung des virtuellen Hintergrunds wiederzugeben, während die zweite Leuchtdiode in dem zweiten Zeitabschnitt den Positionsmarker oder den Teil des Positionsmarkers erzeugen kann. Der Positionsmarker oder der Teil des Positionsmarkers kann sich somit von einer ersten Position an der Hintergrund-Wiedergabeeinrichtung in dem ersten Zeitabschnitt zu einer zweiten Position an der Hintergrund-Wiedergabeeinrichtung in dem zweiten Zeitabschnitt bewegen. Insbesondere kann der Positionsmarker dabei derart bewegt werden, dass sich der Positionsmarker während der gesamten Aufnahme in einem Gesichtsfeld der Kamera befindet. Eine derartige Steuerung der Hintergrund-Wiedergabeeinrichtung wird nachstehend noch näher erläutert.

Bei einigen Ausführungsformen kann die Hintergrund-Wiedergabeeinrichtung eine Vielzahl von mehrfarbigen Lichtquelleneinheiten aufweisen, wobei jede Lichtquelleneinheit dazu ausgebildet ist, Licht in mehreren auswählbaren Farben zu erzeugen, um die Darstellung des virtuellen Hintergrunds wiederzugeben. Hierfür kann die jeweilige mehrfarbige Lichtquelleneinheit beispielsweise eine einzige Leuchtdiode aufweisen, deren spektrale Emissionscharakteristik durchstimmbar (d.h. elektronisch steuerbar) ist, oder die jeweilige mehrfarbige Lichtquelleneinheit kann beispielsweise mehrere Leuchtdioden in einer dichten Anordnung aufweisen, die Licht unterschiedlicher vorbestimmter Wellenlängen erzeugen und deren Helligkeit steuerbar ist, um verschiedene Mischungsverhältnisse zu erzeugen. Insbesondere können die mehrfarbigen Lichtquelleneinheiten sogenannte RGB-Pixel bilden, die wahlweise rotes Licht (R), grünes Licht (G) oder blaues Licht (B) oder eine Mischung hieraus erzeugen.

Die Hintergrund-Wiedergabeeinrichtung weist ferner mehrere Positionsmarker-Lichtquellen auf, welche die mehreren Positionsmarker erzeugen. Insbesondere können die Positionsmarker dabei in Form von Lichtsignalen wiedergegeben sein, welche die Positionsmarker-Lichtquellen an der bereits genannten Wiedergabefläche der Hintergrund-Wiedergabeeinrichtung direkt oder indirekt, beispielsweise durch Reflexion eines Lichtstrahls, erzeugen können. Diese Lichtsignale können in einem sichtbaren oder in einem nicht-sichtbaren Wellenlängenbereich erzeugt werden. Die Positionsmarker-Lichtquellen können entsprechend dazu ausgebildet sein, Licht in einem sichtbaren Wellenlängenbereich und/oder in einem nicht-sichtbaren Wellenlängenbereich, insbesondere in einem infraroten Wellenlängenbereich und/oder in einem ultravioletten Wellenlängenbereich, zu emittieren.

Bei einigen Ausführungsformen kann die Hintergrund-Wiedergabeeinrichtung somit mehrere Positionsmarker-Lichtquellen aufweisen, welche ausschließlich dazu dienen, die Positionsmarker zu erzeugen und nicht zu der Darstellung des virtuellen Hintergrunds beitragen. Die Positionsmarker-Lichtquellen können dabei an festen Positionen an der Hintergrund-Wiedergabeeinrichtung angeordnet sein, so dass auch die Positionsmarker während einer Aufnahme an festen bzw. unveränderlichen Positionen mittels der Positionsmarker-Lichtquellen erzeugt werden können. Ferner können sämtliche Positionsmarker-Lichtquellen während der Aufnahme Licht dauerhaft Licht emittieren, so dass sämtliche Positionsmarker während der gesamten Aufnahme wiedergegeben werden können. Die Positionsmarker-Lichtquellen können jedoch auch individuell ansteuerbar sein, so dass beispielsweise wahlweise nur ein Teil der Positionsmarker erzeugt werden kann. Ferner können die Positionsmarker-Lichtquellen bei einigen Ausführungsformen intermittierend zur Emission von Licht ansteuerbar sein. Dabei kann die Steuerung der Positionsmarker-Lichtquellen insbesondere mit der zugeordneten Kamera synchronisiert sein, um die Positionsmarker in dazu vorgesehen Frames detektieren und die räumliche Position der zugeordneten Kamera in diesen Frames ermitteln zu können, während in den anderen Frames lediglich die Darstellung des virtuellen Hintergrunds wiedergegeben wird.

Ferner kann es vorgesehen sein, dass die Positionsmarker von einzelnen Positionsmarker-Lichtquellen oder von mehreren Positionsmarker-Lichtquellen erzeugt werden. Beispielsweise können mehrere Positionsmarker-Lichtquellen in einer geometrischen Form, beispielsweise in einem Vieleck, in konzentrischen Kreisen oder in einer Kreuzform, angeordnet sein, um einen entsprechend geformten Positionsmarker zu erzeugen. Ferner können mehrere, insbesondere benachbart zueinander angeordnete Positionsmarker-Lichtquellen dazu genutzt werden, einen für eine eindeutige Identifikation in einer jeweiligen Abbildung ausreichend großen Positionsmarker zu erzeugen. Alternativ dazu können die Positionsmarker-Lichtquellen auch dazu ausgebildet bzw. vorgesehen sein, einzeln einen jeweiligen Positionsmarker zu erzeugen, welcher in einer Abbildung punktförmig bzw. kreisförmig detektierbar sein kann.

Zudem umfasst die Lichtquellen-Wand eine Vielzahl von individuell ansteuerbaren Bildelement-Lichtquellen. Insbesondere kann die Hintergrund-Wiedergabeeinrichtung somit bei einigen Ausführungsformen eine Lichtquellen-Wand aufweisen, die eine Vielzahl von individuell ansteuerbaren Bildelement-Lichtquellen umfasst, und die Hintergrund-Wiedergabeeinrichtung kann mehrere Positionsmarker-Lichtquellen aufweisen, welche die mehreren Positionsmarker erzeugen. Dabei kann ein Teil der bereits genannten Vielzahl von Lichtquellen die Vielzahl von Bildelement-Lichtquellen bilden, während ein anderer Teil der Vielzahl von Lichtquellen die mehreren Positionsmarker-Lichtquellen bilden kann.

Bei einigen Ausführungsformen kann die Hintergrund-Wiedergabeeinrichtung somit eine Vielzahl von Lichtquellen aufweisen, wobei ein Teil der Vielzahl von Lichtquellen die Vielzahl von Bildelement-Lichtquellen und ein anderer Teil der Vielzahl von Lichtquellen die mehreren Positionsmarker-Lichtquellen bildet. Bei solchen Ausführungsformen kann die bereits genannte Vielzahl von Lichtquellen in vorbestimmter Weise in Bildelement-Lichtquellen einerseits und in Positionsmarker-Lichtquellen andererseits unterteilt sein. Eine jeweilige Lichtquelle der Vielzahl von Lichtquellen kann entsprechend insbesondere entweder eine Bildelement-Lichtquelle oder eine Positionsmarker-Lichtquelle sein. Diese Zuteilung kann insbesondere während der Aufnahme unveränderlich sein. Grundsätzlich können die Bildelement-Lichtquellen und die Positionsmarker-Lichtquellen auch dauerhaft festgelegt sein, so dass eine jeweilige Lichtquelle der Vielzahl von Lichtquellen immer entweder eine Bildelement-Lichtquelle oder eine Positionsmarker-Lichtquelle sein kann.

Die Bildelement-Lichtquellen und die Positionsmarker-Lichtquellen können, bei einigen Ausführungsformen, gleichartig, insbesondere physikalisch gleichartig und beispielsweise als Leuchtdioden ausgebildet sein. Alternativ dazu können die Bildelement-Lichtquellen und die Positionsmarker-Lichtquellen bei einigen Ausführungsformen jedoch auch physikalisch unterschiedlich ausgebildet sein, wobei sich beispielsweise jeweilige Emissionsspektren der Bildelement-Lichtquellen und der Positionsmarker-Lichtquellen voneinander unterscheiden können. Insbesondere können die Positionsmarker-Lichtquellen bei einigen Ausführungsformen dazu ausgebildet sein, Licht in einem nicht-sichtbaren Wellenlängenbereich zu erzeugen, während die Bildelement-Lichtquellen dazu ausgebildet sein können, die Darstellung des virtuellen Hintergrunds in sichtbaren Wellenlängen wiederzugeben.

Die Bildelement-Lichtquellen erzeugen jeweilige Bildelement-Lichtsignale in einer flächigen Anordnung, um den virtuellen Hintergrund wiederzugeben. Beispielsweise können die Farbe und/oder die Helligkeit der Bildelement-Lichtquellen individuell einstellbar sein, so dass durch entsprechendes Ansteuern der Bildelement-Lichtquellen die Darstellung des virtuellen Hintergrunds erzeugt werden kann. Auch Bewegungen in dem virtuellen Hintergrund können durch entsprechendes Variieren der Einstellungen der Bildelement-Lichtquellen mittels der Hintergrund-Wiedergabeeinrichtung dargestellt werden. Die Bildelement-Lichtquellen und/oder die bereits genannten Positionsmarker-Lichtquellen können dabei insbesondere aktive und/oder separate Leuchtmittel sein. Alternativ dazu können die Bildelement-Lichtquellen und/oder die Positionsmarker-Lichtquellen beispielsweise durch Lichtpunkte gebildet sein, die durch Reflektion oder Transmission an der Lichtquellen-Wand, beispielsweise einer Leinwand für eine Rückprojektion, erzeugt werden.

Die Bildelement-Lichtquellen und/oder die Positionsmarker-Lichtquellen können bei einigen Ausführungsformen Leuchtdioden umfassen. Insbesondere können die Bildelement-Lichtquellen und/oder die Positionsmarker-Lichtquellen dabei als LED (Light Emitting Diode) oder OLED (Organic Light Emitting Diode bzw. organische Leuchtdiode) ausgebildet sein. Diese Leuchtdioden können ferner Teil einer Flüssigkristallanzeige sein.

Bei solchen Ausführungsformen kann die Hintergrund-Wiedergabeeinrichtung insbesondere eine LED-Wand aufweisen, welche eine Vielzahl von individuell ansteuerbaren Bildelement-Leuchtdioden in einer flächigen Anordnung umfasst. Die LED-Wand kann dabei die bereits genannte Wiedergabefläche zum Darstellen des virtuellen Hintergrunds bilden, wobei die Bildelement-Leuchtdioden die Darstellung des virtuellen Hintergrunds erzeugen können. Auch die Positionsmarker können dabei an der LED-Wand angeordnet und durch bzw. von jeweiligen Positionsmarker-Leuchtdioden erzeugt werden. Durch individuelles Ansteuern der Bildelement-Leuchtdioden kann die Darstellung des virtuellen Hintergrunds dabei beliebig verändert bzw. angepasst werden, wobei die Position der Kamera anhand der von den Positionsmarker-Leuchtdioden erzeugten Positionsmarker ermittelt werden kann. In Abhängigkeit von der ermittelten Position der zugeordneten Kamera können die Bildelement-Leuchtdioden folglich derart angesteuert werden, dass die von der Kamera erzeugte Abbildung der Darstellung des virtuellen Hintergrunds einer von einem Betrachter erwarteten Abbildung eines dem virtuellen Hintergrund entsprechenden realen, insbesondere dreidimensionalen, Hintergrunds entspricht bzw. angenähert wird.

Bei einigen Ausführungsformen kann die Anzahl von Positionsmarker-Lichtquellen geringer als die Anzahl von Bildelement-Lichtquellen sein. Die Bildelement-Lichtquellen können ferner mehreren Gruppen von Lichtquellen zugeordnet sein, wobei die mehreren Gruppen von Lichtquellen unterschiedliche Farben sichtbaren Lichts repräsentieren, und wobei die Anzahl von Positionsmarker-Lichtquellen geringer sein kann als die Anzahl von Bildelement-Lichtquellen der Gruppe mit der geringsten Anzahl von Bildelement-Lichtquellen.

Die Positionsmarker-Lichtquellen können ausschließlich dazu vorgesehen sein, die Positionsmarker wiederzugeben bzw. zu erzeugen, ohne an der Darstellung des virtuellen Hintergrunds beteiligt zu sein. Insofern kann die Anzahl von Positionsmarker-Lichtquellen die Anzahl von Bildelement-Lichtquellen, welche zum Erzeugen der insbesondere hochaufgelösten Darstellung des virtuellen Hintergrunds vorgesehen sind, deutlich unterschreiten. Die Anzahl von Positionsmarker-Lichtquellen kann, insbesondere bei einer Anordnung an einer Wiedergabefläche der Hintergrund-Wiedergabeeinrichtung, ausreichend gering sein, dass die Darstellung des virtuellen Hintergrunds mittels der Bildelement-Lichtquellen unbeeinträchtigt und mit zumindest im Wesentlichen unveränderter Auflösung wiedergeben werden kann.

Beispielsweise kann die Hintergrund-Wiedergabeeinrichtung bei einigen Ausführungsformen höchstens einhundert, insbesondere höchstens fünfzig oder höchstens zwanzig oder höchstens zehn Positionsmarker-Lichtquellen aufweisen. Die Hintergrund-Wiedergabeeinrichtung kann bei einigen Ausführungsformen beispielsweise wenigstens zehn und höchstens einhundert Positionsmarker-Lichtquellen aufweisen. Die Hintergrund-Wiedergabeeinrichtung kann auch dazu ausgebildet sein, höchstens einhundert, insbesondere höchstens fünfzig oder höchstens zwanzig oder höchstens zehn Positionsmarker wiederzugeben. Die Hintergrund-Wiedergabeeinrichtung kann bei einigen Ausführungsformen beispielsweise dazu ausgebildet sein, wenigstens zehn und höchstens einhundert Positionsmarker wiederzugeben. Insbesondere kann die Hintergrund-Wiedergabeeinrichtung eine Vielzahl von Leuchtdioden aufweisen, wobei der überwiegende Teil dieser Leuchtdioden als Bildelement-Leuchtdioden zum Erzeugen der Darstellung des virtuellen Hintergrunds vorgesehen sein kann, während lediglich ein geringer Anteil der Leuchtdioden Positionsmarker-Leuchtdioden bilden kann, welche zum Wiedergeben der Positionsmarker vorgesehen und/oder ausgebildet sind.

Gemäß einer ersten Alternative der erfindungsgemäßen Hintergrund-Wiedergabeeinrichtung ist die Vielzahl von Bildelement-Lichtquellen in einem regelmäßigen Raster angeordnet, wobei jede der Positionsmarker-Lichtquellen zwischen mehreren der Bildelement-Lichtquellen des regelmäßigen Rasters angeordnet ist.

Beispielsweise kann die Vielzahl von Bildelement-Lichtquellen in einem Raster aus Zeilen und Spalten angeordnet sein, um die Darstellung des virtuellen Hintergrunds in einer flächigen Anordnung bzw. auf einer Wiedergabefläche der Hintergrund-Wiedergabeeinrichtung zu erzeugen. Dabei kann es vorgesehen sein, dass die Positionsmarker-Lichtquellen in jeweiligen Zwischenräumen des regelmäßigen Rasters zwischen mehreren der Bildelement-Lichtquellen angeordnet sind. Durch das Anbringen der Positionsmarker-Lichtquellen in solchen Zwischenräumen muss die Anzahl von Bildelement-Lichtquellen folglich nicht reduziert werden, um die Positionsmarker wiedergeben zu können, sondern die Darstellung des virtuellen Hintergrunds kann mit gleichbleibender Anzahl von Bildelement-Lichtquellen und mit unveränderter Auflösung erzeugt werden. Möglicherweise ohnehin vorhandene Zwischenräume in dem regelmäßigen Raster können hingegen zum Anbringen von Positionsmarker-Lichtquellen genutzt werden, die ein Ermitteln der Position der zugeordneten Kamera ermöglichen. Beispielsweise kann eine jeweilige Positionsmarker-Lichtquelle in einem Mittelpunkt eines von vier Bildelement-Lichtquellen in dem regelmäßigen Raster gebildeten Quadrats oder in einem Mittelpunkt mehrerer in Kreisform angeordneter Bildelement-Lichtquellen angeordnet sein. Die Positionsmarker-Lichtquellen können ferner bei einigen Ausführungsformen eine geringere Ausdehnung als die Bildelement-Lichtquellen aufweisen, um in solchen Zwischenräumen angebracht werden zu können.

Ferner kann es, insbesondere bei einer Anordnung der Positionsmarker-Lichtquellen zwischen mehreren der Bildelement-Lichtquellen, vorgesehen sein, dass die Positionsmarker-Lichtquellen indirekt an der Lichtquellen-Wand und/oder einer Wiedergabefläche der Hintergrund-Wiedergabeeinrichtung erzeugt werden. Beispielsweise können die lichterzeugenden Quellen zum Erzeugen der Positionsmarker-Lichtquellen hinter der Wiedergabefläche bzw. der Lichtquellen-Wand angeordnet sein, wobei das erzeugte Licht über jeweilige Lichtleiter an die Wiedergabefläche geleitet werden kann, um von dort emittiert zu werden. Die Lichtleiter können dabei an der Wiedergabefläche einen verhältnismäßig geringen Flächenbedarf, insbesondere einen geringeren Flächenbedarf als die lichterzeugenden Quellen, beispielsweise Leuchtdioden, aufweisen, so dass jeweilige Lichtaustrittsöffnungen der Lichtleiter auf einfache Weise in Zwischenräumen zwischen mehreren Bildelement-Lichtquellen des regelmäßigen Rasters angeordnet werden und die Positionsmarker-Lichtquellen bilden können. Beispielsweise können die dabei von Leuchtdioden erzeugt werden, welche hinter einer Wiedergabefläche der Hintergrund-Wiedergabeeinrichtung angeordnet sind und über jeweilige Lichtleiter mit der Wiedergabefläche verbunden sind, wobei die Lichtleiter in jeweilige Zwischenräume zwischen mehreren Bildelement-Lichtquellen münden können.

Alternativ können die Positionsmarker-Lichtquellen grundsätzlich auch anstelle einer jeweiligen Bildelement-Lichtquelle des regelmäßigen Rasters angeordnet sein. Eine jeweilige Positionsmarker-Lichtquelle kann somit bei solchen Ausführungsformen an einer Position in dem regelmäßigen Raster angeordnet sein, an welcher dem Raster entsprechend eine Bildelement-Lichtquelle anzuordnen wäre. Dabei können gewissermaßen einzelne Bildelement-Lichtquellen durch Positionsmarker-Lichtquellen ersetzt werden.

Ein solches Ersetzen einzelner Bildelement-Lichtquellen durch Positionsmarker-Lichtquellen kann eine einfache und insbesondere ohne jeglichen konstruktiven Aufwand zu erreichende Möglichkeit zum Wiedergeben der Positionsmarker bieten. Beispielsweise können bei einer herkömmlichen Lichtquellen-Wand, an welcher ein virtueller Hintergrund erzeugt wird, einzelne Bildelement-Lichtquellen nicht zum Darstellen des virtuellen Hintergrunds, sondern zum Wiedergeben von Positionsmarkern genutzt werden. Folglich müssen keine Bildelement-Lichtquellen ersetzt oder gesonderte Positionsmarker-Lichtquellen in die Lichtquellen-Wand eingebaut werden, sondern einzelne Bildelement-Lichtquellen können gezielt als Positionsmarker-Lichtquellen eingesetzt werden und - anstatt an der Darstellung des virtuellen Hintergrunds beteiligt zu sein - zum Wiedergeben der Positionsmarker angesteuert werden. Dabei kann die Einordnung einzelner Lichtquellen des regelmäßigen Rasters als Positionsmarker-Lichtquellen insbesondere für die von der zugeordneten Kamera zu erstellende Aufnahme bzw. die währenddessen zu erzeugenden Abbildungen, beispielsweise eine Bewegtbildsequenz oder eine einzelne Stillbildaufnahme oder eine Mehrzahl von Stillbildaufnahmen, festgelegt sein, also nicht während der Aufnahme verändert werden.,

Beispielsweise können sowohl die Bildelement-Lichtquellen als auch die Positionsmarker-Lichtquellen als Leuchtdioden ausgebildet sein und die Hintergrund-Wiedergabeeinrichtung kann eine LED-Wand aufweisen, wobei sämtliche Leuchtdioden in einem regelmäßigen Raster angeordnet sein können, einige der Leuchtdioden jedoch nicht zum Darstellen des virtuellen Hintergrunds genutzt werden. Dabei können die Positionsmarker beispielsweise von den als Positionsmarker-Leuchtdioden fungierenden Leuchtdioden als geometrische Muster wiedergegeben werden, welche in einer Abbildung der Hintergrund-Wiedergabeeinrichtung bzw. der Darstellung des virtuellen Hintergrunds, insbesondere mittels eines Bildanalyseverfahrens, identifizierbar ist. Alternativ oder zusätzlich können die Positionsmarker-Lichtquellen die Positionsmarker in einer Farbe erzeugen, die sich von einem den jeweiligen Positionsmarker umgebenden Hintergrundbereich des virtuellen Hintergrunds bzw. von den Farben der Bildelement-Lichtquellen unterscheidet, welche den jeweiligen Positionsmarker umgeben. Grundsätzlich kann eine solche Farbe der Positionsmarker während einer Aufnahme gleichbleibend und/oder veränderbar sein, um die Farbe beispielsweise an eine sich verändernde Farbe des umgebenden Hintergrundbereichs anpassen zu können.

Auch bei einer Einordnung der Positionsmarker-Lichtquellen in ein regelmäßiges Raster der Bildelement-Lichtquellen kann es jedoch vorgesehen sein, dass sich die Positionsmarker-Lichtquellen konstruktiv von den Bildelement-Lichtquellen unterscheiden. Auch in das regelmäßige Raster der Bildelement-Lichtquellen eingeordnete Positionsmarker-Lichtquellen können beispielsweise dazu ausgebildet sein, Licht in einem nicht-sichtbaren Wellenlängenbereich zu emittieren.

Gemäß einer zweiten Alternative der erfindungsgemäßen Hintergrund-Wiedergabeeinrichtung weist die Hintergrund-Wiedergabeeinrichtung mehrere Wiedergabemodule auf, wobei jedes der mehreren Wiedergabemodule einen Teil der Vielzahl von Bildelement-Lichtquellen (z.B. Leuchtdioden) aufweist. Derartige Wiedergabemodule können insbesondere als Paneele (auch als Kacheln bezeichnet) und/oder flach ausgebildet sein. Die Wiedergabemodule weisen seitliche Ränder auf, wobei die Wiedergabemodule an ihren seitlichen Rändern aneinandergrenzen, um die Hintergrund-Wiedergabeeinrichtung zu bilden. Insbesondere können die Wiedergabemodule einen Umriss (z.B. quadratisch oder sechseckig) aufweisen, der eine im Wesentlichen lückenlose zweidimensionale Anordnung der Wiedergabemodule nebeneinander in einem regelmäßigen Raster ermöglicht. Die Positionsmarker-Lichtquellen (z.B. Leuchtdioden) sind gemäß dieser Alternative an den seitlichen Rändern der Wiedergabemodule und somit an den Grenzen zwischen den Wiedergabemodulen angeordnet. Hierdurch vereinfacht sich die Ausstattung der Hintergrund-Wiedergabeeinrichtung mit mehreren Positionsmarker-Lichtquellen (z.B. auch hinsichtlich der erforderlichen Steuerleitungen), wobei sogar ein Nachrüsten vorhandener Wiedergabemodule möglich sein kann.

Bei einigen Ausführungsformen kann die Hintergrund-Wiedergabeeinrichtung dazu ausgebildet sein, die Positionsmarker mit teilweise oder vollständig anderen Wellenlängen als die Bildelement-Lichtsignale zu erzeugen. Ferner kann die Hintergrund-Wiedergabeeinrichtung, bei einigen Ausführungsformen, dazu ausgebildet sein, die Positionsmarker mit teilweise oder vollständig nicht-sichtbaren Wellenlängen zu erzeugen.

Beispielsweise können die Positionsmarker-Lichtquellen dazu ausgebildet sein, Licht in einem speziellen Wellenlängenbereich bzw. Spektrum zu emittieren, welches sich von den Emissionsspektren der Bildelement-Lichtquellen unterscheidet. Dabei können die Positionsmarker-Lichtquellen und die Bildelement-Lichtquellen insbesondere als Positionsmarker-Leuchtdioden bzw. Bildelement-Leuchtdioden ausgebildet sein, wobei sich das Emissionsspektrum oder die Emissionsspektren der Positionsmarker-Leuchtdioden von dem Emissionsspektrum oder den Emissionsspektren der Bildelement-Leuchtdioden unterscheiden kann bzw. können. Insbesondere können die Emissionsspektren der Positionsmarker-Lichtquellen dabei engbandig gewählt sein oder über jeweilige Endbereiche der Emissionsspektren der Bildelement- Lichtquellen zu kleinen und/oder großen Wellenlängen hinausgehen. Bei einigen Ausführungsformen können die Positionsmarker-Leuchtdioden dazu ausgebildet sein, Licht mit einer höheren relativen Intensität in einem speziellen Wellenlängenbereich oder in solchen Endbereichen zu emittieren.

Durch solche unterschiedliche Emissionsspektren kann es ermöglicht werden, in einer Abbildung zu unterscheiden, ob detektiertes Licht von einer Positionsmarker-Lichtquelle oder einer Bildelement- Lichtquellen emittiert wurde, um dadurch die Positionsmarker zu identifizieren. Beispielsweise kann die zugeordnete Kamera oder eine mit der zugeordneten Kamera verbundene, zur Positionsermittlung vorgesehene Hilfskamera dazu einen Bildsensor mit lichtempfindlichen Sensorelementen aufweisen, wobei lediglich ein Teil der Sensorelemente für Wellenlängen sensitiv ist, die über einen der genannten Endbereiche der Emissionsspektren der Bildelement- Lichtquellen hinausgehen. Sofern ein solches Sensorelement Licht detektiert, kann dieses Licht als von einer Positionsmarker-Lichtquelle emittiert identifiziert werden, so dass die Lage des entsprechenden Positionsmarkers in der von der Kamera erzeugten Abbildung bestimmt und daraus die Position der zugeordneten Kamera ermittelt werden kann. Verschiedene spektrale Empfindlichkeiten einzelner Sensorelemente können dabei beispielsweise durch Versehen der Sensorelemente mit einem Farbfiltermuster (Color Filter Array, CFA) erreicht werden, welches insofern Teil eines Bildsensors sein kann.

Bei einem Erzeugen der Positionsmarker in einem nicht-sichtbaren Wellenlängenbereich kann insbesondere ein Erzeugen in einem ultravioletten und/oder einem infraroten Wellenlängenbereich vorgesehen sein. Dabei kann beispielsweise eine teilweise Emission im nicht-sichtbaren Wellenlängenbereich vorgesehen sein, indem sich beispielsweise Endbereiche eines Emissionsspektrums der Positionsmarker-Lichtquellen in den nicht-sichtbaren Bereich hineinerstrecken. Jedoch kann auch ein Wiedergeben der Positionsmarker mit vollständig in einem nicht-sichtbaren Wellenlängenbereich liegenden Wellenlängen vorgesehen sein. Insbesondere kann dadurch auf ein nachträgliches Entfernen der Positionsmarker in der von der zugeordneten Kamera erzeugten Abbildung verzichtet werden, da die nicht-sichtbaren Positionsmarker ohnehin für das menschliche Auge nicht wahrnehmbar sind.

Um solche, in einem nicht-sichtbaren Wellenlängenbereich erzeugte Positionsmarker detektieren zu können, kann ein Bildsensor der zugeordneten Kamera und/oder zumindest einer mit der zugeordneten Kamera verbundenen Hilfskamera zumindest abschnittsweise in einem nicht-sichtbaren Wellenlängenbereich lichtempfindlich Sensorelemente aufweisen. Dabei kann beispielsweise ein zusammenhängender Sensorbereich mit in einem nicht-sichtbaren Wellenlängenbereich sensitiven Sensorelementen ausgebildet sein und/oder zwischen für sichtbares Licht sensitiven Sensorelementen können einzelne, in einem nicht-sichtbaren Wellenlängenbereich sensitive Sensorelemente angeordnet sein. Auch dies kann beispielsweise durch ein Farbfiltermuster bzw. ein Wellenlängenfiltermuster der Sensorelemente erreicht werden. Eine Hilfskamera, die mit der zugeordneten Kamera bzw. der für die Aufnahme vorgesehenen Hauptkamera verbunden bzw. verbindbar ist, kann zudem einen Bildsensor mit ausschließlich in einem nicht-sichtbaren Wellenlängenbereich sensitiven Sensorelementen aufweisen, wie nachstehend noch näher erläutert ist.

Die Hintergrund-Wiedergabeeinrichtung kann bei einigen Ausführungsformen dazu ausgebildet sein, die Positionsmarker lediglich intermittierend und/oder zeitlich alternierend zu den Bildelement-Lichtsignalen zu erzeugen.

Durch eine solche alternierende bzw. intermittierende Ansteuerung der Positionsmarker-Lichtquellen und der Bildelement-Lichtquellen kann die Ermittlung der Position der zugeordneten Kamera insbesondere in eigens dazu vorgesehenen Frames erfolgen, während in anderen Frames lediglich die Darstellung des virtuellen Hintergrunds mittels der Bildelement-Lichtquellen erzeugt wird. Die Steuerung der Positionsmarker-Lichtquellen und der Bildelement-Lichtquellen kann dabei mit der zugeordneten Kamera synchronisiert sein, so dass in jeweiligen Frames entweder ausschließlich die Bildelement-Lichtquellen, ausschließlich die Positionsmarker-Lichtquellen oder sowohl die Bildelement-Lichtquellen als auch die Positionsmarker-Lichtquellen eingeschaltet sind. Insbesondere bei einer Wiedergabe der Positionsmarker im sichtbaren Wellenlängenbereich kann dadurch die Anzahl der Frames reduziert werden, in welchen die Positionsmarker nachträglich entfernt werden müssen. Dabei kann in einzelnen Frames beispielsweise ausschließlich eine Positionsbestimmung erfolgen, indem ausschließlich die Positionsmarker-Lichtquellen eingeschaltet werden, oder die Positionsmarker-Lichtquellen können in einzelnen Frames zusätzlich zu den stets die Darstellung des virtuellen Hintergrunds erzeugenden Bildelement-Lichtquellen eingeschaltet werden, so dass durch eine Identifikation der Positionsmarker in diesen Frames die Position der Kamera bestimmt werden kann.

Die Positionsmarker-Lichtquellen und die Bildelement-Lichtquellen können beispielsweise alternierend in aufeinanderfolgenden Frames Licht erzeugen oder die Positionsmarker-Lichtquellen können nach einer vorbestimmten Anzahl von Frames, in welchen lediglich die Darstellung des virtuellen Hintergrunds mittels der Bildelement-Lichtquellen erzeugt wird, zum Erzeugen von Licht angesteuert werden, um in diesen Frames die Position der Kamera bestimmen zu können. Insbesondere kann die Emissionsdauer der Positionsmarker-Lichtquellen bei einem solchen alternierenden bzw. intermittierenden Betrieb geringer sein als die Emissionsdauer der Bildelement-Lichtsignale, so dass das Erzeugen der Positionsmarker für das menschliche Auge und insbesondere einen sich vor der Hintergrund-Wiedergabeeinrichtung bewegenden Schauspieler nicht wahrnehmbar ist.

Wie bereits erläutert, kann die Hintergrund-Wiedergabeeinrichtung bei einigen Ausführungsformen eine Vielzahl von Lichtquellen aufweisen. Bei einigen Ausführungsformen kann die Vielzahl von Lichtquellen dabei dazu ausgebildet sein, wahlweise die mehreren Positionsmarker zu erzeugen oder einen Teil der Darstellung des virtuellen Hintergrunds wiederzugeben.

Bei solchen Ausführungsformen besteht somit zumindest keine grundsätzliche physikalische Unterteilung der Lichtquellen in einen ersten Teil von Lichtquellen, welche die Darstellung des virtuellen Hintergrunds wiedergeben, und in einen zweiten Teil von Lichtquellen, welche die Positionsmarker erzeugen, sondern die Lichtquellen der Vielzahl von Lichtquellen können wahlweise dazu genutzt werden, die mehreren Positionsmarker zu erzeugen oder einen Teil der Darstellung des virtuellen Hintergrunds wiederzugeben. Insbesondere kann dabei jede der Lichtquellen der Vielzahl von Lichtquellen dazu ausgebildet sein, wahlweise die bzw. einen der mehreren Positionsmarker zu erzeugen oder einen Teil der Darstellung des virtuellen Hintergrunds wiederzugeben.

Die Lichtquellen können dabei grundsätzlich gleichartig ausgebildet sein, um wahlweise einen Teil der Darstellung des virtuellen Hintergrunds oder einen Positionsmarker bzw. einen Teil eines Positionsmarkers erzeugen zu können. Insbesondere können sämtliche der Vielzahl von Lichtquellen zur Emission von sichtbarem Licht ausgebildet sein, so dass sowohl die Darstellung des virtuellen Hintergrunds als auch die Positionsmarker für das menschliche Auge wahrnehmbar sein können. Die Positionsmarker können insofern als virtuelle Positionsmarker erzeugt werden, welche in der Darstellung des virtuellen Hintergrunds erscheinen. Insbesondere können die Positionsmarker dabei als jeweilige Überlagerungen zu der Darstellung des virtuellen Hintergrunds wiedergegeben werden.

Die wahlweise zum Erzeugen der Positionsmarker oder zum Wiedergeben der Darstellung des virtuellen Hintergrunds bzw. eines Teils der Darstellung des virtuellen Hintergrunds ausgebildeten Lichtquellen können dabei beispielsweise vor der Aufnahme unterteilt werden, um beispielsweise eine das Ermitteln der Position der Kamera zuverlässig ermöglichende Anzahl von Positionsmarkern zu erzeugen. Folglich können beispielsweise vor der Aufnahme einige der Lichtquellen zum Erzeugen der Positionsmarker ausgewählt werden. Auch die Position der Positionsmarker an der Hintergrund-Wiedergabeeinrichtung kann dadurch wahlweise und beispielsweise vor einer jeweiligen Aufnahme in dem Bildaufnahmestudio festgelegt werden, wobei diese Position während der Aufnahme insbesondere konstant bleiben kann. Dabei kann beispielsweise sichergestellt werden, dass sich stets eine ausreichende Anzahl von Positionsmarkern in einem Gesichtsfeld der Kamera befindet, um eine Ermittlung der Position der Kamera zu ermöglichen. Beispielsweise kann vor der Aufnahme einer bestimmten Szene bekannt sein, dass lediglich einige Bereiche bzw. Abschnitte der Darstellung des virtuellen Hintergrunds von der zugeordneten Kamera abgebildet werden, so dass eine ausreichende Anzahl an Positionsmarkern in den entsprechenden Abschnitten der Hintergrund-Wiedergabeeinrichtung erzeugt werden kann.

Bei einigen Ausführungsformen kann die Hintergrund-Wiedergabeeinrichtung ferner dazu ausgebildet sein, die mehreren Positionsmarker in variierender Position an der Hintergrund-Wiedergabeeinrichtung zu erzeugen. Alternativ oder zusätzlich kann die Hintergrund-Wiedergabeeinrichtung dabei dazu ausgebildet sein, die mehreren Positionsmarker mit teilweise oder vollständig sichtbaren Wellenlängen zu erzeugen.

Die Hintergrund-Wiedergabeeinrichtung kann dabei insbesondere dazu ausgebildet sein, die mehreren Positionsmarker während der Aufnahme in variierender Position an der Hintergrund-Wiedergabeeinrichtung zu erzeugen. Dies kann es insbesondere ermöglichen, die Positionsmarker der zugeordneten Kamera während der Aufnahme gewissermaßen nachzuführen, so dass die Positionsmarker während der Aufnahme stets an Positionen an der Hintergrund-Wiedergabeeinrichtung erzeugt werden, die sich in einem Gesichtsfeld der Kamera und/oder zumindest einer mit der zugeordneten Kamera verbundenen Hilfskamera befinden. Dadurch kann bei einer lediglich begrenzten Anzahl von Positionsmarkern sichergestellt werden, dass sich stets und insbesondere bei sich während der Aufnahme ändernden Positionen und/oder Ausrichtungen, insbesondere Drehstellungen oder Kippstellungen, der zugeordneten Kamera eine ausreichende Anzahl von Positionsmarkern von der zugeordneten Kamera abgebildet werden kann, um eine Ermittlung der Position der zugeordneten Kamera anhand der abgebildeten Positionsmarker und insbesondere deren Lage innerhalb der von der zugeordneten Kamera erzeugten Abbildung zu ermöglichen. Dabei kann die Hintergrund-Wiedergabeeinrichtung insbesondere dazu ausgebildet sein, die Position eines Positionsmarkers an der Hintergrund-Wiedergabeeinrichtung in Abhängigkeit von einer Änderung der Lage des Positionsmarkers innerhalb der von der zugeordneten Kamera erzeugten Abbildung zu verändern.

Grundsätzlich kann die Hintergrund-Wiedergabeeinrichtung dazu ausgebildet sein, zumindest eine solche Anzahl von abbildbaren Positionsmarkern zu erzeugen, welche ein Bestimmen der Freiheitsgrade zum Ermitteln der Position der zugeordneten Kamera im Raum ermöglicht. Die zu ermittelnde Position der Kamera im Raum kann insbesondere durch ein dreidimensionales Koordinatentupel definiert sein, wobei die zu ermittelnde Position gegebenenfalls zusätzlich ein dreidimensionales Tupel von Drehstellungen der Kamera im Hinblick auf Drehungen um drei Koordinatenachsen, insbesondere kartesische Koordinatenachsen, umfassen kann. Die Ermittlung der Position der Kamera im Raum kann somit insbesondere sechs Freiheitsgrade umfassen, so dass die Hintergrund-Wiedergabeeinrichtung dazu ausgebildet sein kann, zumindest eine Anzahl abbildbarer Positionsmarker zu erzeugen, die das Bestimmen von sechs Freiheitgraden ermöglicht. Dazu kann beispielsweise eine Dichte der an der Hintergrund-Wiedergabeeinrichtung erzeugten Positionsmarker ausreichend groß gewählt sein, um sicherzustellen, dass sich stets zumindest die für eine Ermittlung der Position der zugeordneten Kamera erforderliche Anzahl an Positionsmarkern in einem Gesichtsfeld der Kamera befindet. Ferner kann die Hintergrund-Wiedergabeeinrichtung, wie vorstehend erläutert, dazu ausgebildet sein, zumindest eine zum Bestimmen der Freiheitsgrade erforderliche Anzahl an Positionsmarkern einem Gesichtsfeld der Kamera nachzuführen. Jedoch kann es auch vorgesehen sein, dass die Hintergrund-Wiedergabeeinrichtung dazu ausgebildet ist, stets eine größere Anzahl an Positionsmarkern als die zur Ermittlung der Position der Kamera mindestens erforderliche Anzahl an Positionsmarkern in einem Gesichtsfeld der Kamera zu erzeugen, um die Genauigkeit der Positionsermittlung zu erhöhen.

Bei einigen Ausführungsformen können zudem zumindest einige der vorstehend genannten sechs Freiheitsgrade auf andere Weise als anhand der Positionsmarker ermittelbar sein. Insbesondere kann dazu an der Kamera und/oder einer mit der zugeordneten Kamera verbundenen Hilfskamera eine Messeinrichtung vorgesehen sein, mittels derer Dreh- und/oder Kippstellungen der Kamera ermittelbar sein können. Drehstellungen der Kamera betreffende Freiheitsgrade müssen bei solchen Ausführungsformen dementsprechend nicht anhand der Positionsmarker bestimmt werden, so dass sich die Anzahl der Freiheitsgrade bei der Positionsermittlung und entsprechend die Anzahl mindestens erforderlicher Positionsmarker in einem Gesichtsfeld der Kamera verringern kann. Insbesondere kann die Positionsermittlung bei solchen Ausführungsformen drei Freiheitsgrade umfassen, welche drei zu bestimmenden Koordinaten in einem bezüglich des Bildaufnahmestudios definierten Koordinatensystem entsprechen können. Zudem kann, wie vorstehend bereits erläutert, insbesondere eine Höhe der Kamera gegebenenfalls mittels einer vertikal nach oben ausgerichteten Hilfskamera bestimmbar sein, die beispielsweise einen Tiefensensor umfassen kann, so dass die Anzahl an Freiheitsgraden der Positionsermittlung bei einigen Ausführungsformen weiter reduziert sein kann. Die Anzahl an zum Ermitteln der Position der zugeordneten Kamera mindestens erforderlichen Positionsmarkern kann somit von der konkreten Umsetzung der Positionsermittlung und/oder gegebenenfalls zusätzlich zu den Positionsmarkern bei der Positionsermittlung genutzten Informationen abhängen.

Die Anzahl der Freiheitsgrade, die anhand der Positionsmarker bestimmt werden müssen, um die Positionsermittlung durchführen zu können, kann bei einigen Ausführungsformen auch auf mechanische Weise begrenzt werden, beispielsweise wenn die Kamera in bestimmten Richtungen nicht beweglich (z.B. schwenkbar) ist.

Indem die Hintergrund-Wiedergabeeinrichtung die Positionsmarker mit sichtbaren Wellenlängen erzeugen kann, kann eine Detektion der Positionsmarker insbesondere mittels der zugeordneten Kamera erfolgen, so dass die Positionsmarker in einer von der zugeordneten Kamera ohnehin während der Aufnahme erzeugten Abbildung der Hintergrund-Wiedergabeeinrichtung identifiziert werden können. Etwaige sonstige Kameras sind dabei folglich nicht erforderlich, sondern die Position der zugeordneten Kamera kann aus von der zugeordneten Kamera selbst gewonnenen Daten ermittelt werden.

Bei derartigen Ausführungsformen können die Positionsmarker von der zugeordneten Kamera zwar erfasst werden. Die Positionsmarker müssen hierbei jedoch nicht zwingend Teil der Bildaufnahmedaten werden, die als gewünschte Bildinformation in einem vorbestimmten Format als Aufzeichnung einer Szene gespeichert oder z.B. als Live-Übertragung der Aufnahme ausgestrahlt werden sollen.

Insbesondere kann eine solche Hintergrund-Wiedergabeeinrichtung, welche zum Erzeugen der Positionsmarker in variierender Position ausgebildet ist, in Kombination mit einer zugeordneten Kamera eingesetzt werden, die einen Bildsensor mit einem sogenannten Overscan-Bereich aufweist. Ein solcher Bildsensor kann dabei eine Vielzahl von lichtempfindlichen Sensorelementen aufweisen, wobei lediglich ein innenliegender Teil der Sensorelemente dazu vorgesehen ist, eine Abbildung der Darstellung des virtuellen Hintergrunds bzw. der aufzunehmenden Szene in einem vorgegebenen Format zu erzeugen bzw. entsprechende Bildaufnahmedaten zu generieren. Außerhalb dieses innenliegenden Teils kann ein solcher Sensor jedoch weitere lichtempfindliche Sensorelemente aufweisen, wobei von diesen Sensorelementen erzeugte Bildsignale nicht als Teil der Abbildung in dem vorgesehenen Format weiterverarbeitet werden. Hingegen können die Bildsignale dieser außen bzw. in einem Overscan-Bereich liegenden Sensorelemente dazu genutzt werden, die Positionsmarker abzubilden und, insbesondere anhand deren Lage in der von der Kamera mittels der außenliegenden Sensorelemente erzeugten Abbildung, die Position der Kamera im Raum zu bestimmen. Dabei können die Positionsmarker variabel stets so an der Hintergrund-Wiedergabeeinrichtung positioniert werden, dass die Positionsmarker von Sensorelementen in dem Overscan-Bereich, nicht jedoch von Sensorelementen in dem innenliegenden Bereich des Bildsensors detektiert werden können. Dadurch kann die Position der zugeordneten Kamera mittels in sichtbaren Wellenlängen, insbesondere als Überlagerungen der Darstellung des virtuellen Hintergrunds erzeugten Positionsmarkern ermittelt werden, ohne dass die Aufnahme der Szene bzw. die von der Kamera in dem vorgesehen Format erzeugte Abbildung der Szene durch die in sichtbaren Wellenlängen erzeugten Positionsmarker beeinträchtigt wird. Auch ein nachträgliches Entfernen der Positionsmarker aus einer solchen Abbildung ist daher nicht erforderlich.

Ferner kann die Hintergrund-Wiedergabeeinrichtung bei einigen Ausführungsformen dazu ausgebildet sein, die Positionsmarker als wenigstens ein vorbestimmtes Markierungsmuster zu erzeugen.

Beispielsweise können die Positionsmarker dabei als vorbestimmte geometrische Muster und/oder als Farbmuster erzeugt werden, um eine einfache und exakte Identifikation der abgebildeten Positionsmarker in einer von der Kamera und/oder einer mit der Kamera verbundenen Hilfskamera erzeugten Abbildung der Hintergrund-Wiedergabeeinrichtung zu ermöglichen. Insbesondere kann diese Identifikation durch softwarebasierte Bildanalyseverfahren bzw. Bilderkennungsverfahren erfolgen. Beispielsweise kann es vorgesehen sein, die Positionsmarker als konzentrische Kreise, als Kreuze, als Sterne oder als Vielecke zu erzeugen, z.B. als Dreiecke, Quadrate oder Sechsecke. Das wenigstens eine Markierungsmuster kann dabei insbesondere auch in Abhängigkeit von dem dargestellten bzw. darzustellenden virtuellen Hintergrund wählbar sein, um die Positionsmarker beispielsweise in einer Form und/oder Farbe wiederzugeben, welche sich deutlich von der Umgebung unterscheidet und eine klare Identifikation des Positionsmarkers in einer Abbildung ermöglicht.

Insbesondere kann ein Satz von mehreren vorbestimmten Markierungsmustern gespeichert sein, aus denen eines oder mehrere zur Wiedergabe ausgewählt werden können. Beispielsweise können verschiedene Positionsmarker mit verschiedenen Markierungsmustern wiedergegeben werden, so dass ein jeweiliger abgebildeter Positionsmarker in der von der zugeordneten Kamera und/oder einer mit der zugeordneten Kamera verbundenen Hilfskamera erzeugten Abbildung eindeutig identifiziert bzw. zugeordnet werden kann. Ferner können beispielsweise Positionsmarker in einem bestimmten Abschnitt der Hintergrund-Wiedergabeeinrichtung als ein erstes vorbestimmtes Markierungsmuster aus dem Satz von mehreren vorbestimmten Markierungsmustern erzeugt werden, während Positionsmarker in einem anderen Abschnitt der Hintergrund-Wiedergabeeinrichtung als ein zweites vorbestimmtes Markierungsmuster aus dem Satz von mehreren vorbestimmten Markierungsmustern erzeugt werden. Dadurch kann beispielsweise anhand der jeweiligen abgebildeten Positionsmarker auf ein Gesichtsfeld der zugeordneten Kamera geschlossen werden und/oder gegebenenfalls eine Ausrichtung der zugeordneten Kamera bestimmt werden. Grundsätzlich kann es jedoch auch vorgesehen sein, dass sämtliche Positionsmarker während einer Aufnahme mit demselben vorbestimmten Markierungsmuster erzeugt werden und/oder erzeugbar sind, wobei das vorbestimmte Markierungsmuster aus dem Satz von mehreren vorbestimmten Markierungsmustern wählbar sein kann. Zum Speichern des Satzes von mehreren vorbestimmten Markierungsmustern kann die Hintergrund-Wiedergabeeinrichtung einen Speicher, insbesondere einen nichtflüchtigen Speicher, beispielsweise einen Halbleiterspeicher, aufweisen.

Die Markierungsmuster können ferner einfarbig oder mehrfarbig sein, wobei eine Erzeugung im sichtbaren und/oder in einem nicht-sichtbaren Wellenlängenbereich möglich ist. Sichtbare Markierungsmuster können dabei in den Bilddaten verhältnismäßig leicht erfasst und korrigiert werden, wozu beispielsweise eine Interpolation basierend auf Kantendetektion vorgesehen sein kann. Grundsätzlich können beliebig geformte und/oder gefärbte bzw. in beliebiger Wellenlänge erzeugte Markierungsmuster vorgesehen sein, welche jedoch durch eine Bilderkennung identifizierbar sein müssen.

Die Erfindung betrifft ferner ein Hintergrundwiedergabesystem für ein virtuelles Bildaufnahmestudio, welches eine Hintergrund-Wiedergabeeinrichtung der hierin offenbarten Art sowie eine Steuereinrichtung umfasst, welche dazu ausgebildet ist, die Darstellung des virtuellen Hintergrunds in Abhängigkeit von einer ermittelten Position der zugeordneten Kamera anzupassen. Im Zusammenhang mit diesem Hintergrundwiedergabesystem erläuterte Ausführungsformen der Hintergrund-Wiedergabeeinrichtung können dabei auch bei der gesondert beanspruchten Hintergrund-Wiedergabeeinrichtung vorgesehen sein.

Insbesondere kann die Steuereinrichtung dabei dazu ausgebildet sein, die Darstellung des virtuellen Hintergrunds in Abhängigkeit von der Position der Kamera derart anzupassen, dass die von der zugeordneten Kamera erzeugte Abbildung der Darstellung des virtuellen Hintergrunds einer Abbildung entspricht bzw. angenähert ist, welche bei einer Aufnahme eines dem virtuellen Hintergrund entsprechenden realen Hintergrunds mittels der zugeordneten Kamera zu erwarten wäre. Beispielsweise kann die Steuereinrichtung dazu Objekte bzw. Hintergrundbereiche des virtuellen Hintergrunds in der von der Hintergrund-Wiedergabeeinrichtung erzeugten Darstellung in Abhängigkeit von der Position der zugeordneten Kamera verschieben, um dem Abstand zwischen der Kamera und dem betreffenden Objekt in einem dem virtuellen Hintergrund entsprechenden realen Hintergrund sowie einem sich infolge einer Positionsänderung der Kamera ebenfalls verändernden Gesichtsfeld der Kamera Rechnung zu tragen. Ferner kann die Steuereinrichtung beispielsweise dazu ausgebildet sein, die Helligkeit einzelner Bereiche der Darstellung des virtuellen Hintergrunds in Abhängigkeit von der Position der Kamera anzupassen, um beispielsweise einen Verlauf von Schatten in dem virtuellen Hintergrund in Abhängigkeit von der Position der Kamera anzupassen.

Die Steuereinrichtung kann beispielsweise einen Mikroprozessor, eine CPU (Central Processing Unit) und/oder eine GPU (Graphics Processing Unit) umfassen. Ferner kann die Steuereinrichtung zum Anpassen und/oder Erzeugen der Darstellung des virtuellen Hintergrunds insbesondere eine Game-Engine umfassen bzw. auf eine Game-Engine zurückgreifen. Eine solche Game-Engine wird insbesondere bei Computerspielen häufig als Softwarekomponente dazu genutzt, einen Hintergrund bzw. eine Umgebung in Abhängigkeit von einer Position eines Spielers in einer virtuellen Welt zu erzeugen. Insbesondere kann es dabei vorgesehen sein, dass die Game-Engine auf eine oder mehrere Datenbanken zugreifen kann, um die jeweilige Umgebung zu erzeugen, wobei in den jeweiligen Datenbanken beispielsweise Informationen zu bestimmten Klassen von Objekten gespeichert sein können. Analog dazu kann die Steuereinrichtung eine solche Game-Engine dazu nutzen, in Abhängigkeit von der ermittelten Position der zugeordneten Kamera, anstelle der Position eines Spielers bei einem Computerspiel, die Darstellung des virtuellen Hintergrunds anzupassen und/oder zu erzeugen. Die Steuereinrichtung kann dazu beispielsweise mit einem Speicher, insbesondere einem nichtflüchtigen Speicher, beispielsweise einem Halbleiterspeicher, verbunden sein, in welchem von der Game-Engine auslesbare Datenbanken gespeichert sein können. Die Anpassung der Darstellung des virtuellen Hintergrunds mittels der Game-Engine kann insbesondere in Echtzeit erfolgen.

Die Steuereinrichtung kann bei einigen Ausführungsformen integraler Bestandteil der Hintergrund-Wiedergabeeinrichtung sein. Ferner ist es möglich, dass die Steuereinrichtung als separate Einheit ausgebildet ist, wobei zur Kommunikation zwischen der Steuereinrichtung und der Hintergrund-Wiedergabeeinrichtung beispielsweise eine drahtgebundene und/oder eine drahtlose Verbindung vorgesehen sein kann. Dazu können die Steuereinrichtung und die Hintergrund-Wiedergabeeinrichtung beispielsweise über jeweilige Funkmodule verfügen.

Das Hintergrundwiedergabesystem kann bei einigen Ausführungsformen eine Positionsermittlungseinrichtung aufweisen, welche dazu ausgebildet ist, in Abhängigkeit von Kameradaten, welche Lagen der mehreren Positionsmarker innerhalb einer Abbildung der Hintergrund-Wiedergabeeinrichtung repräsentieren, die räumliche Position der zugeordneten Kamera zu ermitteln. Die Positionsermittlungseinrichtung kann dabei insbesondere in die Steuereinrichtung integriert sein oder eine separate Einheit bilden. Insbesondere kann die Positionsermittlungseinrichtung in die Steuereinrichtung integriert sein und ein von der Steuereinrichtung ausführbares Softwaremodul umfassen, durch dessen Ausführung die Position der zugeordneten Kamera in Abhängigkeit von den Kameradaten ermittelbar ist. Sofern die Positionsermittlungseinrichtung nicht in die Steuereinrichtung der Hintergrundwiedergabesystem integriert, sondern separat hiervon ausgebildet ist, kann die Positionsermittlungseinrichtung bei einigen Ausführungsformen in die zugeordnete Kamera oder in zumindest eine Hilfskamera integriert sein, wie nachfolgend noch erläutert wird.

Die Positionsermittlungseinrichtung kann grundsätzlich, sowohl bei einer Ausbildung als separate Einheit als auch bei einer Integration in die Steuereinrichtung, einen Mikroprozessor, eine CPU und/oder eine GPU umfassen. Die Positionsermittlungseinrichtung kann dabei in Abhängigkeit von den Kameradaten bzw. in Abhängigkeit von den Lagen der mehreren Positionsmarker bzw. der abgebildeten Positionsmarker innerhalb einer Abbildung der Hintergrund-Wiedergabeeinrichtung entsprechende Positionsdaten erzeugen, die von der Steuereinrichtung für die Anpassung der Darstellung des virtuellen Hintergrunds verwendet werden können. Sofern die Positionsermittlungseinrichtung nicht in die Steuereinrichtung integriert ist, können die von der Positionsermittlungseinrichtung erzeugten Positionsdaten an die Steuereinrichtung übermittelt werden.

Um die Kameradaten empfangen und auswerten zu können, kann die Positionsermittlungseinrichtung eine Schnittstelle zum Empfang von Kameradaten von der zugeordneten Kamera und/oder zumindest einer - bei einigen Ausführungsformen vorgesehenen - mit der zugeordneten Kamera verbundenen Hilfskamera aufweisen. Sofern die Positionsermittlungseinrichtung nicht in die zugeordnete Kamera oder die Hilfskamera integriert ist, kann die zugeordnete Kamera oder die Hilfskamera drahtgebunden und/oder drahtlos mit der Schnittstelle der Positionsermittlungseinrichtung verbindbar sein, um die Kameradaten an die Positionsermittlungseinrichtung übermitteln zu können. Eine kabellose Verbindung kann dabei beispielsweise über eine WiFi-/WLAN-Verbindung, eine Bluetooth-Verbindung und/oder eine Mobilfunk-Verbindung herstellbar sein, wozu die Kamera und die Positionsermittlungseinrichtung mit entsprechenden Funkmodulen ausgebildet sein können.

Während einer Aufnahme kann mittels der zugeordneten Kamera und/oder zumindest einer mit der zugeordneten Kamera verbundenen Hilfskamera eine optische Abbildung der Hintergrund-Wiedergabeeinrichtung erzeugt werden, wobei in der von der zugeordneten Kamera erzeugten Abbildung die Darstellung des virtuellen Hintergrunds abgebildet wird. Insbesondere bei einer Wiedergabe der Positionsmarker im sichtbaren Wellenlängenbereich können auch die optisch detektierbaren Positionsmarker von der zugeordneten Kamera abgebildet werden. Bei einem Erzeugen der Positionsmarker in einem nicht-sichtbaren Wellenlängenbereich kann es hingegen beispielsweise vorgesehen sein, die Positionsmarker mittels zumindest einer mit der zugeordneten Kamera verbundenen, im nicht-sichtbaren Wellenlängenbereich sensitiven Hilfskamera abzubilden. In diesem Fall sind die Positionsmarker folglich in der von der zumindest einen Hilfskamera erzeugten Abbildung der Hintergrund-Wiedergabeeinrichtung identifizierbar, während die Positionsmarker von der zugeordneten Kamera beispielsweise nicht abgebildet werden können. Die von der zugeordneten Kamera und/oder der Hilfskamera erzeugte optische Abbildung wird ferner, beispielsweise mittels eines Bildsensors und einer Ausleseelektronik, in Bilddaten umgewandelt, welche die von der jeweiligen Kamera erzeugte Abbildung repräsentieren und einen der Abbildung entsprechenden Bilddatensatz bilden. Innerhalb einer solchen Abbildung haben die von der jeweiligen Kamera detektierbaren Positionsmarker eine bestimmte Lage, welche durch Koordinaten, insbesondere zweidimensionale Koordinaten, in der Abbildung beschrieben werden können. Diese Lagen der Positionsmarker können beispielsweise durch Bildanalyseverfahren ermittelt werden.

Die Positionsermittlungseinrichtung kann dabei dazu ausgebildet sein, aus den relativen und/oder absoluten Lagen der Positionsmarker innerhalb der Abbildung, beispielsweise über ein Triangulationsverfahren, die Position der Kamera im Raum zu bestimmen. Insbesondere kann die Positionsermittlungseinrichtung die Position der Kamera dabei in drei Dimensionen bzw. als Tupel einer x-, einer y- und einer z-Koordinate bestimmen. Ferner kann die Positionsermittlungseinrichtung dazu ausgebildet sein, die Position der Kamera als einen Schnittpunkt von Geraden zu bestimmen, welche durch die jeweiligen Positionsmarker und die Lage des entsprechenden abgebildeten Positionsmarkers in der Abbildung verlaufen, wie nachstehend näher erläutert ist.

Alternativ zu einer Integration der Positionsermittlungseinrichtung in die Steuereinrichtung kann es bei einer Ausbildung der Positionsermittlungseinrichtung als separate Einheit auch vorgesehen sein, dass die Positionsermittlungseinrichtung in die zugeordnete Kamera oder in zumindest eine mit der zugeordneten Kamera verbundene Hilfskamera integriert ist. Insofern kann die jeweilige Kamera selbst dazu ausgebildet sein, anhand der Lagen der Positionsmarker innerhalb einer von der Kamera erzeugten Abbildung die Position der Kamera relativ zu der Hintergrund-Wiedergabeeinrichtung zu bestimmen. Dabei kann die Kamera dazu ausgebildet sein, die von der Positionsermittlungseinrichtung ermittelten Positionsdaten an die Steuereinrichtung der Hintergrund-Wiedergabeeinrichtung zu übermitteln. Die Kameradaten, welche die Lagen der Positionsmarker innerhalb der von der Kamera erzeugten Abbildung repräsentieren, können folglich bei solchen Ausführungsformen in der Kamera selbst verarbeitet werden, wobei die daraus ermittelte Position der Steuereinrichtung der Hintergrund-Wiedergabeeinrichtung zur Verfügung gestellt werden kann. Dies schließt jedoch nicht aus, dass die von der Kamera übermittelten Daten innerhalb der Steuereinrichtung oder einer sonstigen Einheit der Hintergrund-Wiedergabeeinrichtung weiterverarbeitet werden, um die von der Kamera übermittelte Position beispielsweise in ein vorgesehenes Koordinatensystem zu transformieren. Die Integration einer Positionsermittlungseinrichtung in eine Kamera wird nachstehend noch näher erläutert.

Bei einigen Ausführungsformen können zumindest zwei Positionsmarker vorgesehen sein. Insbesondere können jedoch mehr als zwei, insbesondere drei, vier, fünf, sechs, sieben, acht, zehn, zwanzig oder fünfzig Positionsmarker vorgesehen sein. Eine höhere Anzahl von Positionsmarkern kann dabei eine einfachere und/oder genauere Ermittlung der Position der Kamera ermöglichen. Die Anzahl an Positionsmarkern kann dabei jedoch insbesondere bei einer Wiedergabe im sichtbaren Wellenlängenbereich verhältnismäßig gering gewählt sein, um den Aufwand zum nachträglichen Entfernen der Positionsmarker oder etwaige Störungen in der Abbildung der Darstellung des virtuellen Hintergrunds zu minimieren. Hingegen kann durch eine höhere bzw. hinreichende Anzahl von Positionsmarkern erreicht werden, dass sich stets eine ausreichende Anzahl von Positionsmarkern im Gesichtsfeld der zugeordneten Kamera oder zumindest einer mit der zugeordneten Kamera verbundenen Hilfskamera befindet, um eine zuverlässige Ermittlung der Position der zugeordneten Kamera zu ermöglichen.

Bei einigen Ausführungsformen können die Kameradaten Koordinaten der Lagen der mehreren Positionsmarker in einer von der zugeordneten Kamera und/oder von zumindest einer Hilfskamera erzeugten Abbildung der Hintergrund-Wiedergabeeinrichtung umfassen. Alternativ oder zusätzlich können die Kameradaten bei einigen Ausführungsformen Bilddaten bzw. einen Bilddatensatz einer von der zugeordneten Kamera und/oder von zumindest einer mit der zugeordneten Kamera verbundenen Hilfskamera erzeugten Abbildung der Hintergrund-Wiedergabeeinrichtung umfassen, wobei die Positionsermittlungseinrichtung dazu ausgebildet sein kann, die Lagen der mehreren Positionsmarker innerhalb der Abbildung zu bestimmen.

Beispielsweise können die Lagen der mehreren Positionsmarker innerhalb der Abbildung bereits von der zugeordneten Kamera oder zumindest einer Hilfskamera ermittelt und der Positionsermittlungseinrichtung bereitgestellt werden, so dass diese Koordinaten, beispielsweise als ein jeweiliges y-z-Koordinatentupel, von der Positionsermittlungseinrichtung unmittelbar zur Positionsermittlung genutzt werden können. Alternativ dazu können die Bilddaten der Abbildung bzw. ein die Abbildung repräsentierender Datensatz an die Positionsermittlungseinrichtung übermittelt werden, wobei die Positionsermittlungseinrichtung dazu ausgebildet sein kann, die Lagen der Positionsmarker und/oder deren Koordinaten durch ein Bildanalyseverfahren zu bestimmen.

Um die Lagen der Positionsmarker innerhalb der Abbildung bestimmen zu können, kann grundsätzlich - innerhalb der Kamera und/oder von der Positionsermittlungseinrichtung - beispielsweise eine Mustererkennung erfolgen, mittels dessen die Positionsmarker identifiziert und deren jeweilige Lage bestimmt werden kann. Insbesondere bei einem Erzeugen der Positionsmarker in einem nicht-sichtbaren Wellenlängenbereich oder mit einem Emissionsspektrum, welches sich von Emissionsspektren von zum Erzeugen der Darstellung des virtuellen Hintergrunds vorgesehenen Bildelement-Lichtquellen unterscheidet, können die Koordinaten der Lagen der abgebildeten Positionsmarker jedoch beispielsweise auch unmittelbar durch die Koordinaten signalgebender Sensorelemente eines Bildsensors bestimmt werden. Dazu können insbesondere zumindest einige der Sensorelemente ausschließlich in dem Wellenlängenbereich sensitiv sein, in welchem die Positionsmarker erzeugt werden und/oder sich von dem Emissionsspektrum der Bildelement-Lichtquellen unterscheiden, so dass ein Signal eines solchen Sensorelements ausschließlich von einem Positionsmarker generiert werden kann. Auch hierbei kann jedoch zusätzlich eine Mustererkennung erfolgen, um ein zufälliges bzw. fehlerhaftes Identifizieren von Positionsmarkern in der Abbildung zu verhindern.

Alternativ oder zusätzlich zu den Lagen der Positionsmarker innerhalb einer von der zugeordneten Kamera oder zumindest einer Hilfskamera erzeugten Abbildung können die Kameradaten bei einigen Ausführungsformen auch Informationen über Abstände zwischen der zugeordneten Kamera und/oder der zumindest einen Hilfskamera einerseits und jeweiligen Positionsmarkern andererseits umfassen. Beispielsweise kann die Kamera und/oder die Hilfskamera hierzu einen Tiefensensor umfassen oder mit einem solchen gekoppelt sein, welcher beispielsweise nach dem Prinzip der Laufzeitermittlung (Time of Flight) oder der Phasenverschiebung (Phase Shift) arbeiten kann. Die Position der Kamera kann dabei von der Positionsermittlungseinrichtung beispielsweise als ein Schnittpunkt mehrerer Oberflächen von Kugeln ermittelt werden, deren Mittelpunkte den jeweiligen Positionsmarkern und deren Radien den Abständen der Kamera zu den Positionsmarkern entsprechen.

Zudem können die Kameradaten bei einigen Ausführungsformen Informationen über Abstände zwischen der Kamera und/oder zumindest einer Hilfskamera und sonstigen Elementen des virtuellen Bildaufnahmestudios umfassen. Insbesondere können die Kameradaten Informationen über einen vertikalen Abstand zwischen der Kamera und/oder der Hilfskamera und einer Decke bzw. einer oberen Begrenzung und/oder einem Boden bzw. einer unteren Begrenzung des virtuellen Bildaufnahmestudios umfassen, wobei aus diesen Informationen eine Höhe der zugeordneten Kamera in einem bezüglich des virtuellen Bildaufnahmestudios definierten Koordinatensystem ermittelbar sein kann. Auch solche Messungen zum Bestimmen eines vertikalen Abstands der zugeordneten Kamera und/oder der Hilfskamera können durch einen wie vorstehend beschrieben arbeitenden Tiefensensor erfolgen. Beispielsweise kann eine über derartige Messungen ermittelte Höhe als eine Koordinate der Position der zugeordneten Kamera in einem dreidimensionalen Koordinatensystem bestimmt werden, während die weiteren beiden Koordinaten der dreidimensionalen Position der Kamera anhand der Lagen der Positionsmarker in einer Abbildung der zugeordneten Kamera und/oder zumindest einer Hilfskamera ermittelt werden können. Alternativ kann die durch eine Abstandsmessung ermittelte Höhe der Kamera als ein Datenpunkt genutzt werden, wobei die Koordinaten der Position der zugeordneten Kamera unter Verwendung weiterer Datenpunkte, insbesondere der Lagen der abgebildeten Positionsmarker, ermittelt werden.

Ferner kann es vorgesehen sein, dass mit der zugeordneten Kamera zumindest eine Hilfskamera verbunden ist, deren Gesichtsfeld sich von einem Gesichtsfeld der zugeordneten Kamera unterscheidet. Eine solche Hilfskamera kann beispielsweise dazu dienen, sich nicht im Gesichtsfeld der zugeordneten Kamera befindliche Positionsmarker abzubilden, um die Anzahl an für die Positionsermittlung herangezogenen Positionsmarkern vergrößern zu können. Somit können von der zugeordneten Kamera abgebildete Positionsmarker und von diesen Positionsmarkern verschiedene, mittels einer Hilfskamera abgebildete Positionsmarker für die Positionsermittlung herangezogen werden.

Bei einigen Ausführungsformen kann die Positionsermittlungseinrichtung dazu ausgebildet sein, die Position der Kamera aus den Lagen der mehreren Positionsmarker innerhalb der Abbildung zu berechnen und/oder in einer Nachschlagetabelle nachzuschlagen. Dazu kann die Positionsermittlungseinrichtung beispielsweise mit einem Speicher, insbesondere einem Halbleiterspeicher, verbunden sein, in welchem Rechenvorschriften zur Berechnung der Position der Kamera in Abhängigkeit von den Lagen der mehreren Positionsmarker innerhalb der Abbildung und/oder eine oder mehrere Nachschlagetabellen zum Nachschlagen der Position der zugeordneten Kamera in Abhängigkeit von den Lagen der mehreren Positionsmarker innerhalb der Abbildung gespeichert sind. Beispielsweise können in einer Nachschlagetabelle gespeicherte Positionen der zugeordneten Kamera in Abhängigkeit von den Lagen der Positionsmarker innerhalb der Abbildung durch eine der Aufnahme vorausgehende Kalibrierung ermittelt und eingespeichert worden sein. Die Positionsermittlungseinrichtung kann dabei dazu ausgebildet sein, für Kombinationen von Lagen von Positionsmarkern, für welche keine Position der zugeordneten Kamera aus der Nachschlagetabelle entnommen werden kann, eine genäherte Position der zugeordneten Kamera durch Interpolation und/oder Verwenden der jeweiligen nächstliegenden Lagen von Positionsmarkern zugeordneten Position der zugeordneten Kamera zu ermitteln.

Im Hinblick auf ein Berechnen der Position der zugeordneten Kamera kommen insbesondere Triangulationsverfahren oder ein Schneiden von Geraden, die von den Positionsmarker ausgehen, in Betracht. Beispielsweise können derartige geometrische Überlegungen in Form von zu lösenden und/oder zumindest teilweise gelösten Gleichungssystemen als Rechenvorschriften abgespeichert sein. Die Positionsermittlungseinrichtung kann dabei dazu ausgebildet sein, solche Gleichungssysteme in einem oder in mehreren Rechenschritten zu lösen und anhand der gespeicherten Rechenvorschriften die Position der zugeordneten Kamera zu ermitteln. Dies wird nachstehend noch näher erläutert.

Bei einigen Ausführungsformen kann die Positionsermittlungseinrichtung dazu ausgebildet sein, aus den Lagen der mehreren Positionsmarker innerhalb der Abbildung eine jeweilige Richtung zu bestimmen, in welcher die an der Hintergrund-Wiedergabeeinrichtung erzeugten mehreren Positionsmarker relativ zu der zugeordneten Kamera angeordnet sind. Derartige Richtungen können Verbindungslinien im Raum zwischen dem jeweiligen Positionsmarker und der Kamera entsprechen. Diese Richtungen können dabei insbesondere auch innerhalb der zugeordneten Kamera und/oder zumindest einer mit der zugeordneten Kamera verbundenen Hilfskamera bzw. von einer in die jeweilige Kamera integrierten Positionsermittlungseinrichtung bestimmt werden und, beispielsweise als Teil der Kameradaten, an eine Positionsermittlungseinrichtung der Hintergrund-Wiedergabeeinrichtung übermittelt werden. Insofern können grundsätzlich verschiedene Schritte zur Ermittlung der Position der zugeordneten Kamera bei einigen Ausführungsformen von verschiedenen Einheiten ausgeführt werden. Insbesondere können die Lagen der Positionsmarker innerhalb der von der zugeordneten Kamera und/oder zumindest einer Hilfskamera erzeugten Abbildung innerhalb der Kamera bestimmt werden und als Teil der Kameradaten an die Positionsermittlungseinrichtung übermittelt werden, welche direkt mit der Steuereinrichtung des Hintergrundwiedergabesystems verbunden oder in die Steuereinrichtung integriert sein kann. Ferner können auch die genannten Richtungen, in welchen die an der Hintergrund-Wiedergabeeinrichtung erzeugten mehreren Positionsmarker relativ zu der zugeordneten Kamera angeordnet sind, innerhalb der jeweiligen Kamera bestimmt und an eine bezüglich der Kamera externe Positionsermittlungseinrichtung übermittelt werden, wobei die Position der zugeordneten Kamera im Raum anhand der übermittelten Richtungen von der externen Positionsermittlungseinrichtung ermittelt werden kann. Zudem ist es auch möglich, dass die Position der zugeordneten Kamera vollständig von einer in die zugeordnete und/oder die zumindest eine Hilfskamera integrierten Positionsermittlungseinrichtung ermittelt wird.

Eine Richtung, in welcher sich ein jeweiliger Positionsmarker relativ zu der zugeordneten Kamera befindet, kann beispielsweise durch einen Vergleich eines in der Mitte eines Bildsensors der zugeordneten Kamera oder einer Hilfskamera auftreffenden Mittelpunktstrahls und eines von dem jeweiligen Positionsmarker ausgehenden Mittelpunktstrahls, welcher bei den Koordinaten des abgebildeten Positionsmarkers auf den Bildsensor auftrifft, bestimmt werden. Dabei kann ein Mittelpunkt des von der Kamera gebildeten optischen Systems bestimmt bzw. definiert sein, in welchem diese Mittelpunktstrahlen aufeinandertreffen. Beispielsweise kann die zugeordnete Kamera oder eine mit der zugeordneten Kamera verbundene Hilfskamera optische Elemente, beispielsweise eine oder mehrere Linsen, zum Fokussieren von Licht auf den Bildsensor umfassen, wobei jeweilige durch den Mittelpunkt dieses optischen Systems eintretende Mittelpunktstrahlen geradlinig auf den Bildsensor auftreffen. Ferner können die zugeordnete Kamera oder die Hilfskamera beispielsweise eine Lichteintrittsöffnung, insbesondere eine Blendenöffnung bzw. Irisblendenöffnung, aufweisen, durch welche Licht eintritt und geradlinig auf den Bildsensor auftrifft und welche einen Mittelpunkt des optischen Systems der Kamera bilden kann, in welchem sich auf den Bildsensor auftreffende Strahlen bzw. Mittelpunktstrahlen schneiden. Durch die Kenntnis der Lagen der Positionsmarker bzw. deren Koordinaten in einer durch den Bildsensor definierten Ebene und durch die Kenntnis des Abstands des Mittelpunkts des optischen Systems als Schnittpunkt der Mittelpunktstrahlen von dem Bildsensor können folglich dreidimensionale Vektoren bestimmt werden, welche die Richtung angeben, in welchen sich die betreffenden Positionsmarker relativ zu dem Mittelpunkt des optischen Systems befinden. Sofern die genannten Richtungen von einer bezüglich der zugeordneten Kamera bzw. der Hilfskamera externen Positionsermittlungseinrichtung bestimmt werden, können die dazu erforderlichen Informationen bzw. Parameter der jeweiligen Kamera, insbesondere der Abstand zwischen dem Bildsensor und dem Mittelpunkt des optischen Systems, vor der Aufnahme in einen mit der Positionsermittlungseinrichtung verbundenen Speicher eingeschrieben werden. Dadurch kann die Positionsermittlungseinrichtung bzw. das Hintergrundwiedergabesystem flexibel mit verschiedenen zugeordneten Kameras bzw. Kamerasystemen mit einer zugeordneten Kamera und einer Hilfskamera einsetzbar sein. Anhand mehrerer Richtungen, in welchen sich mehrere Positionsmarker relativ zu der zugeordneten Kamera befinden, kann daraufhin auf die Position der Kamera im Raum zurückgeschlossen bzw. diese Position ermittelt werden. Die Position der Kamera kann dabei beispielsweise als die Position des Mittelpunkts des optischen Systems definiert sein.

Bei einigen Ausführungsformen kann die Positionsermittlungseinrichtung dazu ausgebildet sein, Informationen über ein optisches System der Kamera zu berücksichtigen, anhand deren Abbildung die Position der zugeordneten Kamera im Raum bestimmbar ist. Beispielsweise können diese Informationen von der zugeordneten Kamera und/oder zumindest einer mit der zugeordneten Kamera verbundenen Hilfskamera als ein Teil von Kameradaten an die Positionsermittlungseinrichtung übermittelbar sein, wobei die Übermittlung insbesondere in Echtzeit erfolgen kann. Ferner können Informationen über das optische System der jeweiligen Kamera vor und/oder während einer Aufnahme mittels einer Eingabeeinrichtung der Hintergrund-Wiedergabeeinrichtung durch einen Benutzer eingebbar sein. Eine von der zugeordneten Kamera und/oder einer mit der zugeordneten Kamera verbundenen Hilfskamera umfasste Positionsermittlungseinrichtung kann dazu ausgebildet sein, Informationen über das optische System der jeweiligen Kamera in Echtzeit zu empfangen und/oder aus einem Speicher der Kamera auszulesen.

Insbesondere können die Informationen über das optische System der Kamera Informationen über Komponenten des optischen Systems, insbesondere über ein mit der Kamera verbundenes Objektiv, und/oder Einstellungen des optischen Systems oder eines Objektivs umfassen, welche die Lage eines abgebildeten Positionsmarkers und/oder einen Strahlengang durch das optische System beeinflussen können. Beispielsweise können an der Hauptkamera vorgenommene Einstellungen einer Fokuslage, einer Brennweite, eines Zoom-Faktors oder einer Blendenöffnung (Irisblendenöffnung) bei der Ermittlung der Position der zugeordneten Kamera berücksichtigt werden. Solche Einstellungen können insbesondere ein Frustum der Kamera beeinflussen, so dass der von der Kamera abgebildete Ausschnitt des dreidimensionalen virtuellen Bildaufnahmestudios sowohl von der Position der Kamera im Raum als auch dem optischen System der Kamera und dessen Einstellungen abhängen kann. Durch Berücksichtigen solcher Einstellungen des optischen Systems können auch dadurch bedingte, die Abbildung und somit die Lagen der Positionsmarker in der Abbildung beeinflussende Effekte von der Positionsermittlungseinrichtung berücksichtigt werden, um schließlich eine Abhängigkeitsbeziehung zwischen den Lagen der Positionsmarker in der Abbildung und der Position der Kamera erhalten und anhand dieser Abhängigkeitsbeziehung die Position der zugeordneten Kamera im Raum bestimmen zu können. Insbesondere können die Richtungen, in welchen sich die Positionsmarker relativ zu der Kamera befinden, unter Berücksichtigung solcher Informationen über das optische System von der Positionsermittlungseinrichtung ermittelt werden.

Die jeweiligen Richtungen können insbesondere in einem bezüglich des Bildsensors der Kamera festgelegten Koordinatensystem ermittelt werden, dessen Ursprung beispielsweise im Mittelpunkt des Bildsensors liegen kann. Dabei können zwei Koordinatenachsen beispielsweise in einer durch den Bildsensor definierten Ebene verlaufen, während die dritte Koordinatenachse durch den Mittelpunkt des Bildsensors und den Mittelpunkt des optischen Systems verlaufen kann. Gegebenenfalls können in einem solchen Koordinatensystem ermittelte Richtungen in ein bezüglich der Hintergrund-Wiedergabeeinrichtung bzw. des Bildaufnahmestudios definiertes Koordinatensystem transformiert werden, um daraufhin die Position der Kamera in diesem Koordinatensystem bestimmen zu können.

Die Positionsermittlungseinrichtung kann bei einigen Ausführungsformen ferner dazu ausgebildet sein, die Position der zugeordneten Kamera durch Triangulation zu bestimmen. Insbesondere kann hierbei der Abstand zwischen zumindest zwei Positionsmarkern an der Hintergrund-Wiedergabeeinrichtung als Basislänge bekannt sein, so dass die Position der zugeordneten Kamera im Raum anhand zuvor bestimmter Richtungen, in welchen die betreffenden Positionsmarker relativ zu der zugeordneten Kamera angeordnet sind, ermittelt werden kann. Die Präzision der Positionsermittlung kann dabei insbesondere gesteigert werden, indem mehr als zwei Positionsmarker, insbesondere drei, vier, fünf, sechs, sieben, acht oder mehr als acht Positionsmarker, und deren Abstände zueinander genutzt werden, um die Position der Kamera zu bestimmen. Alternativ zu einem Bestimmen von Richtungen, in welchen die Positionsmarker relativ zu der Kamera angeordnet sind, kann die Position der Kamera auch ermittelt werden, indem in den Kameradaten enthaltene und beispielsweise mittels eines Tiefensensors ermittelte Abstände zwischen der Kamera und den Positionsmarkern sowie die bekannten Abstände zwischen den Positionsmarkern in einem Triangulationsverfahren eingesetzt werden.

Bei einigen Ausführungsformen kann die Positionsermittlungseinrichtung dazu ausgebildet sein, aus den Lagen der mehreren Positionsmarker innerhalb der Abbildung jeweilige Richtungen zu bestimmen, in welchen die mehreren Positionsmarker relativ zu der zugeordneten Kamera angeordnet sind, wobei die Positionsermittlungseinrichtung dazu ausgebildet sein kann, die Position der zugeordneten Kamera als Schnittpunkt von Geraden zu bestimmen, welche von den mehreren Positionsmarkern in den jeweiligen Richtungen ausgehen.

Insbesondere kann die Positionsermittlungseinrichtung dabei dazu ausgebildet sein, die Position der Kamera in drei Dimensionen in einem bezüglich des Bildaufnahmestudios und/oder der Hintergrund-Wiedergabeeinrichtung definieren Koordinatensystem zu bestimmen. Beispielsweise kann der Ursprung eines solchen Koordinatensystems in der Mitte einer Wiedergabefläche, beispielsweise der Mitte einer LED-Wand, der Hintergrund-Wiedergabeeinrichtung liegen.

Bezüglich des Bildaufnahmestudios und/oder der Hintergrund-Wiedergabeeinrichtung können die Positionsmarker an vorbestimmten Positionen mit insofern bekannten Koordinaten an der Hintergrund-Wiedergabeeinrichtung angeordnet sein. Hierbei können die Positionen der mehreren Positionsmarker insbesondere als dreidimensionale Koordinaten bekannt bzw. angebbar sein. Durch Bestimmen der Richtungen, in welchen die Positionsmarker relativ zu der zugeordneten Kamera angeordnet sind, können entsprechend von den jeweiligen Positionsmarkern ausgehenden Geraden gebildet werden, welche sich an der Position der Kamera bzw. eines Mittelpunkts des optischen Systems der Kamera schneiden, so dass die Position der Kamera als der Schnittpunkt der Geraden ermittelt werden kann.

Insbesondere aufgrund von Messungenauigkeiten, beispielsweise hinsichtlich der Lagen der Positionsmarker innerhalb der Abbildung, der Koordinaten der Positionsmarker und/oder einer Ausdehnung der Positionsmarker bzw. der abgebildeten Positionsmarker, können durch die bestimmten Richtungen definierte Geraden jedoch gegebenenfalls windschief zueinander verlaufen. Die Positionsermittlungseinrichtung kann daher dazu ausgebildet sein, den Schnittpunkt der Geraden als denjenigen Punkt im Raum zu bestimmen, bei welchem die Geraden den geringsten Abstand zueinander aufweisen. Insbesondere bei einer Positionsermittlung mittels mehr als zwei Positionsmarkern kann die Position der Kamera bzw. ein Punkt geringsten Abstands zwischen den Geraden dabei durch Regressionsverfahren ermittelt werden, wozu die Positionsermittlungseinrichtung beispielsweise zum Ausführen linearer Regressionsverfahren und/oder der Methode der kleinsten Quadrate (Method of Least Squares) ausgebildet sein kann.

Ferner können die Kameradaten bei einigen Ausführungsform eine Ausrichtung der zugeordneten Kamera, insbesondere eine Drehstellung und/oder eine Kippstellung der zugeordneten Kamera, umfassen, wobei die Positionsermittlungseinrichtung dazu ausgebildet sein kann, die Ausrichtung bei dem Ermitteln der Position der zugeordneten Kamera zu berücksichtigen. Ein solches übermitteln von Drehstellungen und/oder Kippstellungen der zugeordneten Kamera kann insbesondere, wie vorstehend bereits erläutert, die Anzahl an Freiheitsgraden der Ermittlung der Position der zugeordneten Kamera verringern, um die Position präzise beispielsweise als ein dreidimensionales Koordinatentupel in einem bezüglich des Bildaufnahmestudios definierten Koordinatensystems anhand der abgebildeten Positionsmarker ermitteln zu können.

Insbesondere kann die Positionsermittlungseinrichtung dazu ausgebildet sein, anhand der Lagen der Positionsmarker innerhalb der Abbildung der Hintergrund-Wiedergabeeinrichtung bestimmte Richtungen, in welchen sich die Positionsmarker relativ zu der Kamera befinden, unter Berücksichtigung etwaiger Drehstellungen oder Kippstellungen der Kamera zu korrigieren. Anhand der Lagen der Positionsmarker innerhalb der Abbildung bestimmte Richtungen können insbesondere in einem bezüglich der zugeordneten Kamera bzw. einer mit der zugeordneten Kamera verbundenen Hilfskamera und/oder eines jeweiligen Bildsensors bestimmt sein, wobei sich dieses Koordinatensystem insbesondere infolge von Drehungen der Kamera von einem bezüglich des Bildaufnahmestudios bzw. der Hintergrund-Wiedergabeeinrichtung festgelegten Koordinatensystem unterscheiden kann. Um die Position der Kamera jedoch in einem solchen bezüglich des Bildaufnahmestudios bzw. der Hintergrund-Wiedergabeeinrichtung festgelegten Koordinatensystem bzw. unabhängig von Drehungen der Kamera in einem stets gleich definierten Koordinatensystem bestimmen zu können, können die als Vektoren bestimmten Richtungen beispielsweise mittels einer Drehmatrix in das vorgesehene Koordinatensystem transformiert werden. Beispielsweise können die bestimmten Richtungen dabei in ein Koordinatensystem überführt werden, in welchem die optische Achse der zugeordneten Kamera bzw. der Hilfskamera senkrecht zu einer Wiedergabefläche der Hintergrund-Wiedergabeeinrichtung ausgerichtet ist, um anhand der Richtungen die Position der Kamera im Raum bzw. in diesem Koordinatensystem zu bestimmen.

Um die Ausrichtung der jeweiligen Kamera und insbesondere Drehungen um die kartesischen Koordinatenachsen bestimmen und als Teil der Kameradaten an die Positionsermittlungseinrichtung übermitteln zu können, kann die zugeordnete Kamera oder zumindest eine mit der zugeordneten Kamera verbundene Hilfskamera insbesondere eine Messeinrichtung aufweisen. Eine solche Messeinrichtung kann dabei beispielsweise einen Inkrementaldrehgeber umfassen oder mit einem solchen verbunden sein, um Drehungen der Kamera feststellen zu können. Alternativ oder zusätzlich kann die Messeinrichtung mit statischen Beschleunigungssensoren verbunden sein und/oder solche aufweisen, wobei die Messeinrichtung und/oder die Positionsermittlungseinrichtung dazu ausgebildet sein kann, anhand der Signale der statischen Beschleunigungssensoren eine Ausrichtung der Kamera zu bestimmen.

Wie bereits erläutert, kann die Positionsermittlungseinrichtung insbesondere dazu ausgebildet sein, aus den vorstehenden geometrischen Überlegungen folgende Gleichungssysteme und/oder Gleichungen zu lösen, um die Position der zugeordneten Kamera zu bestimmen.

Bei einigen Ausführungsformen kann die Steuereinrichtung dazu ausgebildet sein, in Abhängigkeit von den Kameradaten Positionen der mehreren Positionsmarker an der Hintergrund-Wiedergabeeinrichtung zu ändern. Insbesondere kann die Steuereinrichtung dabei dazu ausgebildet sein, die Positionen der mehreren Positionsmarker an der Hintergrund-Wiedergabeeinrichtung während der Aufnahme in Abhängigkeit von den Kameradaten zu ändern.

Durch das Verändern der Positionen der Positionsmarker mittels der Steuereinrichtung können die Positionsmarker während einer Aufnahme insbesondere sich entlang der Hintergrund-Wiedergabeeinrichtung bewegend dargestellt werden. Indem solche Bewegungen in Abhängigkeit von den Kameradaten erfolgen können, welche Lagen der mehreren Positionsmarker innerhalb der Abbildung repräsentieren, kann die Veränderung der Positionen der mehreren Positionsmarker insbesondere derart erfolgen, dass sich die mehreren Positionsmarker stets innerhalb eines Gesichtsfeld der jeweiligen Kamera befinden, anhand deren Abbildung die Position der zugeordneten Kamera im Raum ermittelt wird. Dabei kann die Steuereinrichtung insbesondere dazu ausgebildet sein, Lagen von Positionsmarkern innerhalb der Abbildung in zeitlich aufeinanderfolgenden Abbildungen zu vergleichen und in Abhängigkeit von einer Änderung der Lagen die Positionsmarker oder zumindest einen Positionsmarker an der Hintergrund-Wiedergabeeinrichtung gewissermaßen zu verschieben, so dass die oder der Positionsmarker dem Gesichtsfeld nachgeführt wird. Wird beispielsweise erfasst, dass ein jeweiliger Positionsmarker innerhalb der Abbildung in einer nachfolgenden Abbildung bezüglich des Gesichtsfelds weiter außen als in einer vorhergehenden Abbildung abgebildet wird, kann die Position des Positionsmarkers an der Hintergrund-Wiedergabeeinrichtung derart verändert werden, dass diese Änderung der Lage in einer darauffolgenden Abbildung ausgeglichen wird. Der Positionsmarker kann also entsprechend der Bewegung der Kamera versetzt werden. Insbesondere kann sich die Lage der Positionsmarker innerhalb der Abbildung aufgrund einer Änderung der Position und/oder der Ausrichtung der abbildenden Kamera und/oder einer das Gesichtsfeld der abbildenden Kamera beeinflussenden Änderung einer Objektiveinstellung ändern, beispielsweise eines geänderten Zoom-Faktors. Dabei kann die Steuereinrichtung dazu ausgebildet sein, die Positionen der Positionsmarker in Echtzeit in Abhängigkeit von den Kameradaten zu ändern, um in Echtzeit auf solche Änderungen des Gesichtsfelds der zugeordneten Kamera reagieren zu können.

Insbesondere kann ein Hintergrundwiedergabesystem mit einer Steuereinrichtung, welche zum Verändern der Positionen der mehreren Positionsmarker an der Hintergrund-Wiedergabeeinrichtung in Abhängigkeit von den Kameradaten ausgebildet ist, in Kombination mit einer zugeordneten Kamera eingesetzt werden, welche einen Bildsensor mit einem Overscan-Bereich aufweist. Wie bereits erläutert, kann ein solcher Bildsensor dazu ausgebildet sein, eine Abbildung sichtbaren Lichts in einem vorbestimmten Format bzw. einen entsprechenden Bilddatensatz zu erzeugen, weist jedoch eine Mehrzahl zusätzlicher lichtempfindlicher Sensorelemente auf, welche in einem Overscan-Bereich angeordnet sind und nicht zu der Abbildung in dem vorbestimmten Format beitragen. Dieser Overscan-Bereich kann dabei insbesondere benachbart zu einem zentralen Abschnitt des Bildsensors liegen, wobei die Abbildung der aufzunehmenden Szene sowie der Darstellung des virtuellen Hintergrunds in dem vorbestimmten Format mittels in diesem zentralen Abschnitt angeordneter Sensorelemente erzeugt wird.

Grundsätzlich kann es ein solcher Overscan-Bereich ermöglichen, mittels der zugeordneten Kamera flexibel Abbildungen in einem jeweiligen vorgesehenen Format zu erzeugen und/oder außen liegende Bereiche der Szene in einem elektronischen Kamerasucher zu beobachten, wobei die Signale der zusätzlichen Sensorelemente insbesondere nicht ausgelesen werden können, um die zu verarbeitende Datenmenge zu reduzieren und lediglich die für das jeweilige Format erforderlichen Daten aufzuzeichnen. Jedoch können die von den zusätzlichen Sensorelemente erzeugten Bilddaten dazu genutzt werden, einen in dem Ovescan-Bereich abgebildeten Positionsmarker zu identifizieren und die Position der zugeordneten Kamera im Raum anhand der von den in dem Overscan-Bereich angeordneten Sensorelementen erzeugten Bilddaten zu bestimmen. Indem die Steuereinrichtung des Hintergrundwiedergabesystems dabei dazu ausgebildet sein kann, die Positionen der Positionsmarker an der Hintergrund-Wiedergabeeinrichtung zu verändern, kann insbesondere erreicht werden, dass die Positionsmarker während der Aufnahme stets, beispielsweise auch nach oder während einer Veränderung der Position der Kamera, von in dem Overscan-Bereich, nicht jedoch in dem zentralen Bereich zum Erzeugen der Abbildung in dem vorgesehen Format angeordneten Sensorelementen detektiert werden können. Dadurch kann eine Ermittlung der Position der zugeordneten Kamera anhand von Daten erfolgen, die von der zugeordneten Kamera erzeugt werden, ohne dass die Abbildungen in dem vorgesehenen Format durch die erzeugten Positionsmarker beeinträchtigt werden oder die Positionsmarker nachträglich aus den Abbildungen bzw. den entsprechenden Bilddaten entfernt werden müssten.

Insbesondere können die mit veränderlicher Position erzeugbaren Positionsmarker somit auch in sichtbaren Wellenlängen erzeugt und wiedergegeben werden, ohne dass die Aufnahme der Szene bzw. die von der zugeordneten Kamera erzeugten Abbildungen in dem vorgesehenen Format beeinträchtigt werden. Dabei kann die Hintergrund-Wiedergabeeinrichtung insbesondere eine Vielzahl von Lichtquellen aufweisen, wobei die Lichtquellen dazu ausgebildet sind, wahlweise die Darstellung des virtuellen Hintergrunds wiederzugeben oder die mehreren Positionsmarker zu erzeugen. Die Vielzahl von Lichtquellen kann ferner in einem regelmäßigen Raster angeordnet sein. Eine solche Ausbildung der Hintergrund-Wiedergabeeinrichtung kann es dabei ermöglichen, die Positionsmarker im sichtbaren Wellenlängenbereich als Überlagerung der Darstellung des virtuellen Hintergrunds darzustellen und dem Gesichtsfeld der zugeordneten Kamera, insbesondere einem Overscan-Bereich eines Bildsensors der zugeordneten Kamera, nachzuführen, um eine Ermittlung der Position der Kamera erreichen zu können. Sofern eine jeweilige Lichtquelle aufgrund einer veränderten Position eines Positionsmarkers an der Hintergrund-Wiedergabeeinrichtung nicht mehr zum Erzeugen des Positionsmarkers benötigt bzw. verwendet wird, kann diese Lichtquelle unmittelbar an der Darstellung des virtuellen Hintergrunds beteiligt werden. Die Positionsmarker können dabei insbesondere als wenigstens ein vorbestimmtes Markierungsmuster dargestellt werden, um eine einfache Identifikation in der von der zugeordneten Kamera, insbesondere in einem Overscan-Bereich, erzeugten Abbildung zu ermöglichen.

Letztlich kann auf diese Weise eine Ermittlung der Position der zugeordneten Kamera mit minimalem konstruktiven Aufwand sowie ohne die Notwendigkeit eines nachträglichen Entfernens der Positionsmarker aus den von der zugeordneten Kamera erzeugten Abbildungen erfolgen, da die Positionsmarker lediglich sich während einer Aufnahme bewegend an der Hintergrund-Wiedergabeeinrichtung dargestellt werden müssen. Aufgrund der Möglichkeit, die Positionsmarker im sichtbaren Wellenlängenbereich darzustellen, kann eine im Grunde herkömmliche Hintergrund-Wiedergabeeinrichtung dazu angesteuert werden, zusätzlich zu der Darstellung des virtuellen Hintergrunds die Positionsmarker mit veränderlichen Positionen als Überlagerung der Darstellung des virtuellen Hintergrunds wiederzugeben. Ferner ist eine Kommunikation zwischen der Steuereinrichtung und der zugeordneten Kamera erforderlich, um die Positionen der Positionsmarker in Abhängigkeit von den Kameradaten ändern zu können. Dies kann beispielsweise mittels einer drahtgebundenen und/oder drahtlosen Verbindung zwischen der zugeordneten Kamera und der Steuereinrichtung erreicht werden.

Die Steuereinrichtung kann bei einigen Ausführungsformen ferner dazu ausgebildet sein, die geänderten Positionen der mehreren Positionsmarker an die Positionsermittlungseinrichtung zu übermitteln. Dies kann es der Positionsermittlungseinrichtung ermöglichen, die geänderten Positionen der mehreren Positionsmarker bei der nächsten Ermittlung der Position der zugeordneten Kamera heranzuziehen, so dass die Positionsermittlungseinrichtung stets die aktuellen Positionen der mehreren Positionsmarker bei der Ermittlung der Position der zugeordneten Kamera berücksichtigen kann. Insbesondere kann die Positionsermittlungseinrichtung beispielsweise dazu ausgebildet sein, die Position der zugeordneten Kamera durch Schneiden jeweiliger Gerade zu ermitteln, welche von den geänderten bzw. aktuellen Positionen der Positionsmarker entlang zuvor anhand der Lagen der Positionsmarker in der von der zugeordneten Kamera erzeugten Abbildung ermittelten Richtungen ausgehen. Dazu kann die Positionsermittlungseinrichtung insbesondere dazu ausgebildet sein, aus derartigen geometrischen Überlegungen folgende Gleichungssysteme lösen. Ferner kann die Positionsermittlungseinrichtung die Position der zugeordneten Kamera beispielsweise durch Triangulationsverfahren und/oder durch von der Kamera als Teil der Kameradaten übermittelte Abstände zwischen der Kamera und den Positionsmarkern unter Berücksichtigung der geänderten Position der Positionsmarker ermitteln.

Bei einigen Ausführungsformen kann die Steuereinrichtung mit einem Speicher verbunden sein, in welchem zumindest ein Modell zum Erzeugen der Darstellung des virtuellen Hintergrunds gespeichert sein kann. Insbesondere kann in dem Speicher dabei ein dreidimensionales Modell des virtuellen Hintergrunds gespeichert sein. Bei dem Speicher kann es sich um einen nichtflüchtigen Speicher und insbesondere um einen Halbleiterspeicher handeln, in welchem das zumindest eine Modell dauerhaft gespeichert sein kann, wobei jedoch ein Überschreiben des Modells möglich sein kann. Ferner kann der Speicher in die Steuereinrichtung integriert oder als separate, mit der Steuereinrichtung verbundene und/oder kommunizierende Einheit ausgebildet sein.

Beispielsweise kann ein solches Modell für einen jeweiligen Hintergrundbereich eine Positionsinformation und eine Bildinformation umfassen, wobei die Steuereinrichtung dazu ausgebildet sein kann, die Darstellung des virtuellen Hintergrunds anhand der Bildinformationen zu erzeugen und unter Berücksichtigung der Positionsinformationen sowie in Abhängigkeit von der Position der zugeordneten Kamera anzupassen. Die Positionsinformationen können dabei insbesondere Abstände von Objekten des virtuellen Hintergrunds bzw. von jeweiligen Hintergrundbereichen zu der Hintergrund-Wiedergabeeinrichtung umfassen, um diese Abstände beim Anpassen der Darstellung des virtuellen Hintergrunds in Abhängigkeit von der Position der zugeordneten Kamera berücksichtigen zu können. Ferner können die Positionsinformationen dreidimensionale Koordinaten der Hintergrundbereiche in einem bezüglich des Bildaufnahmestudios und/oder der Hintergrund-Wiedergabeeinrichtung definierten Koordinatensystem umfassen. Zudem kann das gespeicherte Modell beispielsweise Informationen bezüglich der Helligkeit jeweiliger Hintergrundbereiche umfassen.

Insbesondere kann die Steuereinrichtung eine Game-Engine umfassen bzw. auf eine Game-Engine zurückgreifen, um die Darstellung des virtuellen Hintergrunds anzupassen. Dabei kann die Game-Engine insbesondere unter Berücksichtigung der ermittelten Position der zugeordneten Kamera auf eine oder mehrere Datenbanken zurückgreifen, welche die Positionsinformationen enthalten und welche in dem Speicher gespeichert sein können. Die Position der Kamera kann somit den zentralen Parameter zur Steuerung der Hintergrund-Wiedergabeeinrichtung darstellen, auf dessen Basis die Darstellung des virtuellen Hintergrunds mittels der Steuereinrichtung angepasst wird.

Die Steuereinrichtung kann bei einigen Ausführungsformen dazu ausgebildet sein, eine Anpassung der Darstellung in Abhängigkeit von der Position der zugeordneten Kamera zu berechnen. Alternativ oder zusätzlich kann die Steuereinrichtung bei einigen Ausführungsformen mit einem Speicher verbunden sein, in welchem verschiedene Modelle zum Erzeugen der Darstellung des virtuellen Hintergrunds in Abhängigkeit von der Position der zugeordneten Kamera gespeichert sind. Dabei können beispielsweise verschiedenen Positionen der zugeordneten Kamera jeweilige Modelle zugeordnet sein, wobei die Steuereinrichtung beispielsweise in Abhängigkeit von der Position der zugeordneten Kamera das jeweilige Modell aus einer Nachschlagetabelle auslesen kann.

Insbesondere kann die Steuereinrichtung dazu ausgebildet sein, Positionen von Objekten bzw. Hintergrundbereichen in einem dem virtuellen Hintergrund entsprechenden realen Hintergrund beim Anpassen der Darstellung zu berücksichtigen. Dadurch kann die Steuereinrichtung die Darstellung des virtuellen Hintergrunds insbesondere derart anpassen, dass die von der zugeordneten Kamera erzeugte bzw. erzeugbare Abbildung der Darstellung des virtuellen Hintergrunds einer Abbildung entspricht bzw. angenähert wird, die bei Abbilden eines dem virtuellen Hintergrund entsprechenden realen, insbesondere dreidimensionalen, Hintergrunds zu erwarten wäre.

Die Steuereinrichtung kann bei einigen Ausführungsformen dazu ausgebildet sein, eine Ausrichtung der Kamera bei dem Anpassen der Darstellung des virtuellen Hintergrunds zu berücksichtigen. Insbesondere kann die Steuereinrichtung dabei dazu ausgebildet sein, die bereits genannte, als Teil der Kameradaten übermittelte Ausrichtung der Kamera zu berücksichtigen. Beispielsweise kann die Steuereinrichtung anhand der Ausrichtung der Kamera sowie der von der Positionsermittlungseinrichtung ermittelten Position ein Gesichtsfeld der Kamera bestimmen und die Darstellung derart anpassen, dass sich bei einem dem virtuellen Hintergrund entsprechenden realen Hintergrund im Gesichtsfeld der Kamera befindliche Objekte an einer jeweiligen Stelle dargestellt werden, die ein Abbilden in der bei einer Abbildung des realen Hintergrunds erwarteten Lage ermöglicht.

Im Zuge des Anpassens der Darstellung kann die Steuereinrichtung insbesondere dazu ausgebildet sein, Objekte bzw. Hintergrundbereiche des virtuellen Hintergrunds in Abhängigkeit von der Position der Kamera in der Darstellung des virtuellen Hintergrunds zu verschieben und/oder zu drehen. Insbesondere sich in Abhängigkeit von dem Abstand der Kamera zu einem Objekt und der Ausrichtung der Kamera ändernde Positionen von Objekten innerhalb der von der zugeordneten Kamera erzeugten Abbildung können dadurch korrigiert werden.

Ferner kann die Steuereinrichtung dazu ausgebildet sein, in Abhängigkeit von der Position der Kamera eine Größe von Objekten des virtuellen Hintergrunds und/oder eine Form von Objekten des virtuellen Hintergrunds in der Darstellung des virtuellen Hintergrunds anzupassen. Die Steuereinrichtung kann auch dazu ausgebildet sein, eine Helligkeit von Objekten und/oder von Hintergrundbereichen des virtuellen Hintergrunds in Abhängigkeit von der Position der Kamera in der Darstellung des virtuellen Hintergrunds anzupassen. Insbesondere die Anpassung der Helligkeit kann dabei zudem unter Berücksichtigung der Ausrichtung der Kamera erfolgen, um beispielsweise sich aufgrund einer Drehung der Kamera ändernde Schatten korrekt darstellen bzw. abbilden zu können.

Zudem ist ein Kamerasystem, insbesondere zur Verwendung mit einem Hintergrundwiedergabesystem der hierin offenbarten Art, mit einer Hauptkamera und mit einer Hilfskamera offenbart, wobei die Hauptkamera einen Bildsensor mit einer Vielzahl von Hauptsensorelementen aufweist, die für mehrere verschiedene sichtbare Farben lichtempfindlich sind, und wobei die Hilfskamera lösbar, jedoch in einer definierten Position an der Hauptkamera befestigbar ist, wobei die Hilfskamera einen Bildsensor mit einer Vielzahl von Hilfssensorelementen aufweist, die für nicht-sichtbare Wellenlängen lichtempfindlich sind. Jede der Hauptkamera und der Hilfskamera kann dabei insbesondere eine jeweilige Ausleseschaltung aufweisen, die dazu ausgebildet ist, anhand von Bildelementsignalen der Sensorelemente Bilddatensätze zu erzeugen, die einer jeweiligen Abbildung eines Gesichtsfelds der Hauptkamera bzw. der Hilfskamera entsprechen bzw. die eine solche Abbildung repräsentieren.

Indem an dem Bildsensor der Hilfskamera bzw. mittels der Hilfssensorelemente nicht-sichtbare Wellenlängen detektierbar sind, können insbesondere die vorstehend beschriebenen, von einer Hintergrund-Wiedergabeeinrichtung wiedergegebene Positionsmarker in einem nicht-sichtbaren Wellenlängenbereich erzeugt und von der Hilfskamera detektiert werden, während die Hauptkamera dazu vorgesehen sein kann, die Darstellung des virtuellen Hintergrunds bzw. die aufzunehmende Szene im sichtbaren Wellenlängenbereich abzubilden. Die Hauptkamera kann insofern der vorstehend erläuterten zugeordneten Kamera entsprechen. Die Hilfskamera kann es hingegen ermöglichen, in einem nicht-sichtbaren Wellenlängenbereich, beispielsweise einem infraroten und/oder einem ultravioletten Wellenlängenbereich, erzeugte Positionsmarker abzubilden und anhand deren Lagen in der von der Hilfskamera erzeugten Abbildung die Position der Hauptkamera zu bestimmen. Durch die von der Hilfskamera erzeugte Abbildung bzw. anhand des von dem Bildsensor der Hilfskamera erzeugten Bilddatensatz kann beispielsweise zunächst, insbesondere wie vorstehend im Zusammenhang mit der Positionsermittlungseinrichtung erläutert, die Position der Hilfskamera im Raum bestimmt werden. Indem die Hilfskamera dabei in einer definierten Position an der Hauptkamera befestigt ist, kann aus der anhand der Positionsmarker ermittelten Position der Hilfskamera unmittelbar auf die Position der Hauptkamera geschlossen werden, so dass die Position der Hauptkamera bei der Steuerung einer Hintergrund-Wiedergabeeinrichtung wie vorstehend beschrieben berücksichtigt werden kann. Alternativ zu einem Ermitteln der Position der Hilfskamera kann, ebenfalls aufgrund der definierten Position der Hilfskamera relativ zu der Hauptkamera, die Position der Hauptkamera anhand der von der Hilfskamera erzeugten Abbildung mittels einer Parallaxenkorrektur ermittelt werden. Dazu können die Lagen der Positionsmarker in der von der Hilfskamera erzeugen Abbildung beispielsweise zunächst in jeweilige Lagen überführt werden, welche bei einer Abbildung an der Position der Hauptkamera zu erwarten wären, so dass daraufhin anhand dieser parallaxenkorrigierten Lagen die Position der Hauptkamera bestimmt werden kann.

Insofern löst dieses Kamerasystem die Aufgabe, einfachere, schnellere und kostengünstigere Möglichkeiten zum Ermitteln einer Position einer zugeordneten Kamera für Aufnahmen in einem virtuellen Bildaufnahmestudio zu schaffen, indem die zugeordnete Kamera in Form der Hilfskamera gewissermaßen mit einem Zusatz versehen wird, welcher das Detektieren nicht-sichtbaren Lichts ermöglicht. Dadurch kann die Position der Hauptkamera auf einfache Weise aus der von der Hilfskamera erzeugten Abbildung bestimmt werden, ohne dass dazu Anpassungen an der Hauptkamera, deren optischen Elementen und/oder deren Bildsensor erforderlich sind. Indem die Hilfskamera dabei in einer definierten Position relativ zu der Hauptkamera angebracht ist, wird dabei weiterhin das grundlegende Konzept verfolgt, die Position der Hauptkamera anhand von Daten zu ermitteln, die an der Position der Hauptkamera bzw. der zugeordneten Kamera gewonnen werden. Während es grundsätzlich, wie vorstehend erläutert, auch möglich ist, die Position der zugeordneten Kamera anhand einer von der zugeordneten Kamera erzeugten Abbildung sichtbarer Wellenlängen zu ermitteln, bietet die von der Hilfskamera erzeugte Abbildung von in nicht-sichtbaren Wellenlängen wiedergegebenen Positionsmarkern die Möglichkeit, mittels der Hauptkamera eine Aufnahme einer Szene und der Darstellung des virtuellen Hintergrunds zu erstellen, welche durch das Erzeugen der Positionsmarker in keiner Weise beeinträchtigt ist. Insbesondere sind keine zusätzlichen Schritte hinsichtlich einer nachträglichen Bildbearbeitung zum Entfernen der Positionsmarker aus der von der Hauptkamera erzeugten Abbildung erforderlich. Das Kamerasystem bietet somit eine Alternative der Positionsermittlung, durch welche insbesondere auf zeitaufwendige Nachbearbeitungsschritte und/oder eventuell vorzunehmende Anpassungen der Hauptkamera verzichtet werden kann.

Um die Hilfskamera in einer definierten Position mit der Hauptkamera zu verbinden, kann die Hilfskamera beispielsweise durch eine Drehverbindung, eine Steckverbindung und/oder eine Dreh-Steckverbindung an der Hauptkamera, insbesondere einer Oberseite der Hauptkamera, befestigt sein. Das Erreichen der definierten Position kann dabei beispielsweise haptisch und/oder akustisch, beispielsweise durch ein Klick-Geräusch und/oder ein Einrasten, wahrnehmbar sein, um eine korrekte Positionierung der Hilfskamera relativ zu der Hauptkamera sicherzustellen. Das Befestigen der Hilfskamera an der Hauptkamera in einer definierten Position kann beispielsweise das Herstellen eines Formschlusses umfassen (z.B. Einstecken einer Halterung der Hilfskamera in eine zugeordnete Aufnahme der Hauptkamera), wobei ein nachfolgendes Fixieren des Formschlusses erfolgen kann (z.B. mittels einer Schraube oder eines Klemmhebels).

Bei einigen Ausführungsformen kann es vorgesehen sein, dass lediglich der Bildsensor der Hilfskamera, nicht jedoch der Bildsensor der Hauptkamera für nicht-sichtbare Wellenlängen lichtempfindlich ist. Insbesondere kann dadurch erreicht werden, dass die Positionsmarker lediglich von der Hilfskamera detektierbar sind, während die von der Hauptkamera erstellte Aufnahme durch das Wiedergeben der Positionsmarker an der Hintergrund-Wiedergabeeinrichtung vollkommen unbeeinträchtigt und deren Bildsensor für die Detektion sichtbaren Lichts optimiert sein kann.

Die Hauptkamera und die Hilfskamera können ferner bei einigen Ausführungsformen im montierten Zustand zumindest teilweise übereinstimmende Gesichtsfelder aufweisen. Die Ausrichtung der Hilfskamera kann somit im montierten Zustand mit der Ausrichtung der Hauptkamera zumindest teilweise übereinstimmen, wobei insbesondere jeweilige optische Achsen der Hauptkamera und der Hilfskamera in einem vorbestimmten Winkel zueinander, parallel zueinander oder übereinstimmend verlaufen können. Ferner kann der Bildsensor der Hilfskamera insbesondere zumindest einige Hilfssensorelemente aufweisen, die zumindest auch oder ausschließlich im sichtbaren Wellenlängenbereich lichtempfindlich sind. Dadurch können durch einen Vergleich der von der Hilfskamera und der von der Hauptkamera erzeugten Abbildungen der Hintergrund-Wiedergabeeinrichtung beispielsweise etwaige Unterschiede hinsichtlich der Ausrichtung der Hilfskamera und der Ausrichtung der Hauptkamera bzw. der jeweiligen Gesichtsfelder bestimmt und bei der Ermittlung der Position der Hauptkamera berücksichtigt werden können.

Es ist jedoch grundsätzlich auch möglich, dass die Hilfskamera eine von der Hauptkamera verschiedene Ausrichtung aufweist und sich die Gesichtsfelder der Hauptkamera und der Hilfskamera deutlich unterscheiden und/oder vollkommen verschieden sind. Beispielsweise kann die Ermittlung der Position dabei anhand von Positionsmarkern erfolgen, die sich im Gesichtsfeld der Hilfskamera, jedoch nicht im Gesichtsfeld der Hauptkamera befinden. Durch die definierte Position der Hilfskamera relativ zu der Hauptkamera und/oder eine definierte Ausrichtung der Hilfskamera relativ zu der Hauptkamera kann in der Folge auf die Position der Hauptkamera und/oder deren Gesichtsfeld rückgeschlossen werden. Dabei kann beispielsweise zunächst die Position der Hilfskamera bestimmt und daraus die Position der Hauptkamera gefolgert werden und/oder die Position der Hauptkamera kann mittels einer Parallaxenkorrektur anhand der von der Hilfskamera erzeugten Abbildung ermittelt werden.

Bei einigen Ausführungsformen kann der Bildsensor der Hilfskamera eine geringere räumliche Auflösung als der Bildsensor der Hauptkamera, also eine geringere Anzahl von Sensorelementen pro Längeneinheit bzw. pro Flächeneinheit, aufweisen. Ferner kann die Anzahl der Hilfssensorelemente bei einigen Ausführungsformen geringer als die Anzahl der Hauptsensorelemente sein. Die Hilfskamera kann somit zumindest vornehmlich, insbesondere ausschließlich, zum Ermitteln der Position der Hauptkamera dienen, ohne für die eigentliche Aufnahme einer Szene genutzt zu werden. Dadurch kann die Hilfskamera insbesondere als verhältnismäßig kostengünstiges Zusatzmodul an der Hauptkamera angebracht werden, um eine einfache, die Aufnahme nicht beeinträchtigende Positionsermittlung zu ermöglichen.

Ferner kann das Kamerasystem bei einigen Ausführungsformen die vorstehend erläuterte Positionsermittlungseinrichtung umfassen, welche insbesondere in die Hauptkamera und/oder die Hilfskamera integriert oder als separate Einheit mit der Hauptkamera und/oder der Hilfskamera verbindbar sein kann. Es kann somit bei einigen Ausführungsformen vorgesehen sein, dass das Kamerasystem dazu ausgebildet ist, die Position der Hauptkamera relativ zu einer Hintergrund-Wiedergabeeinrichtung anhand einer von der Hilfskamera erstellten Abbildung zu ermitteln. Das Kamerasystem kann dabei ferner dazu ausgebildet sein, die ermittelte Position an eine Steuereinrichtung einer Hintergrund-Wiedergabeeinrichtung zu übermitteln.

Bei einer solchen, in das Kamerasystem integrierten Positionsermittlungseinrichtung kann die Positionsermittlungseinrichtung insbesondere dazu ausgebildet sein, die Koordinaten von Positionsmarkern in einem bezüglich des Kamerasystems festen Koordinatensystem zu berechnen, wobei der Ursprung eines solchen Koordinatensystems insbesondere an der Position der Kamera liegen kann. Dies kann insbesondere wie vorstehend erläutert anhand eines Ermittelns von Richtungen, in welchen die Positionsmarker relativ zu der Hauptkamera angeordnet sind, und Bestimmen sich an der Position der Kamera bzw. im Ursprung schneidender Geraden, beispielsweise durch Lösen eines entsprechenden Gleichungssystems, erfolgen. Die dadurch ermittelten Positionen der Positionsmarker in einem bezüglich des Kamerasystems definierten Koordinatensystem können sodann in ein bezüglich des Bildaufnahmestudios und/oder der Hintergrund-Wiedergabeeinrichtung festgelegtes Koordinatensystem überführt werden bzw. mit den Positionen der Positionsmarker in diesem Koordinatensystem verglichen werden, wobei anhand der für die Positionen der Positionsmarker erfolgten Transformation die Position der Hauptkamera in dem bezüglich des Bildaufnahmestudios und/oder der Hintergrund-Wiedergabeeinrichtung definierten Koordinatensystem ermittelt werden kann. Diese Transformation kann dabei durch die Positionsermittlungseinrichtung des Kamerasystems erfolgen oder die Positionsermittlungseinrichtung des Kamerasystems bzw. das Kamerasystem kann dazu ausgebildet sein, die Positionen der Positionsmarker in dem bezüglich des Kamerasystems festen Koordinatensystem an die Hintergrund-Wiedergabeeinrichtung zu übermitteln, wobei beispielsweise die Steuereinrichtung dazu ausgebildet sein kann, die erforderliche Transformation zum Ermitteln der Position der Kamera durchzuführen.

Um ein Ermitteln der Positionen der Positionsmarker durch die Positionsermittlungseinrichtung zu ermöglichen, können beispielsweise relative Koordinaten der Positionsmarker in einer der Aufnahme vorhergehenden Kalibration in einen mit der Positionsermittlungseinrichtung verbundenen Speicher eingeschrieben werden, beispielsweise durch Koppeln der Hauptkamera und/oder der Hilfskamera mit einem Computer (PC) oder über ein Eingabemenü der jeweiligen Kamera. Das Kamerasystem bzw. dessen Positionsermittlungseinrichtung kann somit flexibel in verschiedenen Bildaufnahmestudios bzw. mit verschiedenen Hintergrundwiedergabesystemen oder Hintergrund-Wiedergabeeinrichtungen verwendet werden.

Die Hauptkamera und/oder die Hilfskamera des Kamerasystems können ferner grundsätzlich die vorstehend und/oder nachstehend erläuterten Merkmale der zugeordneten Kamera, der Hauptkamera und/oder der Hilfskamera aufweisen, sofern diese nicht grundlegend dem Konzept des beschriebenen Kamerasystems mit einer Licht im sichtbaren Wellenlängenbereich abbildenden Hauptkamera und einer Licht im nicht-sichtbaren Wellenlängenbereich abbildenden Hilfskamera widersprechen.

Zudem ist eine digitale Kamera, insbesondere zur Verwendung mit einem Hintergrundwiedergabesystem der hierin offenbarten Art, mit einem Bildsensor offenbart, der einen Hauptsensorbereich mit einer Vielzahl von Hauptsensorelementen aufweist, wobei die Hauptsensorelemente für mehrere verschiedene sichtbare Farben lichtempfindlich sind und entsprechende Bildelementsignale erzeugen, und mit einer Ausleseschaltung, die dazu ausgebildet ist, anhand der Bildelementsignale der Hauptsensorelemente Bilddatensätze zu erzeugen, die einer jeweiligen Abbildung eines Gesichtsfelds der Kamera entsprechen, wobei der Bildsensor außerhalb des Hauptsensorbereichs wenigstens einen Ergänzungssensorbereich mit einer Vielzahl von Ergänzungssensorelementen aufweist, die für nicht-sichtbare Wellenlängen lichtempfindlich sind, wobei der Bildsensor lediglich in dem Ergänzungssensorbereich, nicht jedoch in dem Hauptsensorbereich, für nicht-sichtbare Wellenlängen lichtempfindlich ist. Insbesondere können die Ergänzungssensorelemente dabei für Wellenlängen in einem infraroten und/oder in einem ultravioletten Wellenlängenbereich lichtempfindlich sein.

Ferner kann die Ausleseschaltung zum Erzeugen der Bilddatensätze teilweise in den Bildsensor integriert sein oder als eine oder mehrere separate Einheiten ausgebildet sein. Insbesondere kann die Ausleseschaltung Verstärker, Multiplexer, Analog-Digital-Wandler, Pufferspeicher und/oder Mikrocontroller aufweisen. Die Ausleseschaltung kann die Bildelementsignale dabei auslesen, aufbereiten, digitalisieren und/oder ausgeben.

Der Bildsensor kann zudem eine Ausleseschaltung aufweisen, die dazu ausgebildet ist, Bilddatensätze anhand der Signale der Ergänzungssensorelemente zu erzeugen, so dass in einem nicht-sichtbaren Wellenlängenbereich erzeugte Positionsmarker in diesen Bilddatensätzen der Ergänzungssensorelemente identifiziert werden können. Grundsätzlich kann auch eine gemeinsame Ausleseschaltung zum Erzeugen der Bilddatensätze der Hauptsensorelemente und zum Erzeugen der Bilddatensätze der Ergänzungssensorelemente vorgesehen sein und/oder die Bilddatensätze der Hauptsensorelemente und der Ergänzungssensorelemente können als ein gemeinsamer Bilddatensatz gebildet und/oder ausgegeben werden. Die jeweiligen Sensorelemente können dazu ausgebildet sein, in einem Wellenlängenbereich auftreffendes Licht, in welchem die Sensorelemente sensitiv sind, in elektrische Ladung umzuwandeln, welche mittels der Ausleseschaltung ausgelesen werden kann.

Eine solche digitale Kamera bzw. deren Bildsensor ermöglicht es somit, in einem nicht-sichtbaren Wellenlängenbereich erzeugte Positionsmarker einer Hintergrund-Wiedergabeeinrichtung mittels der Ergänzungssensorelemente zu detektieren, während die Aufnahme einer in einem Bildaufnahmestudio aufzunehmenden Szene sowie der Darstellung des virtuellen Hintergrunds mittels der Hauptsensorelemente vollkommen unbeeinträchtigt erfolgen kann. Insbesondere müssen in einem nicht-sichtbaren Wellenlängenbereich wiedergegebenen Positionsmarker nicht nachträglich aus der von der Kamera erstellten Aufnahme einer Szene entfernt werden, sondern die Aufnahme kann auf herkömmliche Art weiterverarbeitet werden. Die digitale Kamera kann somit als die vorstehend und/oder nachstehend erläuterte zugeordnete Kamera und/oder Hauptkamera fungieren.

Insofern löst diese digitale Kamera die Aufgabe, einfachere, schnellere und kostengünstigere Möglichkeiten zum Ermitteln einer Position einer zugeordneten Kamera für Aufnahmen in einem virtuellen Bildaufnahmestudio zu schaffen, indem der Bildsensor der Kamera durch den zumindest einen Ergänzungssensorbereich geringfügig erweitert und ein Detektieren in einem nicht-sichtbaren Wellenlängenbereich erzeugter Positionsmarker ermöglicht wird. Innerhalb der von den Ergänzungssensorelementen erzeugten Abbildung können dabei insbesondere jeweilige Lagen der Positionsmarker bestimmt werden, um anhand dieser Lagen die Position der Kamera ermitteln zu können. Indem der Ergänzungssensorbereich dabei außerhalb des Hauptsensorbereichs angeordnet ist, können die Hauptsensorelemente, deren Anzahl und/oder Dichte gegenüber einem herkömmlichen Bildsensor vollkommen unverändert bleiben, so dass der Hauptsensorbereich auf eine optimale Aufnahme bzw. Abbildung einer Szene ausgelegt sein kann. Auch hierbei wird entsprechend das Konzept umgesetzt, aus an der Position der Kamera bzw. von der Kamera erzeugten Daten die Position der Kamera zu bestimmen, ohne die Kamera durch externe optische Einrichtungen bzw. Kameras beobachten zu müssen.

Bei einigen Ausführungsformen kann der Hauptsensorbereich rechteckig sein und vier Ränder aufweisen, wobei der wenigstens eine Ergänzungssensorbereich benachbart zu wenigstens einem der vier Ränder des Hauptsensorbereichs angeordnet sein kann. Insbesondere kann der Ergänzungssensorbereich benachbart zu einem oberen Rand des Hauptsensorbereichs und/oder einem unteren Rand des Hauptsensorbereichs und/oder einem seitlichen linken und/oder einem seitlichen rechten Rand des Hauptsensorbereichs angeordnet sein. Dabei kann der wenigstens eine Ergänzungssensorbereich an den jeweiligen Rand des Hauptsensorbereichs unmittelbar angrenzen oder geringfügig beabstandet zu dem Rand angeordnet sein, wobei ein solcher Abstand insbesondere herstellungsbedingt sein kann. Ferner kann der Ergänzungssensorbereich benachbart zu allen vier Rändern des Sensorbereichs angeordnet sein bzw. mehrere Ergänzungssensorbereiche umfassen, wobei der Ergänzungssensorbereich bzw. die Ergänzungssensorbereiche einen um den Hauptsensorbereich umlaufenden Rahmen bilden kann bzw. können.

Es kann bei einigen Ausführungsformen vorgesehen sein, dass die räumliche Auflösung in dem Ergänzungssensorbereich geringer als in dem Hauptsensorbereich ist. Insbesondere kann dabei die Anzahl von Ergänzungssensorelementen pro Längeneinheit bzw. pro Flächeneinheit geringer als die Anzahl von Hauptsensorelementen pro Längeneinheit bzw. pro Flächeneinheit sein. Die Ergänzungssensorelemente können ferner mit einer größeren Fläche ausgebildet sein als die Hauptsensorelemente. Der Ergänzungssensorbereich kann somit zum Ermitteln der Position der digitalen Kamera vorgesehen sein, wozu nicht zwangsläufig eine höchstmögliche Auflösung erforderlich ist, während der Hauptsensorbereich zum Erzeugen hochaufgelöster Abbildungen einer in dem Bildaufnahmestudio aufzunehmenden Szene ausgebildet sein kann.

Auch eine solche digitale Kamera kann insbesondere die vorstehend und/oder nachstehend in Bezug auf eine zugeordnete Kamera, eine Hauptkamera und/oder eine Hilfskamera erläuterten Merkmale aufweisen, sofern diese dem Konzept eines Bildsensors mit einem Hauptsensorbereich und einem Ergänzungssensorbereich nicht entgegenstehen. Insbesondere kann dabei eine jeweilige Lage der Positionsmarker in einer von der digitalen Kamera erzeugten Abbildung, insbesondere in einer von den Ergänzungssensorelementen erzeugten Abbildung, ermittelt werden, um daraus die Position der digitalen Kamera relativ zu einer Hintergrund-Wiedergabeeinrichtung zu ermitteln. Dabei kann beispielsweise die digitale Kamera eine Positionsermittlungseinrichtung zum Ermitteln dieser Position aufweisen und/oder die digitale Kamera kann dazu ausgebildet sein, Kameradaten an eine solche Positionsermittlungseinrichtung zu übermitteln.

Die Erfindung bezieht sich ferner auf ein Aufnahmesystem mit einem Hintergrundwiedergabesystem der hierin offenbarten Art und mit der zugeordneten Kamera und/oder zumindest einer mit der zugeordneten Kamera verbundenen Hilfskamera, insbesondere mit einem Kamerasystem der hier offenbarten Art oder einer digitalen Kamera mit einem Bildsensor mit Hauptsensorelementen und Ergänzungssensorelementen der hierin offenbarten Art, sowie mit einer Positionsermittlungseinrichtung, wobei die Kamera und/oder die Hilfskamera dazu ausgebildet ist bzw. sind, die Kameradaten für die Positionsermittlungseinrichtung zu erzeugen.

Die zugeordnete Kamera, welche auch als Hauptkamera bezeichnet werden kann und/oder als digitale Kamera der hierin offenbarten Art ausgebildet sein kann, und/oder die Hilfskamera ist bzw. sind dazu ausgebildet, eine Abbildung der Hintergrund-Wiedergabeeinrichtung zu erzeugen, in welcher die Positionsmarker identifizierbar sind. Anhand der von der jeweiligen Kamera erzeugten Abbildungen bzw. Bilddatensätze können insbesondere die Lagen der Positionsmarker innerhalb der Abbildung bestimmbar ist. Die Positionsermittlungseinrichtung kann dazu ausgebildet sein, basierend auf diesen Lagen der Positionsmarker in der betreffenden Abbildung die Position der zugeordneten Kamera bzw. der Hauptkamera zu ermitteln.

Wie vorstehend bereits erläutert, kann die Positionsermittlungseinrichtung dabei beispielsweise in die Steuereinrichtung des Hintergrundwiedergabesystems integriert oder als separate Einheit des Hintergrundwiedergabesystems mit der Steuereinrichtung verbunden sein. Alternativ dazu kann die Positionsermittlungseinrichtung auch in die zugeordnete Kamera bzw. die Hauptkamera bzw. die digitale Kamera und/oder die Hilfskamera integriert sein, so dass die Kameradaten innerhalb der Kamera bzw. eines Kamerasystems verarbeitet werden können, um die Position der zugeordneten Kamera zu bestimmen. Eine von der Positionsermittlungseinrichtung ermittelte Position der Kamera kann in Form von Positionsdaten an die Steuereinrichtung des Hintergrundwiedergabesystems übermittelt werden, wobei die Steuereinrichtung dazu ausgebildet sein kann, die Darstellung des virtuellen Hintergrunds mittels der Hintergrund-Wiedergabeeinrichtung in Abhängigkeit von der ermittelten Position der Kamera anzupassen. Die Ermittlung der Position der Kamera sowie die Anpassung der Darstellung des virtuellen Hintergrunds können dabei insbesondere in Echtzeit erfolgen.

Bei einigen Ausführungsformen können die zugeordnete Kamera und/oder die Hilfskamera dazu ausgebildet sein, Licht einer nicht-sichtbaren Wellenlänge zu detektieren. Insbesondere können die zugeordnete Kamera und/oder die Hilfskamera dazu ausgebildet sein, Licht in einem infraroten und/oder in einem ultravioletten Wellenlängenbereich zu detektieren. Beispielsweise kann eine mit der zugeordneten Kamera verbundene und in einer definierten Position relativ zu der zugeordneten Kamera angeordnete Hilfskamera dazu ausgebildet sein, Licht in einem nicht-sichtbaren Wellenlängenbereich zu detektieren, um beispielsweise von jeweiligen Positionsmarker-Lichtquellen in einem infraroten Wellenlängenbereich emittierte Strahlung zu detektieren. Die Hilfskamera kann somit zur Positionsermittlung dienen, während die zugeordnete Kamera bzw. die Hauptkamera für die Aufnahme der Szene bzw. des sichtbaren Lichts vorgesehen sein kann, ohne dass diese Aufnahme durch das Erzeugen der Positionsmarker beeinträchtigt wird. Alternativ dazu kann die zugeordnete Kamera des Aufnahmesystems beispielsweise einen Bildsensor mit einem Hauptsensorbereich und im sichtbaren Wellenlängenbereich lichtempfindlichen Hauptsensorelementen sowie mit einem Ergänzungssensorbereich und in einem nicht-sichtbaren Wellenlängenbereich lichtempfindlichen Ergänzungssensorelementen aufweisen, um, wie vorstehend erläutert, in einem nicht-sichtbaren Wellenlängenbereich erzeugte Positionsmarker detektieren zu können.

Bei einigen Ausführungsformen kann die zugeordnete Kamera und/oder die Hilfskamera eine Messeinrichtung aufweisen, welche dazu ausgebildet ist, eine Ausrichtung der zugeordneten Kamera, insbesondere eine Drehstellung und/oder eine Kippstellung der zugeordneten Kamera, zu bestimmen, wobei die Kameradaten ferner die Ausrichtung der zugeordneten Kamera umfassen können.

Beispielsweise kann die Messeinrichtung einen Drehstellungssensor, insbesondere einen Inkrementaldrehgeber, und/oder einen statischen Beschleunigungssensor aufweisen, um die Ausrichtung der zugeordneten Kamera zu bestimmen. Insbesondere kann die Messeinrichtung dabei an der zugeordneten Kamera angeordnet sein, so dass die Ausrichtung der zugeordneten Kamera direkt bestimmt werden kann. Alternativ kann es auch vorgesehen sein, dass die Messeinrichtung an einer mit der zugeordneten Kamera verbundenen Hilfskamera angeordnet bzw. angebracht ist, welche in einer definierten Position und Ausrichtung mit der zugeordneten Kamera verbunden ist, so dass aus der Ausrichtung der Hilfskamera unmittelbar die Ausrichtung der zugeordneten Kamera bestimmt werden kann.

Wie bereits erläutert, kann die Ausrichtung der zugeordneten Kamera insbesondere beim Ermitteln der Position der Kamera und beim Anpassen der Darstellung des virtuellen Hintergrunds berücksichtigt werden, um die Anzahl der Freiheitsgrade bei der Ermittlung der Position der zugeordneten Kamera im Raum zu verringern. Insbesondere können die an die Positionsermittlungseinrichtung übermittelten Kameradaten es somit ermöglichen, die Position der zugeordneten Kamera eindeutig und in einem bezüglich des Bildaufnahmestudios und/oder der Hintergrund-Wiedergabeeinrichtung festgelegten Koordinatensystem zu ermitteln.

Ferner kann die zugeordnete Kamera bei einigen Ausführungsformen einen Bildsensor aufweisen, der eine Vielzahl von lichtempfindlichen Sensorelementen aufweist, um jeweilige Bildelementsignale zu erzeugen, wobei die zugeordnete Kamera dazu ausgebildet sein kann, einen ersten Teil der Bildelementsignale, die einer Abbildung eines Aufnahmegesichtsfelds der Kamera entsprechen, als Aufnahmebilddaten aufzuzeichnen oder auszugeben, sowie einen zweiten Teil der Bildelementsignale, die einer Abbildung eines zu dem Aufnahmegesichtsfeld benachbarten Beobachtungsgesichtsfelds der Kamera entsprechen, als Beobachtungsbilddaten zu erzeugen. Ferner kann die zugeordnete Kamera dabei dazu ausgebildet sein, die Beobachtungsbilddaten hinsichtlich der Lagen der mehreren Positionsmarker innerhalb der Abbildung des Beobachtungsgesichtsfelds auszuwerten oder die Beobachtungsbilddaten als Teil der Kameradaten an die Positionsermittlungseinrichtung zu übermitteln.

Bei einer derart ausgebildeten Kamera können die Aufnahmebilddaten der Bildinformation der Szene entsprechen, welche von der zugeordneten Kamera erfasst und innerhalb der zugeordneten Kamera oder auf einem externen Rekorder gespeichert oder für eine Ausstrahlung (z.B. Live-Übertragung bzw. Broadcast) ausgegeben werden soll. Insbesondere können die Aufnahmebilddaten dabei einer Abbildung der von der zugeordneten Kamera aufgenommenen Szene in einem vorbestimmten und/oder vorgebbaren bzw. vor der Aufnahme wählbaren Format entsprechen, in welchem die Abbildung letztlich angesehen werden soll. Das Beobachtungsgesichtsfelds kann dabei von Sensorelementen in einem bereits erwähnten Overscan-Bereich der Kamera bzw. deren Bildsensors abgebildet werden, in welchem Beobachtungsbilddaten erzeugt werden können, welche nicht zu der Abbildung der aufgenommenen Szene in dem vorgesehenen Format beitragen. Insofern kann das Beobachtungsgesichtsfeld das Aufnahmegesichtsfeld der Kamera in einer oder mehreren Richtungen erweitern, so dass grundsätzlich ein größerer Bereich mittels der Kamera abgebildet werden kann, als für die gewünschte Abbildung der vorgesehenen Szene erforderlich ist.

Dabei können die Beobachtungsbilddaten eine laufende, im Hinblick auf die Abbildung in dem vorgesehenen Format zusätzliche Erfassung der Positionsmarker in sichtbaren Wellenlängenbereichen ermöglichen, ohne dass die Aufnahmebilddaten dadurch beeinträchtigt werden. Indem die zugeordnete Kamera dazu ausgebildet sein kann, die Beobachtungsbilddaten hinsichtlich der Lagen der mehreren Positionsmarker innerhalb der Abbildung des Beobachtungsgesichtsfelds auszuwerten oder die Beobachtungsbilddaten als Teil der Kameradaten an die Positionsermittlungseinrichtung zu übermitteln, können die Lagen der mehreren Positionsmarker innerhalb der Abbildung entweder von der Kamera selbst bestimmt und/oder der Positionsermittlungseinrichtung zur Verfügung gestellt werden, wobei die Positionsermittlungseinrichtung die Lagen der mehreren Positionsmarker, beispielsweise mittels Bildanalyseverfahren, erfassen kann. Anhand der Lagen der Positionsmarker innerhalb der Abbildung bzw. der Beobachtungsbilddaten kann sodann, wie vorstehend erläutert, die Position der zugeordneten Kamera ermittelt werden.

Somit können in sichtbaren Wellenlängen erzeugte Positionsmarker als Teil der Beobachtungsbilddaten detektiert und in den Beobachtungsbilddaten identifiziert werden, um eine Ermittlung der Position der zugeordneten Kamera anhand der von der zugeordneten Kamera erzeugten Daten bzw. der von der zugeordneten Kamera erzeugten Abbildung zu ermöglichen. Da die Beobachtungsbilddaten jedoch nicht zu den Aufnahmebilddaten beitragen, ist ein nachträgliches Entfernen von in den Beobachtungsbilddaten enthaltenen bzw. abgebildeten Positionsmarkern nicht erforderlich. Insbesondere können die Beobachtungsbilddaten dabei ausschließlich zur Ermittlung der Position der zugeordneten Kamera herangezogen werden und optional für einen elektronischen Sucher oder Monitor verwendet werden (und im Übrigen verworfen werden), um einen etwaigen Speicher, beispielsweise der zugeordneten Kamera oder eines externen Rekorders, ausschließlich mit den letztlich benötigten Aufnahmebilddaten zu beschreiben und eine Ausgabeschnittstelle nicht mit unnötigen Datenmengen zu belasten.

Insbesondere ist es bei einigen Ausführungsformen des Aufnahmesystems mit einer solchen Kamera, die einen Bildsensor mit jeweiligen Sensorelementen zum Erfassen eines Aufnahmegesichtsfeld der Kamera und eines dazu benachbarten Beobachtungsgesichtsfeld der Kamera möglich, dass die Steuereinrichtung des Hintergrundwiedergabesystems dazu ausgebildet ist, die Positionen der Positionsmarker an der Hintergrund-Wiedergabeeinrichtung in Abhängigkeit von den Kameradaten zu verändern. Insbesondere kann die Steuereinrichtung dabei dazu ausgebildet sein, die Positionen der mehreren Positionsmarker an der Hintergrund-Wiedergabeeinrichtung während der Aufnahme derart zu verändern, dass die Positionsmarker stets in dem Beobachtungsgesichtsfeld der zugeordneten Kamera, jedoch nicht in dem Aufnahmegesichtsfeld der zugeordneten Kamera liegen. Die Positionsmarker können somit gewissermaßen dem Beobachtungsgesichtsfeld der Kamera, insbesondere bei einer Änderung der Position der Kamera, nachgeführt werden, indem die Positionen der mehreren Positionsmarker an der Hintergrund-Wiedergabe-einrichtung entsprechend verändert werden. Um dies zu erreichen, kann die Steuereinrichtung insbesondere dazu ausgebildet sein, die Positionen der Positionsmarker an der Hintergrund-Wiedergabeeinrichtung aufgrund einer Bildanalyse, in welcher die Lagen der Positionsmarker in der von der zugeordneten Kamera erzeugten Abbildung bzw. den Beobachtungsbilddaten bestimmt und/oder eine Änderung der Lagen ermittelt wird, in Echtzeit zu verändern, um die Positionsmarker dem Beobachtungsgesichtsfeld der Kamera nachzuführen.

Bei einigen Ausführungsformen kann die zugeordnete Kamera zudem einen elektronischen Sucher aufweisen, wobei die Beobachtungsbilddaten zusätzlich zu den Aufnahmebilddaten an dem elektronischen Sucher als Bildinformation angezeigt werden können. Ein solcher Sucher kann dabei insbesondere dazu dienen, dass ein die zugeordnete Kamera führender Kameramann oder ein Fotograf auch eine Umgebung des Aufnahmegesichtsfelds der Kamera beobachten kann. Dabei kann das Aufnahmegesichtsfeld beispielsweise mittels einer an dem Sucher angezeigten Umrandung oder eines Strichs gegenüber dem Beobachtungsgesichtsfeld abgegrenzt sein, so dass der Kameramann bzw. Fotograf den sich in dem Aufnahmegesichtsfeld der Kamera befindlichen Bereich der Szene erkennen kann.

Die Sensorelemente, welche den ersten Teil der Bildelementsignale erzeugen, können bei einigen Ausführungsformen einem rechteckigen Sensorbereich des Bildsensors zugeordnet sein, der vier Ränder aufweist, wobei die Sensorelemente, welche den zweiten Teil der Bildelementsignale erzeugen, an dem Bildsensor benachbart zu wenigstens einem der vier Ränder des rechteckigen Sensorbereichs angeordnet sein können. Dabei können die Sensorelemente, welche den zweiten Teil der Bildelementsignale erzeugen, insbesondere benachbart zu einem linken Rand und/oder einem rechten Rand und/oder einem oberen Rand und/oder einem unteren Rand des rechteckigen Sensorbereichs angeordnet sein. Insbesondere können die Sensorelemente, welche den zweiten Teil der Bildelementsignale erzeugen, den rechteckigen Sensorbereich rahmenartig umgeben und insofern benachbart zu allen vier Rändern angeordnet sein. Grundsätzlich können sämtliche Sensorelemente des Bildsensors in einer rechteckigen Form angeordnet sein. Zudem können die Sensorelemente, welche den ersten Teil der Bildelementsignale erzeugen, in einem zentralen Bereich eines solchen rechteckigen Bildsensors angeordnet sein. Ferner können die Sensorelemente in einer Vielzahl von Zeilen und Spalten angeordnet sein.

Bei einigen Ausführungsformen kann es ferner vorgesehen sein, dass die Unterteilung der Sensorelemente, welche den ersten Teil der Bilddaten erzeugen, und der Sensorelemente, welche den zweiten Teil der Bilddaten erzeugen, variabel ist. Insbesondere kann somit das Aufnahmegesichtsfeld der Kamera anpassbar sein. Dies kann es ermöglichen, mittels der zugeordneten Kamera variabel Abbildungen in verschiedenen Formaten zu erzeugen, um einen flexiblen Einsatz der Kamera zu ermöglichen und verschiedenen Anforderungen an das jeweilige Format gerecht werden zu können. Das Format kann dabei jedoch insbesondere vor dem Beginn der Aufnahme festlegbar und während der Aufnahme einer Szene unveränderbar sein. Das Aufnahmegesichtsfeld der zugeordneten Kamera kann dabei insbesondere einem wahlweise anpassbaren Rechteck entsprechen. Auch die Größe des Beobachtungsgesichtsfelds, in welchem insbesondere die Positionsmarker detektiert werden können und welchem die Positionsmarker insbesondere nachgeführt werden können, kann somit veränderbar sein.

Ferner ist eine digitale Kamera, insbesondere zur Verwendung mit einem Hintergrundwiedergabesystem der hierin offenbarten Art, mit einem Bildsensor offenbart, der dazu ausgebildet ist, in Abhängigkeit von Lichtbeaufschlagung Bilddaten zu erzeugen, welche eine Abbildung eines Gesichtsfelds der Kamera repräsentieren, und mit einer Positionsermittlungseinrichtung, welche dazu ausgebildet ist, innerhalb einer Abbildung einer im Gesichtsfeld der Kamera befindlichen Hintergrund-Wiedergabeeinrichtung Lagen von mehreren Positionsmarkern zu erfassen und in Abhängigkeit von den erfassten Lagen der mehreren Positionsmarker eine Position der Kamera relativ zu der Hintergrund-Wiedergabeeinrichtung zu ermitteln.

Insbesondere kann der Bildsensor dabei eine Vielzahl von lichtempfindlichen Sensorelementen zur Erzeugung von belichtungsabhängigen Bildelementsignalen aufweisen, die beispielsweise aus Silizium gefertigt sein und auf einer CMOS-Technologie oder einer CCD-Technologie basieren können. Bei derartigen Bildsensoren können die Sensorelemente einen Sensorbereich bilden und sind in mehreren Zeilen und Spalten angeordnet. Ferner können die lichtempfindlichen Sensorelemente bei einigen Ausführungsformen mit einem Farbfiltermuster (Color Filter Array, CFA) versehen sein, um eine unterschiedliche spektrale Empfindlichkeit zu besitzen. Entsprechend ist ein derartiges Farbfiltermuster integraler Bestandteil des Bildsensors. Grundsätzlich können auch die vorstehend im Zusammenhang mit der zugeordneten Kamera, der Hauptkamera und/oder der Hilfskamera erläuterten Bildsensoren derartig bzw. auf derartigen Technologien basierend ausgebildet sein. Die Kamera kann ferner eine Ausleseelektronik aufweisen, um die Bildelementsignale des Bildsensors auszulesen, aufzubereiten und/oder zu digitalisieren.

Indem die Kamera eine Positionsermittlungseinrichtung aufweist, kann die Bestimmung der Position der Kamera bereits kameraseitig erfolgen und unmittelbar an ein Hintergrundwiedergabesystem bzw. eine Steuereinrichtung einer Hintergrund-Wiedergabeeinrichtung ausgegeben werden, so dass die Steuereinrichtung eine Darstellung eines virtuellen Hintergrunds in Abhängigkeit von der Position der Kamera anpassen kann. Auch eine solche Kamera löst folglich die Aufgabe, einfachere, schnellere und kostengünstigere Möglichkeiten zum Ermitteln einer Position einer zugeordneten Kamera für Aufnahmen in einem virtuellen Bildaufnahmestudio zu schaffen, indem die Kamera selbst zum Ermitteln der Position ausgebildet ist und daher auf Komponenten zur Beobachtung der Kamera und Bestimmen deren Position verzichtet werden kann. Die Kamera mit Positionsermittlungseinrichtung kann daher auch als Bestandteil des vorstehend beschriebenen Aufnahmesystems vorgesehen sein.

Die in die Kamera integrierte Positionsermittlungseinrichtung kann dabei insbesondere dazu ausgebildet sein, anhand der Lagen der Positionsmarker in der von der Kamera erzeugten Abbildung jeweilige Richtungen zu bestimmen, in welchen die Positionsmarker relativ zu der Kamera angeordnet sind. Dabei kann die Positionsermittlungseinrichtung dazu ausgebildet sein, zunächst die Positionen der Positionsmarker in einem bezüglich der Kamera festen Koordinatensystem, beispielsweise mit einem Ursprung an der Position der Kamera, zu ermitteln. Daraufhin kann durch einen Vergleich der Positionen der Positionsmarker in dem bezüglich der Kamera festen Koordinatensystem mit den Positionen der Positionsmarker in einem bezüglich des Bildaufnahmestudios und/oder der Hintergrund-Wiedergabeeinrichtung festen bzw. definierten Koordinatensystem die Position der Kamera in dem bezüglich des Bildaufnahmestudios bzw. der Hintergrund-Wiedergabeeinrichtung festen Koordinatensystem ermittelt werden. Die Kamera bzw. deren Positionsermittlungseinrichtung kann dazu beispielsweise vor einer Aufnahme in dem jeweiligen Bildaufnahmestudio bzw. in Bezug auf die Hintergrund-Wiedergabeeinrichtung kalibrierbar sein, um beispielsweise relative Positionen und/oder Abstände einzelner Positionsmarker zueinander in einen von der Positionsermittlungseinrichtung auslesbaren Speicher einzuschreiben.

Alternativ dazu kann es beispielsweise vorgesehen sein, dass die Kamera dazu ausgebildet ist, Abstände zwischen der Kamera und jeweiligen Positionsmarkern zu bestimmen, beispielsweise mittels eines Tiefensensors. Die Positionsermittlungseinrichtung kann dabei dazu ausgebildet sein, anhand der jeweiligen Abstände zwischen der Kamera und den Positionsmarkern sowie zuvor während einer Kalibrierung eingegebener Abstände der Positionsmarker zueinander durch ein Triangulationsverfahren die Position der Kamera zu ermitteln.

Bei einigen Ausführungsformen kann die Kamera einen Signalausgang aufweisen, der dazu ausgebildet ist, die ermittelte Position der Kamera an die Hintergrund-Wiedergabeeinrichtung zu übermitteln. Insbesondere kann die Kamera über den Signalausgang mit der Steuereinrichtung der Hintergrund-Wiedergabeeinrichtung drahtlos und/oder drahtgebunden verbindbar sein, so dass die Steuereinrichtung die von der Positionsermittlungseinrichtung der Kamera ermittelte Position, die insbesondere in Form von Positionsdaten übermittelt werden kann, beim Anpassen der Darstellung des virtuellen Hintergrunds berücksichtigen kann.

Die hier beschriebene Kamera mit Positionsermittlungseinrichtung kann zudem vorstehend und/oder nachstehend im Zusammenhang mit der zugeordneten Kamera, der Hauptkamera, der digitalen Kamera und/oder der Hilfskamera erläuterte Merkmale aufweisen, sofern diese nicht im Widerspruch zu der Ausbildung der Kamera mit einer Positionsermittlungseinrichtung stehen. Ferner kann die Kamera mit Positionsermittlungseinrichtung als Teil des vorstehend beschriebenen Aufnahmesystems vorgesehen sein.

Die Erfindung betrifft ferner ein Verfahren zum Steuern einer Hintergrund-Wiedergabeeinrichtung, welche hinter oder über einem realen Motiv eine Darstellung eines virtuellen Hintergrunds für eine Aufnahme mittels einer zugeordneten Kamera wiedergibt und mehrere vorbestimmte optisch detektierbare Positionsmarker erzeugt, in einem Aufnahmesystem der hierin offenbarten Art, mit den Schritten:
- Ermitteln einer Position der zugeordneten Kamera in Abhängigkeit von Kameradaten, die Lagen der mehreren Positionsmarker innerhalb einer Abbildung der Hintergrund-Wiedergabeeinrichtung repräsentieren; und
- Anpassen der Darstellung des virtuellen Hintergrunds in Abhängigkeit von der ermittelten Position der Kamera.

Das Ermitteln der Position der zugeordneten Kamera kann dabei insbesondere mittels einer Positionsermittlungseinrichtung erfolgen, welche beispielsweise dazu ausgebildet sein kann, anhand der Lagen der mehreren Positionsmarker jeweilige Richtungen zu ermitteln, in welchen die Positionsmarker relativ zu der zugeordneten Kamera angeordnet sind, und daraus die Position der zugeordneten Kamera zu ermitteln. Die Position der zugeordneten Kamera kann sodann genutzt werden, um die Darstellung des virtuellen Hintergrunds derart anzupassen, dass die von der zugeordneten Kamera erzeugte Abbildung der Darstellung des virtuellen Hintergrunds einer erwarteten Abbildung entspricht bzw. angenähert wird, die bei einem Abbilden eines dem virtuellen Hintergrund entsprechenden realen Hintergrunds entstehen würde. Insbesondere kann das Anpassen der Darstellung dabei in Echtzeit bzw. während einer Kamerabewegung, insbesondere während eines Kameraschwenks, erfolgen, um die Darstellung des virtuellen Hintergrunds während einer Bewegtbildaufnahme in Echtzeit an die sich ändernde Position der Kamera anpassen zu können.

Bei einigen Ausführungsformen kann die Position der zugeordneten Kamera in Abhängigkeit von den Kameradaten berechnet werden und/oder die Position der zugeordneten Kamera kann in Abhängigkeit von den Kameradaten in einer Nachschlagetabelle nachgeschlagen werden.

Ferner kann eine Ausrichtung der zugeordneten Kamera bei einigen Ausführungsformen beim Ermitteln der Position der zugeordneten Kamera und/oder beim Anpassen der Darstellung des virtuellen Hintergrunds berücksichtigt werden. Insbesondere können etwaige ermittelte Richtungen, in welchen Positionsmarker relativ zu der zugeordneten Kamera angeordnet sind, unter Berücksichtigung einer Ausrichtung der zugeordneten Kamera, insbesondere unter Berücksichtigung von Drehstellungen und/oder Kippstellungen, korrigiert bzw. in entsprechende Richtungen bei einer für die Positionsermittlung vorgesehenen Ausrichtung der Kamera überführt werden, um anhand dieser Richtungen die Position der Kamera zu bestimmen. Ferner kann anhand der Ausrichtung der Kamera deren Gesichtsfeld bestimmt werden, um die Darstellung des virtuellen Hintergrunds entsprechend anpassen zu können.

Bei einigen Ausführungsformen kann die Abbildung der Hintergrund-Wiedergabeeinrichtung, anhand derer die Position der zugeordneten Kamera bestimmt wird, von der zugeordneten Kamera und/oder zumindest einer mit der zugeordneten Kamera verbundenen Hilfskamera erzeugt werden. Eine mit der zugeordneten Kamera verbundene Hilfskamera kann dabei insbesondere dazu ausgebildet sein, Licht in einem nicht-sichtbaren Wellenlängenbereich zu detektieren, um in einem solchen Wellenlängenbereich erzeugte Positionsmarker identifizieren zu können.

Es kann, bei einigen Ausführungsformen, ferner vorgesehen sein, dass die Positionsmarker von Lichtquellen erzeugt werden. Dabei können die Positionsmarker insbesondere als vorbestimmte Markierungsmuster und/oder in einem nicht-sichtbaren Wellenlängenbereich erzeugt werden. Insbesondere kann das Erzeugen der Positionsmarker als vorbestimmte Markierungsmuster eine leichte Identifikation der Positionsmarker in der Abbildung und/oder eine spätere Korrektur der Abbildung im Zuge einer Bildbearbeitung ermöglichen, während durch das Erzeugen der Positionsmarker in einem nicht-sichtbaren Wellenlängenbereich die Aufnahme einer Szene mittels der zugeordneten Kamera vollständig unbeeinträchtigt durch das Erzeugen der Positionsmarker erfolgen kann.

Bei einigen Ausführungsformen können Positionen der Positionsmarker an der Hintergrund-Wiedergabeeinrichtung während der Aufnahme in Abhängigkeit von den Kameradaten verändert werden. Dadurch können die Positionsmarker beispielsweise einem Gesichtsfeld der zugeordneten Kamera nachgeführt werden, insbesondere einem bereits genannten Overscan-Bereich bzw. einem Beobachtungsgesichtsfeld der Kamera, welches benachbart zu einem Aufnahmegesichtsfeld der Kamera angeordnet ist. Dies kann insbesondere eine Ermittlung der Position der zugeordneten Kamera mittels von der zugeordneten Kamera selbst erzeugten Daten ermöglichen, wobei die Aufnahme der Szene in dem Bildaufnahmestudio bei einem Abbilden der Positionsmarker in einem Overscan-Bereich der Kamera auch bei einem Erzeugen der Positionsmarker in sichtbaren Wellenlängen nicht beeinträchtigt wird. Insbesondere ist kein nachträgliches Entfernen der Positionsmarker erforderlich.

Ferner können während der Aufnahme einer Szene bei einigen Ausführungsformen Bildaufnahmedaten der zugeordneten Kamera, die einem Aufnahmegesichtsfeld der zugeordneten Kamera entsprechen, in der zugeordneten Kamera dauerhaft gespeichert oder zur Speicherung in einem externen Rekorder ausgegeben oder für eine Ausstrahlung (z.B. Live-Übertragung bzw. Broadcast) per Funk oder kabelgebunden ausgegeben werden, wobei die Positionen der Positionsmarker an der Hintergrund-Wiedergabeeinrichtung während der Aufnahme derart verändert werden können, dass die Positionsmarker sich stets in einem Beobachtungsgesichtsfeld der zugeordneten Kamera befinden, welches außerhalb des Aufnahmegesichtsfelds der zugeordneten Kamera liegt. Die Positionsmarker können dabei in Bilddaten, welche eine Abbildung des Beobachtungsgesichtsfelds der zugeordneten Kamera repräsentieren, identifiziert werden, um anhand der Lagen der Positionsmarker in dieser Abbildung die Position der Kamera im Raum zu bestimmen. Die Bildaufnahmedaten können hingegen eine Bildinformation repräsentieren, welche einer Abbildung der Szene in einem vorgesehenen Format entsprechen kann. Indem die Positionsmarker sich somit stets in dem außerhalb des Aufnahmegesichtsfelds der zugeordneten Kamera liegenden Beobachtungsgesichtsfeld der Kamera, jedoch nicht in dem Aufnahmegesichtsfeld befinden, können die Positionsmarker abgebildet sowie identifiziert und insbesondere deren Lage in der Abbildung bestimmt werden, ohne dass die Bildaufnahmedaten dadurch beeinträchtigt werden. Insbesondere können ferner lediglich die Bildaufnahmedaten der zugeordneten Kamera in der zugeordneten Kamera dauerhaft gespeichert oder zur Speicherung in einem externen Rekorder ausgegeben werden. Dem Beobachtungsgesichtsfeld der zugeordneten Kamera entsprechende Bilddaten können hingegen insbesondere ausschließlich zum Ermitteln der Position der zugeordneten Kamera verwendet werden und danach verworfen werden, um den während der Aufnahme entstehenden Speicherbedarf zu minimieren.

Das hier beschriebene Verfahren kann ferner vorstehend und/oder nachstehend im Zusammenhang mit der Positionsermittlungseinrichtung und/oder der Steuereinrichtung zum Anpassen der Darstellung des virtuellen Hintergrunds erläuterte Schritte umfassen.

Die Erfindung wird im Folgenden rein beispielhaft anhand von Ausführungsbeispielen unter Bezugnahme auf die Zeichnungen erläutert. Es zeigen:
- Fig. 1A bis 1E: schematische Darstellungen eines Aufnahmesystems für ein Bildaufnahmestudio mit einem Hintergrundwiedergabesystem und einer zugeordneten Kamera sowie zwei Teilansichten einer mehrere Wiedergabemodule umfassenden Hintergrund-Wiedergabeeinrichtung des Hintergrundwiedergabesystems,
- Fig. 2A und 2B: eine schematische Darstellung einer für eine Aufnahme in dem Bildaufnahmestudio vorgesehenen Kamera sowie eine schematische Darstellung eines Kamerasystems, welches die zugeordnete Kamera sowie eine mit der zugeordneten Kamera verbundene Hilfskamera umfasst,
- Fig. 3A und 3B: eine schematische Darstellung eines Bildsensors einer Ausführungsform der zugeordneten Kamera mit einem Hauptsensorbereich und einem Ergänzungssensorbereich sowie eine schematische Darstellung eines Bildsensors einer weiteren Ausführungsform der zugeordneten Kamera zum Abbilden eines Aufnahmegesichtsfelds und eines Beobachtungsgesichtsfelds der zugeordneten Kamera,
- Fig. 4A bis 4D: jeweilige schematische Darstellungen des Aufnahmesystems zur Veranschaulichung eines Ermittelns einer Position der zugeordneten Kamera und eines Steuerns der Hintergrund-Wiedergabeeinrichtung des Hintergrundwiedergabesystems in Abhängigkeit von der ermittelten Position,
- Fig. 5: eine schematische Darstellung einer von der Kamera und/oder der Hilfskamera erzeugten Abbildung der Hintergrund-Wiedergabeeinrichtung,
- Fig. 6A bis 6C: jeweilige schematische Darstellungen zur Veranschaulichung der Ermittlung der Position der zugeordneten Kamera relativ zu der Hintergrund-Wiedergabeeinrichtung,
- Fig. 7A und 7B: jeweilige schematische Darstellungen zur Veranschaulichung der Ermittlung der Position der zugeordneten Kamera relativ zu der Hintergrund-Wiedergabeeinrichtung unter Berücksichtigung einer Ausrichtung der zugeordneten Kamera,
- Fig. 8A bis 8F: jeweilige schematische Darstellungen zur Veranschaulichung der Steuerung der Hintergrund-Wiedergabeeinrichtung in Abhängigkeit von der Position der zugeordneten Kamera,
- Fig. 9A bis 9F: jeweilige schematische Darstellungen zur Veranschaulichung der Steuerung der Hintergrund-Wiedergabeeinrichtung unter Berücksichtigung der Ausrichtung der zugeordneten Kamera und
- Fig. 10A bis 10C: jeweilige schematische Darstellungen einer Ausführungsform der Hintergrundwiedergabesystems, bei welcher Positionen der Positionsmarker an der Hintergrund-Wiedergabeeinrichtung veränderbar sind, mit entsprechenden von der zugeordneten Kamera erzeugten Abbildungen der Hintergrund-Wiedergabeeinrichtung.

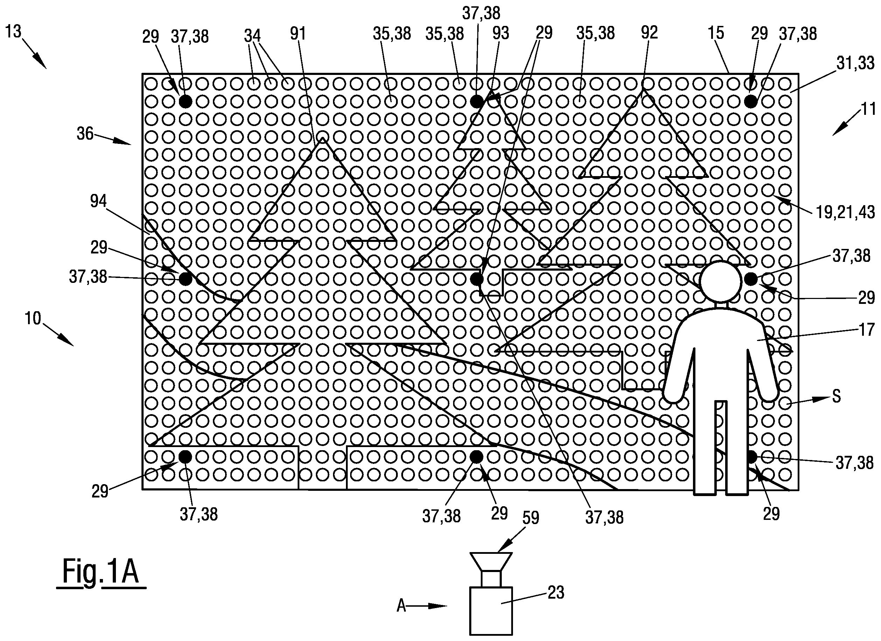

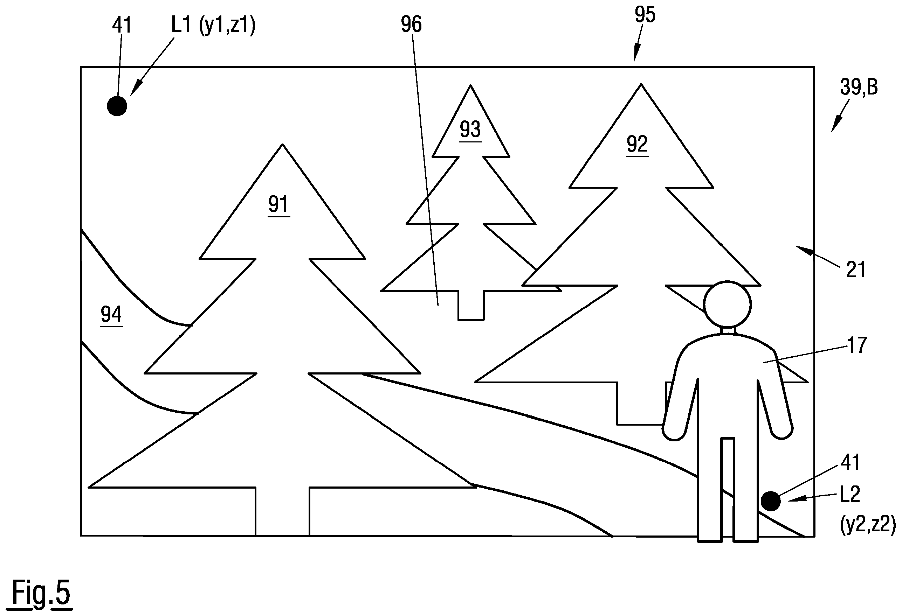

Fig. 1A zeigt ein virtuelles Bildaufnahmestudio 13, in welchem mittels einer zugeordneten Kamera 23 eine Szene aufgenommen werden kann. Die Kamera 23 ist dabei Teil eines Aufnahmesystems 10, welches ferner ein in dem virtuellen Bildaufnahmestudio 13 angeordnetes Hintergrundwiedergabesystem 11 mit einer Hintergrund-Wiedergabeeinrichtung 15 umfasst. Die Hintergrund-Wiedergabeeinrichtung 15 ist dazu ausgebildet, hinter oder über einem realen Motiv 17, hier einem Schauspieler, eine Darstellung 19 eines virtuellen Hintergrunds 21 wiederzugeben. Bei der zugeordneten Kamera 23 kann es sich insbesondere um eine Bewegtbildkamera handeln, mittels derer eine Bewegtbildsequenz als eine Abfolge aufeinanderfolgender, von der Kamera 23 erzeugter Abbildungen 39 aufgenommen werden kann (vgl. auch Fig. 5). Alternativ dazu kann die Kamera 23 jedoch auch als Stillbildkamera ausgebildet sein, um einzelne Abbildungen 39 bzw. Fotografien erstellen zu können.

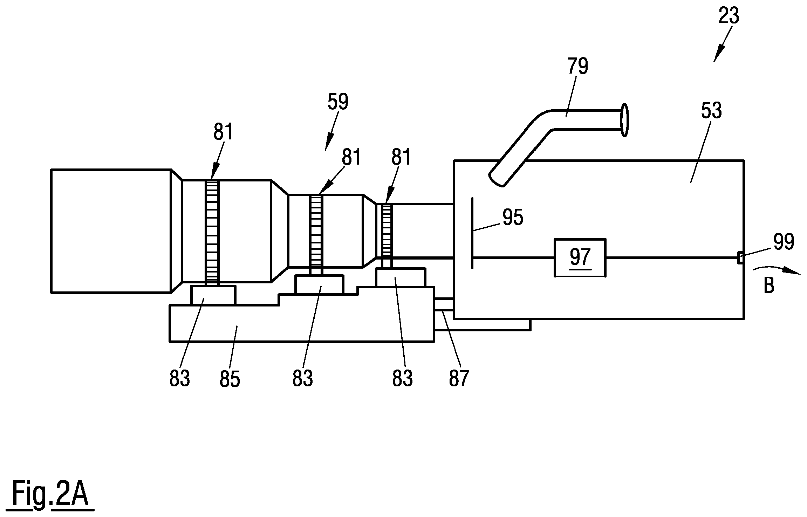

Eine mögliche Ausführung der zugeordneten Kamera ist in Fig. 2A schematisch gezeigt. Diese zugeordnete Kamera kann dabei auch als Hauptkamera bezeichnet bzw. verstanden werden und ist dazu vorgesehen, die Abbildung 39 der Darstellung 19 des virtuellen Hintergrunds 21 sowie des realen Motivs 17 bzw. des Schauspielers zu erzeugen und eine Aufnahme zu erstellen (vgl. auch Fig. 5).

Die Kamera 23 weist einen Kamerakörper 53 auf, an welchem ein Objektiv 59 befestigt ist. Das Objektiv 59 kann dabei insbesondere als Wechselobjektiv ausgebildet sein, so dass wahlweise verschiedenartig ausgebildete Objektive 59 mit dem Kamerakörper 53 verbunden werden können und stets ein für eine jeweilige Aufnahme optimales Objektiv 59 gewählt werden kann. Das Objektiv 59 weist drei Objektivringe 81 auf, mittels derer jeweilige Parameter des Objektivs 59 eingestellt werden können. Beispielsweise können eine Fokusentfernung, eine Brennweite, ein Zoom-Faktor und/oder eine Blendenöffnung, insbesondere eine Öffnung einer Irisblende, durch Drehen eines jeweiligen der Objektivringe 81 einstellbar bzw. anpassbar sein.

Um die Objektivringe 81 einstellen zu können, ist eine Objektivring-Antriebseinheit 85 über eine Haltestange 87 mit dem Kamerakörper 53 verbunden, welche für jeden der Objektivringe 81 einen jeweiligen Objektiv-Stellmotor 83 aufweist. Mittels dieser Objektiv-Stellmotoren 83 können die Objektivringe 81 gedreht und dadurch Einstellungen an dem Objektiv 59 vorgenommen werden. Insbesondere kann die Objektivring-Antriebseinheit 85 ferngesteuert betätigbar sein, so dass die genannten Objektivparameter ferngesteuert eingestellt bzw. verändert werden können.

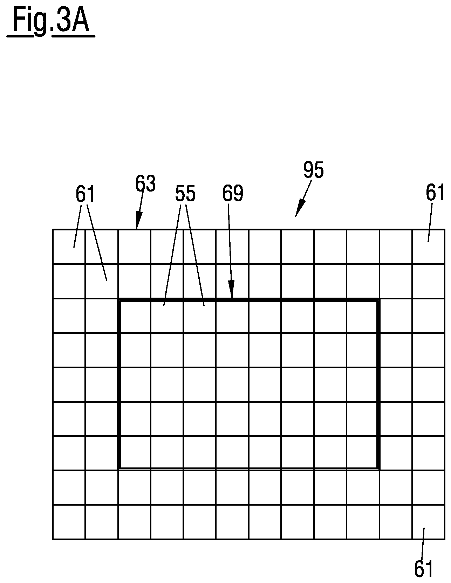

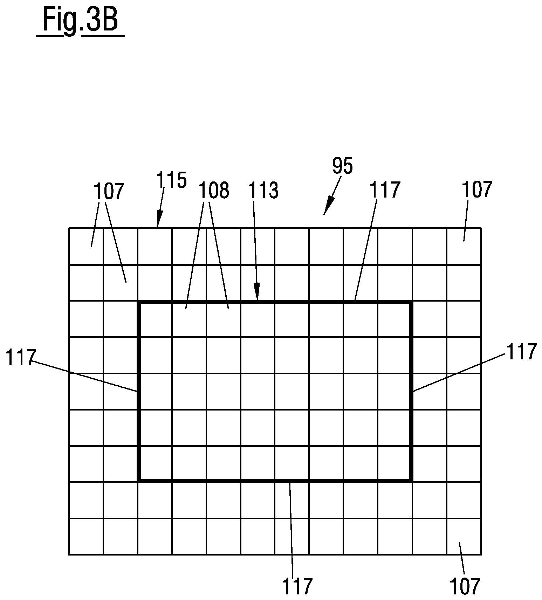

Um durch das Objektiv 59 eintreffendes Licht abbilden zu erzeugen, weist die Kamera 23 ferner einen innerhalb des Kamerakörpers 53 angeordneten Bildsensor 95 auf. Dieser Bildsensor 95 kann beispielsweise auf der CMOS-Technologie oder der CCD-Technologie basierend ausgebildet sein und eine Vielzahl von lichtempfindlichen Sensorelementen 55 bzw. 61 aufweisen, die in mehreren Zeilen und Spalten angeordnet sein können (vgl. auch Fig. 3). Ferner weist die Kamera 23 eine Ausleseschaltung 97 auf, welche dazu ausgebildet ist, die Signale der jeweiligen Sensorelemente 55 oder 61 auszulesen, aufzubereiten, zu digitalisieren und an bzw. über einen Signalausgang 99 auszugeben. Dazu kann die Ausleseschaltung 97 insbesondere Verstärker, Multiplexer, Analog-Digital-Wandler, Pufferspeicher und/oder Mikrocontroller umfassen. Letztlich kann somit von der Kamera 23 ein Bilddatensatz B erzeugt werden, welcher der Abbildung 39 bzw. einer Abbildung eines Gesichtsfelds der Kamera 23 entspricht, und der Bilddatensatz B kann über den Signalausgang 99 ausgegeben werden. Um das Gesichtsfeld der Kamera 23 überprüfen und die Kamera 23 auf einen jeweiligen Bildausschnitt ausrichten zu können, ist an dem Kamerakörper 53 ferner ein Sucher 79 angeordnet, durch welchen ein Kameramann hindurchsehen kann.

Der in dem in Fig. 1A veranschaulichte, von der Hintergrund-Wiedergabeeinrichtung 15 wiedergegebene und mittels der zugeordneten Kamera 23 aufgenommene virtuelle Hintergrund 21 stellt eine dreidimensionale Szene 43 dar, die beispielhaft vier Objekte 91, 92, 93 und 94, drei Bäume und einen Weg, umfasst. Um die Darstellung 19 des virtuellen Hintergrunds 21 zu erzeugen, weist die Hintergrund-Wiedergabeeinrichtung 15 dabei eine Lichtquellen-Wand 33 auf, welche eine Vielzahl von Lichtquellen 34 umfasst. Dabei umfasst die Vielzahl von Lichtquellen in der in Fig. 1A veranschaulichten Ausführungsform der Hintergrund-Wiedergabeeinrichtung 15 eine Vielzahl von Bildelement-Lichtquellen 35, die in einer flächigen Anordnung an einer Wiedergabefläche 31 angebracht sind. Die Lichtquellen 34 und insbesondere die jeweiligen Bildelement-Lichtquellen 35 können dabei individuell ansteuerbar sein, wobei die Bildelement-Lichtquellen 35 jeweilige Bildelement-Lichtsignale S aussenden, durch welche die Darstellung 19 des virtuellen Hintergrunds 21 erzeugt wird. Die dreidimensionale Szene 43 wird somit auf der Wiedergabefläche 31 und insofern zumindest abschnittsweise in zwei Dimensionen wiedergegeben.

Während die Wiedergabefläche 31 sich hier beispielhaft hinter dem realen Motiv 17 in einer vertikalen Ausrichtung und als eine plane Fläche erstreckt, kann sich die Hintergrund-Wiedergabeeinrichtung 15 insbesondere auch um das reale Motiv 17 herum und/oder über dem realen Motiv 17, insbesondere in einer horizontalen Ausrichtung, erstrecken. Die Wiedergabefläche 31 kann dabei abschnittsweise plan und/oder abschnittsweise gekrümmt verlaufen. Beispielsweise kann sich die Wiedergabefläche 31 kreisbogenförmig in einer vertikalen Ausrichtung um das reale Motiv 17 herum erstrecken. Ferner können insbesondere Übergangsbereiche zwischen Abschnitten, in welchen die Wiedergabefläche 31 vertikal ausgerichtet ist, und Abschnitten, in welchen die Wiedergabefläche 31 horizontal ausgerichtet ist und/oder sich über dem realen Motiv 17 erstreckt, gekrümmt verlaufen.

Die Bildelement-Lichtquellen 35 sind hier beispielhaft als Leuchtdioden 38 ausgebildet, die in einem regelmäßigen Raster 36 an der Wiedergabefläche 31 der Hintergrund-Wiedergabeeinrichtung 15 angeordnet sind. Die Wiedergabefläche 31 kann somit insbesondere von einer LED-Wand oder einer OLED-Wand gebildet sein, wobei die Leuchtdioden 38 insbesondere auch Teil einer Flüssigkristallanzeige sein können. Jede Bildelement-Lichtquelle 35 kann durch eine einzelne Leuchtdiode 38 oder beispielsweise durch ein sogenanntes RGB-Pixel gebildet sein, welches eine Einheit von mehreren Leuchtdioden unterschiedlicher Farbe umfasst. Alternativ dazu können die Bildelement-Lichtquellen 35 jedoch beispielsweise auch von Lichtpunkten gebildet werden, die durch Reflexion oder Transmission an der Lichtquellen-Wand 33 erzeugt werden. Dabei kann die Wiedergabefläche 31 insbesondere von einer Leinwand gebildet sein, an welcher die Darstellung 19 des virtuellen Hintergrunds 21 mittels Rückprojektion erzeugt wird.

Grundsätzlich können mittels einer solchen Hintergrund-Wiedergabeeinrichtung 15 Darstellungen 19 eines beliebigen virtuellen Hintergrunds 21 erzeugt werden, um in dem Bildaufnahmestudio 13 eine Umgebung zu schaffen, in welcher die Aufnahme erfolgen bzw. eine jeweilige Szene stattfinden soll. Beispielsweise können so Abbildungen 39 in bzw. vor beliebigen Landschaften, Räumen oder sonstigen Umgebungen in dem virtuellen Bildaufnahmestudio 13 erstellt werden. Dadurch liegen bereits nach der Aufnahme vollständige Abbildungen 39 vor, ohne dass beispielsweise, wie bei einer Aufnahme vor einem Green-Screen, nachträglich ein Hintergrund hinzugefügt werden muss. Zudem kann durch das unmittelbare Darstellen des virtuellen Hintergrunds 21 das Schauspiel erleichtert werden, indem ein Schauspieler beispielsweise in dem virtuellen Hintergrund 21 ablaufende Ereignisse wahrnehmen und darauf reagieren kann.

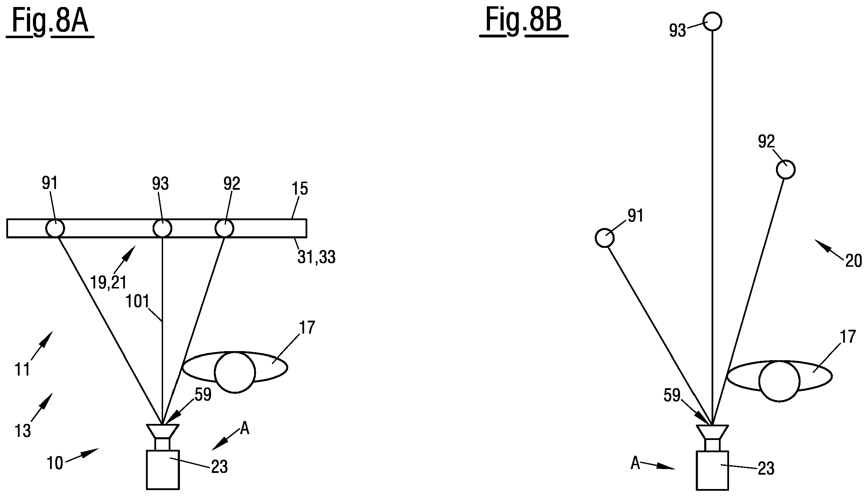

Während das Verwenden der Hintergrund-Wiedergabeeinrichtung 15 zum Erzeugen einer Darstellung 19 des virtuellen Hintergrunds 21 in dem virtuellen Bildaufnahmestudio 13 somit zahlreiche Möglichkeiten bietet, das Erstellen einer Aufnahme zu erleichtern bzw. verbessern, besteht dabei die Problematik, dass die dreidimensionale Szene 43 auf der Wiedergabefläche 31 bzw. durch die flächige Anordnung der Bildelement-Lichtquellen 35 zumindest abschnittsweise in lediglich zwei Dimensionen wiedergegeben werden kann. Insbesondere bei Positionsänderungen der zugeordneten Kamera 23, beispielsweise während eines Kameraschwenks, werden die Objekte 91, 92, 93 und 94 des virtuellen Hintergrunds 21 daher von der Kamera 23 meist nicht so abgebildet, wie es ein Betrachter bei einer Abbildung eines dem virtuellen Hintergrund 21 entsprechenden realen Hintergrunds 20 erwarten würde (vgl. hierzu auch Fig. 8A bis 9F).

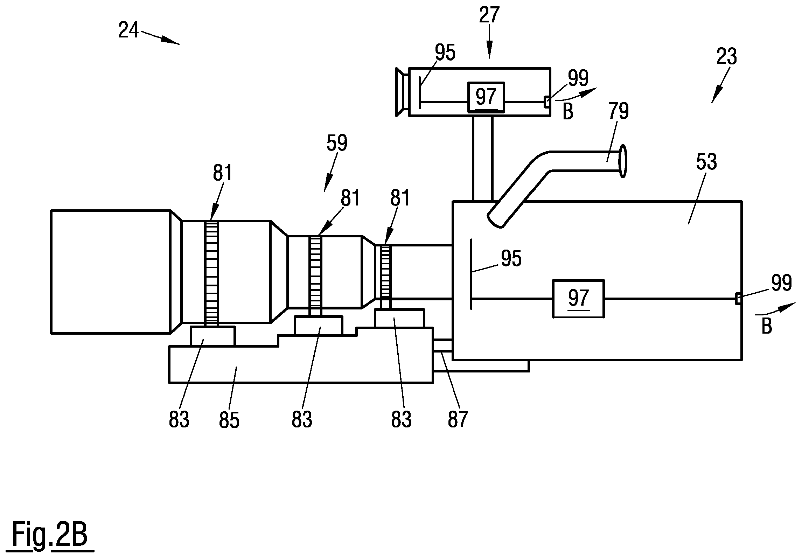

Um diesem Problem zu begegnen und solche Effekte korrigieren zu können, ist die Hintergrund-Wiedergabeeinrichtung 15 dazu ausgebildet, mehrere vorbestimmte optisch erfassbare Positionsmarker 29 wiederzugeben. Diese Positionsmarker 29 ermöglichen es dabei, eine Position A der zugeordneten Kamera 23, insbesondere relativ zu der Hintergrund-Wiedergabeeinrichtung 15 bzw. in einem bezüglich des Bildaufnahmestudios 13 und/oder der Hintergrund-Wiedergabeeinrichtung 15 festgelegten Koordinatensystem, zu ermitteln. Dies kann beispielsweise, wie nachstehend und insbesondere in Zusammenhang mit den Fig. 5 bis 7B sowie den Fig. 10A bis 10C noch näher erläutert ist, durch Identifizieren der Positionsmarker 29 bzw. abgebildeter Positionsmarker 41 in der von der Kamera 23 oder einer mit der Kamera 23 verbundenen Hilfskamera 27 (vgl. Fig. 2B) erzeugten Abbildung 39 erfolgen. In Kenntnis der Position A der zugeordneten Kamera 23 kann daraufhin beispielsweise die Darstellung 19 des virtuellen Hintergrunds 21 derart angepasst werden, dass die Darstellung 19 des virtuellen Hintergrunds 21 in der von der Kamera 23 erzeugten Abbildung 39 so abgebildet ist, wie ein Betrachter eine Abbildung des dem virtuellen Hintergrund 21 entsprechenden realen Hintergrunds 20 erwarten würde (vgl. Fig. 8A bis 9F).

Zum Erzeugen bzw. Wiedergeben der Positionsmarker 29 kann die Hintergrund-Wiedergabeeinrichtung 15, wie die Fig. 1A bis 1C zeigen, mehrere Positionsmarker-Lichtquellen 37 aufweisen. Insbesondere können diese Positionsmarker-Lichtquellen 37 ebenfalls als Leuchtdioden 38 ausgebildet sein, wobei auch ein indirektes Erzeugen der Positionsmarker 29 möglich ist. Dazu können die Positionsmarker-Lichtquellen 37 beispielsweise über Transmission oder Reflektion an der Hintergrund-Wiedergabeeinrichtung 15 erzeugt werden. Beispielsweise können die Positionsmarker-Lichtquellen 37 durch jeweilige Lichtaustrittsöffnungen von Lichtleitern gebildet sein, über welche die Lichtaustrittsöffnungen mit hinter der Wiedergabefläche 31 angeordneten lichterzeugenden Quellen, insbesondere mit jeweiligen Leuchtdioden, kommunizieren.

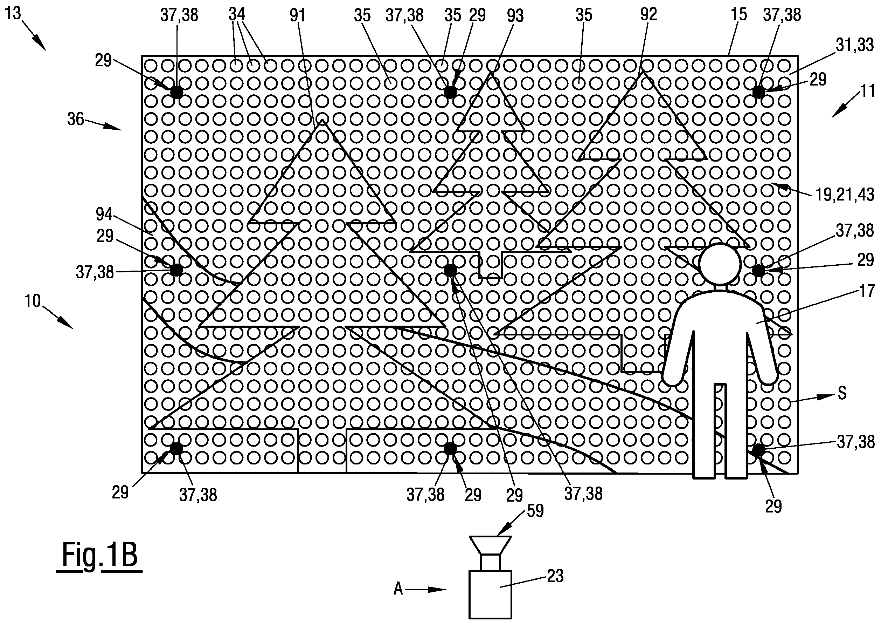

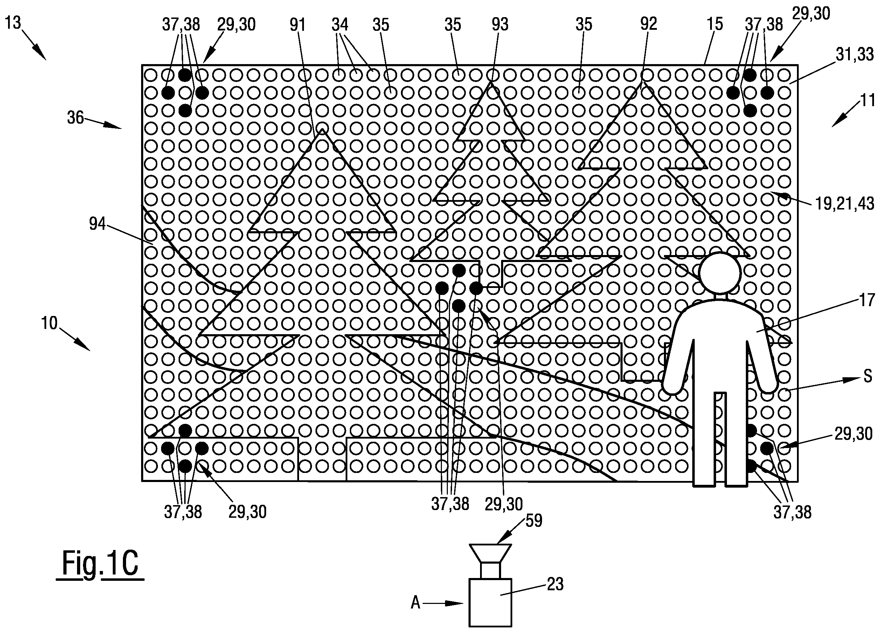

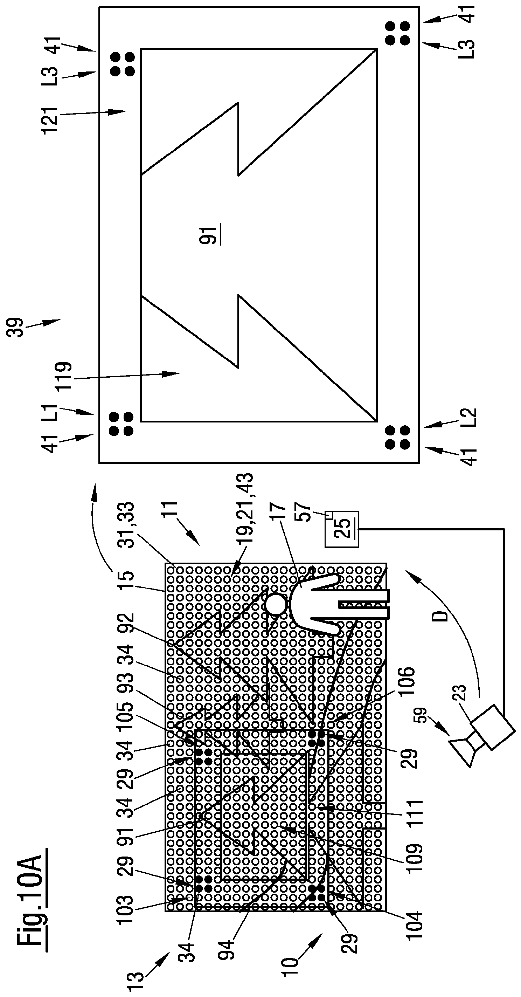

In der in Fig. 1A gezeigten Ausführungsform der Hintergrund-Wiedergabeeinrichtung umfasst die Vielzahl von Lichtquellen 34 somit eine Vielzahl von Bildelement-Lichtquellen 35 und mehrere Positionsmarker-Lichtquellen 37, wobei die Bildelement-Lichtquellen 35 zum Wiedergeben der Darstellung 19 des virtuellen Hintergrunds 21 vorgesehen sind, während die Positionsmarker-Lichtquellen 37 die Positionsmarker 29 erzeugen. Grundsätzlich kann es jedoch auch vorgesehen sein, dass die Vielzahl von Lichtquellen 34 gleichartig ausgebildet und jede Vielzahl von Lichtquellen 34 dazu ausgebildet ist, wahlweise einen Teil der Darstellung 19 des virtuellen Hintergrunds 21 oder einen Positionsmarker 29 bzw. einen Teil eines Positionsmarker 29 zu erzeugen. Dies wird insbesondere anhand der Fig. 10A bis 10C noch näher erläutert, jedoch ist die in Fig. 1A, 1B und 1C gezeigte Einteilung der Vielzahl von Lichtquellen 34 in Bildelement-Lichtquellen 35 und in Positionsmarker-Lichtquellen 37 auch bei den in diesen Figuren veranschaulichten Ausführungsformen der Hintergrund-Wiedergabeeinrichtung 15 nicht zwingend.

Die Positionsmarker 29 sind dabei dazu vorgesehen, eine Ermittlung der Position A der Kamera 23 zu ermöglichen, indem die Positionsmarker 29 optisch detektierbar und in einer Abbildung 39 von der Hintergrund-Wiedergabeeinrichtung 15 identifizierbar sind. Somit dienen die Positionsmarker 29 bzw. die Positionsmarker-Lichtquellen 37 ausschließlich zum Ermöglichen der Ermittlung der Position A der zugeordneten Kamera 23 und tragen nicht zu der Darstellung 19 des virtuellen Hintergrunds 21 bei. Vielmehr können sich die Positionsmarker 29 zumindest ausreichend deutlich von umgebenden Hintergrundbereichen 47, welche von den Bildelement-Lichtquellen 35 erzeugt werden, unterscheiden, um eine Identifikation der Positionsmarker 29 zu ermöglichen.

Um eine Identifikation der Positionsmarker 29 zu ermöglichen bzw. die Positionsmarker 29 in einer Abbildung 29 von der Darstellung des virtuellen Hintergrunds 21 unterscheiden zu können, kann es beispielsweise vorgesehen sein, dass die Positionsmarker-Lichtquellen 37 dazu ausgebildet sind, Licht teilweise oder vollständig in einem nicht-sichtbaren Wellenlängenbereich zu emittieren. Die Unterteilung von Licht in sichtbare und nicht-sichtbare Wellenlängenbereiche bezieht sich dabei auf die Wahrnehmung durch das menschliche Auge. Bei einer Emission in einem nicht-sichtbaren Wellenlängenbereich, insbesondere in einem infraroten und/oder einem ultravioletten Wellenlängenbereich, können die Positionsmarker 29 folglich durch einen geeigneten Bildsensor 95 der Kamera 23 bzw. der Hilfskamera 27 detektiert werden, um eine Ermittlung der Position A der Kamera 23 zu ermöglichen. Die Aufnahme der in dem Bildaufnahmestudio 13 aufzunehmenden Szene durch die zugeordnete Kamera 23 wird hingegen durch das Erzeugen der Positionsmarker 29 nicht beeinträchtigt und die in einem nicht-sichtbaren Wellenlängenbereich wiedergegebenen Positionsmarker 29 müssen nicht nachträglich aus der von der zugeordneten Kamera 23 erzeugten Abbildung 39 des sichtbaren Lichts entfernt werden.

Alternativ oder zusätzlich kann es vorgesehen sein, dass die Positionsmarker-Lichtquellen 37 dazu ausgebildet sind, Licht mit einem Emissionsspektrum zu emittieren, welches sich zumindest teilweise von Emissionsspektren der Bildelement-Lichtquellen 35 unterscheidet. Dabei können die Emissionsspektren der Positionsmarker-Lichtquellen 37 beispielsweise hin zu kurzen und/oder langen Wellenlängen über spektrale Endbereiche der Emissionsspektren der Bildelement-Lichtquellen 35 hinausgehen. Die Positionsmarker 29 können dadurch anhand von Signalen jeweiliger in Endbereichen der Emissionsspektren der Positionsmarker-Lichtquellen 37 sensitiver Sensorelemente 55 bzw. 61 des Bildsensors 95 der Kamera 23 bzw. der Hilfskamera 27 identifiziert werden. Beispielsweise können die Sensorelemente 55 bzw. 61 des jeweiligen Bildsensors 95 dazu mit einem Farbfiltermuster versehen sein, so dass lediglich einige der Sensorelemente 55 bzw. 61 in den jeweiligen Endbereichen der Emissionsspektren sensitiv sind und von den Positionsmarkern 29 generierte Signale von durch die Bildelement-Lichtquellen 35 generierten Signalen unterschieden werden können.

Grundsätzlich ist es jedoch auch möglich, dass die Positionsmarker 29 in einem sichtbaren Wellenlängenbereich und ohne insbesondere deutliche spektrale Unterschiede zu den Emissionsspektren der Bildelement-Lichtquellen 35 erzeugt werden. Solche Positionsmarker 29 können mittels der zugeordneten Kamera erfasst und beispielsweise in einer nachträglichen Bildbearbeitung bzw. während der Post-Production aus der von der Kamera 23 erzeugten Abbildung 39 entfernt werden. Alternativ oder zusätzlich können die Positionsmarker-Lichtquellen 37 und die Bildelement-Lichtquellen 35 beispielsweise alternierend oder intermittierend betrieben werden, so dass die Positionsmarker 29 lediglich in einzelnen Frames wiedergegeben werden und in den entsprechenden Abbildungen 39 detektierbar sein können. Dazu kann die Steuerung der Positionsmarker-Lichtquellen 37 und/oder der Bildelement-Lichtquellen 35 insbesondere mit der zugeordneten Kamera 23 synchronisiert sein, um eine Wiedergabe der Positionsmarker 29 in jeweiligen Frames zu ermöglichen. Insbesondere kann dabei eine Emissionszeit der Positionsmarker-Lichtquellen 37 geringer als eine Emissionszeit der Bildelement-Lichtquellen 35 sein, wobei die Positionsmarker 29 aufgrund der geringen Emissionszeit insbesondere für das menschliche Auge nicht wahrnehmbar sein können. Eine Störung eines Schauspielers durch das intermittierende Erzeugen der Positionsmarker 29 kann dadurch verhindert werden.

Wie Fig. 1A zeigt, können die Positionsmarker-Lichtquellen 37 beispielsweise innerhalb des regelmäßigen Rasters 36 der Bildelement-Lichtquellen 35 anstelle jeweiliger Bildelement-Lichtquellen 35 angeordnet sein. Hierdurch kann die Anzahl an Bildelement-Lichtquellen 35, die zur Darstellung 19 des virtuellen Hintergrunds 21 beitragen, lediglich geringfügig reduziert werden, da die Anzahl an Positionsmarker-Lichtquellen 37 deutlich geringer als die Anzahl an Bildelement-Lichtquellen 35 sein kann. Insofern kann ein solches Ersetzen einzelner bzw. einiger Bildelement-Lichtquellen 35 durch Positionsmarker-Lichtquellen 37 ohne eine merkliche Beeinträchtigung der Darstellung 19 des virtuellen Hintergrunds 21 erfolgen. Indem sowohl die Bildelement-Lichtquellen 35 als auch die Positionsmarker-Lichtquellen 37 dabei als Leuchtdioden 38 ausgebildet sein können, kann das Erzeugen der Positionsmarker 29 zudem ohne jeden konstruktiven Aufwand erreicht werden. Bei einer solchen Anordnung der Positionsmarker-Lichtquellen 37 können insbesondere einzelne ohnehin vorhandene Bildelement-Lichtquellen 35 als Positionsmarker-Lichtquellen 37 und nicht zum Erzeugen der Darstellung 19 des virtuellen Hintergrunds 21, sondern zum Wiedergeben der Positionsmarker 29 genutzt werden. Insofern können die Positionsmarker-Lichtquellen 37 und die Bildelement-Lichtquellen 35 insbesondere identisch ausgebildet sein und jede der Vielzahl von Lichtquellen 34 kann dazu ausgebildet sein, wahlweise einen Teil der Darstellung 19 des virtuellen Hintergrunds 21 oder einen Positionsmarker 29 bzw. einen Teil eines Positionsmarker 29 zu erzeugen. Dies kann bei einer grundsätzlich herkömmlichen Hintergrund-Wiedergabeeinrichtung 15 ein Bestimmen der Position A der zugeordneten Kamera 23 ermöglichen, ohne dass konstruktive Anpassungen an der Hintergrund-Wiedergabeeinrichtung 15 erforderlich sind.

Alternativ dazu können die Positionsmarker-Lichtquellen 37, wie Fig. 1B zeigt, in einem jeweiligen Zwischenraum zwischen mehreren der in dem regelmäßigen Raster 36 angeordneten Bildelement-Lichtquellen 35 angebracht sein. Bei einer solchen Anordnung geht das Anbringen der Positionsmarker-Lichtquellen 37 nicht mit einer Reduktion der Anzahl an Bildelement-Lichtquellen 37 einher, so dass die Anbringung der Positionsmarker-Lichtquellen 37 ohne jegliche Beeinträchtigung der Darstellung 19 des virtuellen Hintergrunds 21 mittels der Bildelement-Lichtquellen 35 erfolgen kann. Insbesondere bei einem Emittieren von Licht in einem nicht-sichtbaren Wellenlängenbereich durch die Positionsmarker-Lichtquellen 37 kann die Darstellung 19 des virtuellen Hintergrunds 21 durch die Hintergrund-Wiedergabeeinrichtung 15 somit in gleicher Weise wiedergegeben werden wie bei einer herkömmlichen Hintergrund-Wiedergabeeinrichtung ohne Positionsmarker. Die Positionsmarker-Lichtquellen 37 können dabei beispielsweise kleiner als die Bildelement-Lichtquellen 35 ausgebildet sein, um in ohnehin zwischen den Bildelement-Lichtquellen 35 vorhandene Zwischenräume, beispielsweise in einem Mittelpunkt eines von vier Bildelement-Lichtquellen 35 gebildeten Quadrats, eingesetzt werden zu können.

Während die Positionsmarker-Lichtquellen 37 in Fig. 1B beispielhaft als Leuchtdioden 38 dargestellt sind, kann es insbesondere bei einer solchen Anordnung der Positionsmarker-Lichtquellen 37 zwischen mehreren Bildelement-Lichtquellen 35 vorgesehen sein, dass die Positionsmarker-Lichtquellen 37 indirekt an der Wiedergabefläche 31 bzw. der Lichtquellen-Wand 33 erzeugt werden. Beispielsweise können die Positionsmarker-Lichtquellen 37 dabei als Lichtaustrittsöffnungen von Lichtleitern ausgebildet sein, mittels derer von einer oder mehreren hinter der Wiedergabefläche 31 bzw. der Lichtquellen-Wand 33 angeordneten Lichtquelle oder Lichtquellen erzeugtes Licht an die Lichtaustrittsöffnungen geleitet und von dort emittiert wird. Solche Lichtaustrittsöffnungen können dabei insbesondere eine geringere Fläche als die lichterzeugenden Lichtquellen, beispielsweise Leuchtdioden, aufweisen, so dass die Positionsmarker-Lichtquellen 37 mittels solcher Lichtleiter in kleinen Zwischenräume zwischen den Bildelement-Lichtquellen 35 angeordnet werden können und die Darstellung 19 des virtuellen Hintergrunds 21 mit einer unbeeinträchtigt hohen Dichte an Bildelement-Lichtquellen 37 und somit hochaufgelöst erzeugt werden kann.

Ferner können die Positionsmarker 29 beispielsweise in einem vorbestimmten Markierungsmuster 30 erzeugt werden, um eine vereinfachte Identifikation der Positionsmarker 29 in einer Abbildung 39 der Hintergrund-Wiedergabeeinrichtung 15 zu ermöglichen. Beispielhaft sind hierzu in Fig. 1C mit einem rautenförmigen Markierungsmuster 30 erzeugte Positionsmarker 29 gezeigt. Die einzelnen Positionsmarker 29 können folglich durch eine jeweilige Positionsmarker-Lichtquelle 37oder durch mehrere, hier beispielhaft vier, Positionsmarker-Lichtquellen 37 erzeugt werden. Alternativ zu einer solchen Rautenform sind beispielsweise auch Kreuze, konzentrische Kreise, sonstige Vielecke, insbesondere Dreiecke, Quadrate oder Sechsecke, oder andersartige Muster möglich. Ferner können die Markierungsmuster 30 einfarbig, mehrfarbig und/oder mit einem Farbverlauf bzw. einem Wellenlängenverlauf gebildet sein.

Insbesondere bei einer Emission von Licht im sichtbaren Wellenlängenbereich durch die Positionsmarker-Lichtquellen 37 können es derartige Markierungsmuster 30 ermöglichen, die Positionsmarker 29 in einer von der Kamera 23 erzeugten Abbildung 39 zu identifizieren und dadurch die Position A der Kamera 23 zu bestimmen. Dazu können beispielsweise Bildanalyseverfahren zum Einsatz kommen, welche zum Erkennen der jeweiligen Markierungsmuster 30 ausgebildet und/oder auf das Erkennen dieser Markierungsmuster 30 in einer Abbildung 39 trainiert sein können. Zusätzlich zu einer erleichterten Identifikation der Positionsmarker 29 zum Ermöglichen einer Ermittlung der Position A der zugeordneten Kamera 23 können die einfach zu identifizierenden Positionsmarker 29 auch unproblematisch aus der von der Kamera 23 erzeugten Abbildung 39 nachträglich entfernt werden, so dass die Positionsmarker 29 letztlich in dem präsentierten Foto oder der präsentierten Bewegtbildsequenz nicht mehr zu sehen sind. Beispielsweise können dazu Interpolationsverfahren basierend auf einer Kantendetektion vorgesehen sein. Grundsätzlich können die Positionsmarker 29 jedoch auch bei einem Erzeugen in einem nicht-sichtbaren Wellenlängenbereich als Markierungsmuster 30 wiedergegeben werden, um eine Identifikation in einer Abbildung 39 zu erleichtern und Fehlidentifikationen aufgrund einer etwaigen Hintergrundstrahlung auszuschließen. Folglich können die Positionsmarker 29 insbesondere als Markierungsmuster 30 dargestellt werden, wenn die Vielzahl von Lichtquellen 34 dazu ausgebildet ist, wahlweise einen Teil der Darstellung 19 des virtuellen Hintergrunds 21 oder einen Positionsmarker 29 bzw. einen Teil eines Positionsmarkers 29 wiederzugeben.

Während in Fig. 1C sämtliche der Positionsmarker 29 rautenförmig dargestellt sind, kann es auch vorgesehen sein, dass sich die Positionsmarker 29 bzw. die Markierungsmuster 30 voneinander unterscheiden. Insofern kann ein Satz von Markierungsmustern 30 in einem Speicher der Hintergrund-Wiedergabeeinrichtung 15 gespeichert sein, wobei die Positionsmarker 29 wahlweise als ein jeweiliges Markierungsmuster 30 aus dem Satz von Markierungsmustern 30 erzeugt werden können. Dadurch kann beispielsweise ein jeweiliger Positionsmarker 29 eindeutig in der von der Kamera 23 oder der Hilfskamera 27 erzeugten Abbildung 39 identifiziert werden. Zudem können beispielsweise Positionsmarker 29 in einem bestimmten Bereich der Hintergrund-Wiedergabeeinrichtung 15 mit einem zugeordneten Markierungsmuster 30 erzeugt werden, so dass anhand der jeweiligen, in der Abbildung 39 identifizierten Positionsmarker 29 auf ein Gesichtsfeld und/oder eine Ausrichtung der Kamera 23 geschlossen werden kann.

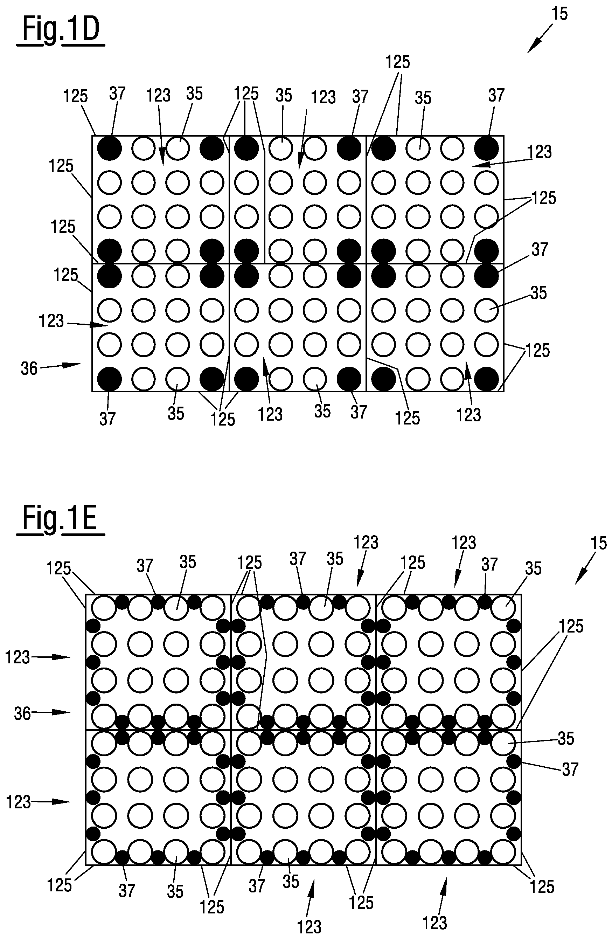

Die Fig. 1D und 1E zeigen eine jeweilige schematische Teilansicht von Ausführungsformen der Hintergrund-Wiedergabeeinrichtung 15, bei welchen die Hintergrund-Wiedergabeeinrichtung 15 mehrere Wiedergabemodule 123 aufweist. Die Wiedergabemodule 123 grenzen an seitlichen Rändern 125 aneinander an, um die Hintergrund-Wiedergabeeinrichtung 15 zu bilden und eine ununterbrochene Darstellung des virtuellen Hintergrunds 21 zu ermöglichen. Dazu sind die Wiedergabemodule 123 in einem regelmäßigen Raster, hier entlang von Zeilen und Spalten, angeordnet, so dass die Wiedergabemodule 123 eine im Wesentlichen lückenlose zweidimensionale Anordnung bilden. Die Wiedergabemodule 123 sind flach und bei den gezeigten Ausführungsformen als quadratische Paneele ausgebildet, die auch als Kacheln bezeichnet werden können. Grundsätzlich sind jedoch auch andere Formen der Wiedergabemodule 123 möglich, welche beispielsweise rechteckig oder vieleckig, insbesondere sechseckig, ausgebildet sein können.

Jedes der mehreren Wiedergabemodule 123 weist einen Teil der Vielzahl von Bildelement-Lichtquellen 35 auf, welche die Darstellung 19 des virtuellen Hintergrunds 21 erzeugen und in dem bereits beschriebenen regelmäßigen Raster 36 angeordnet sind (vgl. Fig. 1A bis 1C). Zudem sind an den seitlichen Rändern 125 der Wiedergabemodule 123 Positionsmarker-Lichtquellen 37 angeordnet, mittels derer die Positionsmarker 29 erzeugt werden können. Bei der in Fig. 1D gezeigten Ausführungsform sind die Positionsmarker-Lichtquellen 37, ähnlich wie in Fig. 1A, in dem regelmäßigen Raster 36 der Bildelement-Lichtquellen 35 angeordnet, so dass beispielsweise herkömmlicherweise als Bildelement-Lichtquellen 35 zum Erzeugen der Darstellung 19 des virtuellen Hintergrunds 21 an den seitlichen Rändern 125 der Wiedergabemodule 123 vorgesehene Lichtquellen als Positionsmarker-Lichtquellen 37 zum Erzeugen der Positionsmarker 29 genutzt werden können.

Bei der in Fig. 1E gezeigten Ausführungsform sind die Positionsmarker-Lichtquellen 37 ebenfalls an den seitlichen Rändern 125 der Wiedergabemodule 123, jedoch zwischen zwei in dem regelmäßigen Raster 36 angeordneten Bildelement-Lichtquellen 35 angebracht (vgl. auch Fig. 1B). Dazu können die Positionsmarker-Lichtquellen 37 insbesondere als Lichtaustrittsöffnungen von Lichtleitern ausgebildet sein, die einen geringeren Platzbedarf an den Wiedergabemodulen 123 als die beispielsweise als Leuchtdioden ausgebildeten Bildelement-Lichtquellen 35 aufweisen können. Dies kann es ermöglichen, bereits bestehende Hintergrund-Wiedergabeeinrichtungen 15 bzw. eine Hintergrund-Wiedergabeeinrichtung 15 bildende Wiedergabemodule 123 auf einfache Weise nachzurüsten, um mittels der an den seitlichen Rändern 125 der Wiedergabemodule 123 angebrachten Positionsmarker-Lichtquellen 37 Positionsmarker 29 erzeugen und die Position A der zugeordneten Kamera 23 ermitteln zu können.

Grundsätzlich können an verschiedenen Wiedergabemodulen 123 eine verschiedene oder eine gleiche Anzahl an Positionsmarker-Lichtquellen 27 vorgesehen sein. Es ist auch möglich, dass die Hintergrund-Wiedergabeeinrichtung 15 einzelne Wiedergabemodule 123 aufweist, an welchen keine Positionsmarker-Lichtquellen 37 angebracht sind. Zudem dienen die Darstellungen der Fig. 1D und 1E lediglich der prinzipiellen Veranschaulichung eines Aufbaus der Hintergrund-Wiedergabeeinrichtung 15 aus mehreren Wiedergabemodulen 123, wobei ein einzelnes Wiedergabemodul 123 insbesondere eine deutlich höhere Anzahl an Bildelement-Lichtquellen 25 aufweisen kann als in den Fig. 1D und 1E gezeigt ist. Ferner kann das Verhältnis zwischen Bildelement-Lichtquellen 35 und Positionsmarker-Lichtquellen 37 eines Wiedergabemoduls 123 und/oder der Hintergrund-Wiedergabeeinrichtung 15 größer sein als in den Fig. 1D und 1E gezeigt.

Grundsätzlich kann es vorgesehen sein, die Positionsmarker 29 mittels der zugeordneten Kamera 23 bzw. in einer von der zugeordneten Kamera 23 erzeugten Abbildung 39 zu detektieren, mittels derer auch die in dem Bildaufnahmestudio 13 aufzunehmende Szene aufgenommen wird. Alternativ dazu zeigt Fig. 2B ein Kamerasystem 24, welches, wie bereits erwähnt, zusätzlich zu der zugeordneten Kamera 23 bzw. der Hauptkamera 23 eine Hilfskamera 27 aufweist, die über eine Kopplungsstange 89 mit der Hauptkamera 23 verbunden ist bzw. verbunden werden kann. Die Hilfskamera 27 ist dabei in einer definierten Position relativ zu der Kamera 23 angeordnet und derart ausgerichtet, dass jeweilige Gesichtsfelder der Hauptkamera 23 und der Hilfskamera 27 einander im Wesentlichen entsprechen.

Insbesondere kann die Hilfskamera 27 dabei dazu ausgebildet sein, Licht in einem nicht-sichtbaren Wellenlängenbereich, insbesondere in einem infraroten und/oder einem ultravioletten Wellenlängenbereich zu detektieren, um in diesem Wellenlängenbereich erzeugte Positionsmarker 29 erfassen zu können. Dazu weist auch die Hilfskamera 27 einen Bildsensor 95 auf, welcher Hilfssensorelemente 55 umfassen kann, die für Licht in dem nicht-sichtbaren Wellenlängenbereich sensitiv sind (vgl. auch Fig. 3). Die Hilfskamera 27 weist ebenfalls eine Ausleseschaltung 97 auf, um die an dem Bildsensor 95 erzeugten Signale auslesen, verarbeiten und/oder digitalisieren zu können, wobei ein einer von der Hilfskamera 27 erzeugten Abbildung 39 entsprechender Bilddatensatz B an bzw. über einen Signalausgang 99 der Hilfskamera 27 ausgegeben werden kann.

Insbesondere kann es ein solches Kamerasystem 24 ermöglichen, mittels der Hilfskamera 27 in einem nicht-sichtbaren Wellenlängenbereich erzeugte Positionsmarker 29 zu detektieren und daraus, insbesondere anhand einer jeweiligen Lage L1 bzw. L2 der Positionsmarker 29 bzw. der abgebildeten Positionsmarker 41 in der von der Hilfskamera 27 erzeugten Abbildung 39, die Position A der Hauptkamera 23 zu bestimmen. Dazu kann beispielsweise zunächst die Position der Hilfskamera 27 bestimmt werden, wobei daraufhin aufgrund der definierten relativen Position der Hilfskamera 27 zu der Kamera 23 unmittelbar auf die Position A der Kamera 23 geschlossen werden kann. Alternativ dazu können die Lagen L1 und L2 der von der Hilfskamera 27 abgebildeten Positionsmarker 29 innerhalb der Abbildung 39 zunächst mittels einer Parallaxenkorrektur in jeweilige Lagen L1 und L2 überführt werden, welche bei einem Abbilden der Positionsmarker 29 an der Position A der Hauptkamera 23 zu erwarten wären, um anhand dieser Lagen L1 und L2 die Position A der Hauptkamera 23 unmittelbar zu ermitteln. Die Hilfskamera 27 kann beispielsweise mittels der Kopplungsstange 89 durch eine Dreh-, eine Steck- und/oder eine Dreh-SteckVerbindung mit dem Kamerakörper 53 der Kamera 23 verbunden sein, wobei das Erreichen der definierten Position beispielsweise optisch und/oder haptisch wahrnehmbar sein kann.

Grundsätzlich kann die Hilfskamera 27 bzw. deren Bildsensor 95 auch dazu ausgebildet sein, zumindest teilweise bzw. abschnittsweise Licht im sichtbaren Wellenlängenbereich zu detektieren. Beispielsweise kann der Bildsensor 95 der Hilfskamera 27 einzelne Hilfssensorelemente 55 aufweisen, welche im sichtbaren Wellenlängenbereich lichtempfindlich sind. Durch einen Vergleich der von der Hilfskamera 27 und der Hauptkamera 23 erzeugten Abbildungen 39 kann dabei beispielsweise eine relative Ausrichtung zwischen der Hilfskamera 27 und der Hauptkamera 23 ermittelt werden, wobei insbesondere relative Drehungen zwischen der Hilfskamera 27 und der Hauptkamera 23 erfasst und bei der Bestimmung der Position A der Kamera 23 berücksichtigt werden können.

Da die Hilfskamera 27 somit vornehmlich, insbesondere ausschließlich, zum Bestimmen der Position A der Kamera 23 vorgesehen sein kann, kann der Bildsensor 95 der Hilfskamera 27 insbesondere eine geringere örtliche Auflösung als der Bildsensor 95 der Hauptkamera 23 aufweisen. Folglich können an dem Bildsensor 95 der Hilfskamera 27 weniger Sensorelemente 55 pro Längeneinheit bzw. pro Flächeneinheit als an dem Bildsensor 95 der Hauptkamera 23 vorgesehen sein. Durch eine solche Hilfskamera 27 kann somit auf verhältnismäßig kostengünstige Weise eine Ermittlung der Position A der Kamera 23 ermöglicht werden, ohne dass Veränderungen an der Hauptkamera 23 oder deren Bildsensor 95 vorgenommen werden müssen. Ferner kann durch das Detektieren von in einem nicht-sichtbaren Wellenlängenbereich erzeugten Positionsmarkern 29 mittels der Hilfskamera 27 die Aufnahme in dem Bildaufnahmestudio 13 wie gewohnt mittels der unveränderten Hauptkamera 23 und ohne jegliche Beeinträchtigung erfolgen. Auch ein nachträgliches Entfernen der Positionsmarker 29 aus der von der Hauptkamera 23 erzeugten Abbildung 39 ist nicht erforderlich.

Fig. 3A zeigt eine Ausführungsform des Bildsensors 95 der zugeordneten Kamera 23, durch welche auch bei ausschließlichem Verwenden der Kamera 23 ein Detektieren von im nicht-sichtbaren Wellenlängenbereich erzeugten Positionsmarkern 29 ermöglicht werden kann. Der Bildsensor 95 weist dabei in einem zentralen Bereich einen Hauptsensorbereich 69 mit einer Vielzahl von Hauptsensorelementen 55 auf, die in mehreren Zeilen und Spalten angeordnet sind. Diese Hauptsensorelemente 55 können im sichtbaren Wellenlängenbereich sensitiv sein und dazu dienen, die Abbildung 39 der Darstellung 19 des virtuellen Hintergrunds 21 bzw. der in dem Bildaufnahmestudio 13 aufzunehmenden Szene zu erzeugen.

Bei anderen Ausführungsformen der zugeordneten Kamera 23 kann der jeweilige Bildsensor 95 insbesondere ähnlich zu diesem Hauptsensorbereich 69 mit in Zeilen und Spalten angeordneten Hauptsensorelementen 55 ausgebildet sein. Auch der Bildsensor 95 der Hilfskamera 27 kann dem Hauptsensorbereich 69 entsprechend ausgebildet sein, wobei die Hilfssensorelemente 55 dieses Bildsensors 95 in einem nicht-sichtbaren Wellenlängenbereich sensitiv sein können.

Der in Fig. 3A gezeigte Bildsensor 95 weist zusätzlich zu dem Hauptsensorbereich 69 jedoch einen Ergänzungssensorbereich 63 auf, welcher außerhalb des Hauptsensorbereichs 69 angeordnet ist und den Hauptsensorbereich 69 rahmenartig umgibt. Der Ergänzungssensorbereich 63 schließt sich somit an jeweilige außenseitige Ränder des Hauptsensorbereichs 69 an. Der Ergänzungssensorbereich 63 umfasst dabei eine Vielzahl von Ergänzungssensorelementen 61, die für nicht-sichtbare Wellenlängen lichtempfindlich sind.

Ein solcher Bildsensor 95 ermöglicht es folglich, anhand der Signale der Hauptsensorelemente 55 einen Bilddatensatz B zu erzeugen, welcher die Abbildung 39 der Darstellung 19 des virtuellen Hintergrunds 21 in für das menschliche Auge wahrnehmbaren bzw. sichtbaren Wellenlängen repräsentiert. Zudem kann jedoch anhand der Signale der Ergänzungssensorelemente 61 ein Bilddatensatz B erzeugt werden, in welchem die in einem nicht-sichtbaren Wellenlängenbereich erzeugten Positionsmarker 29 identifizierbar sind, um aus diesem Bilddatensatz B die Position A der Kamera 23 bestimmen zu können. Auch hierbei kann folglich eine Positionsermittlung erfolgen, ohne dass die Aufnahme in dem virtuellen Bildaufnahmestudio 13 durch das Erzeugen der Positionsmarker 29 beeinträchtigt wird. Grundsätzlich können die Daten der Hauptsensorelemente 55 und der Ergänzungssensorelemente 61 auch in einem gemeinsamen Bilddatensatz B zusammengefasst sein und/oder verarbeitet werden, insbesondere von einer gemeinsamen Ausleseschaltung 97.

Da auch die Ergänzungssensorelemente 61 lediglich dazu vorgesehen sind, die Position A der Kamera 23 zu bestimmen bzw. die Positionsmarker 29 zu detektieren, kann die räumliche Auflösung in dem Ergänzungssensorbereich 63 geringer als in dem Hauptsensorbereich 69 sein. Folglich können weniger Ergänzungssensorelemente 61 pro Längeneinheit bzw. pro Flächeneinheit als Hauptsensorelemente 55 pro Längeneinheit bzw. pro Flächeneinheit vorgesehen sein. Ferner kann sich der Ergänzungssensorbereich 63 unmittelbar an den Hauptsensorbereich 69 anschließen, wobei insbesondere herstellungsbedingt auch ein geringfügiger Abstand zwischen dem Ergänzungssensorbereich 63 und dem Hauptsensorbereich 69 bestehen kann. Die Ergänzungssensorelemente 61 können zudem größer bzw. mit einer größeren Fläche als die Hauptsensorelemente 55 ausgebildet sein.

Ferner können insbesondere die Hauptsensorelemente 55 - auch bei Ausführungsformen des Bildsensors 95, die ausschließlich einen Hauptsensorbereich 69 aufweisen - mit einem Farbfiltermuster (Color Filter Array, CFA) versehen sein, so dass die Hauptsensorelemente 55 mit unterschiedlichen spektralen Empfindlichkeiten ausgebildet sein können. Ein derartiges Farbfiltermuster kann dabei integraler Bestandteil des Bildsensors 95 sein. Es kann daher alternativ zu einer Ausbildung des Bildsensors 95 mit einem Hauptsensorbereich 69 und einem Ergänzungssensorbereich 63 auch vorgesehen sein, bei einem Bildsensor 95 ohne Ergänzungssensorbereich 63 einzelne Sensorelemente 55 mit einem vorbestimmten und sich von den anderen Sensorelementen 55 unterscheidenden Farbfiltermuster zu versehen, um beispielsweise in einem bestimmten Emissionsspektrum und/oder in einem nicht-sichtbaren Wellenlängenbereich erzeugte Positionsmarker 29 detektieren zu können. Wie bereits erläutert, können die Positionsmarker-Lichtquellen 37 beispielsweise dazu ausgebildet sein, Licht mit einem anderen Emissionsspektrum als die Bildelement-Lichtquellen 35 zu emittieren, so dass sich beispielsweise ein Emissionsspektrum der Positionsmarker-Lichtquellen 37 hin zu kurzen und/oder langen Wellenlängen über das Emissionsspektrum der Bildelement-Lichtquellen 35 hinaus erstrecken kann. Indem beispielsweise einzelne Sensorelemente 55 in den jeweiligen, lediglich von den Positionsmarker-Lichtquellen 37 erreichten Wellenlängenbereichen sensitiv sein können, können derart erzeugte Positionsmarker 29 ebenfalls auf einfache Weise in der von der zugeordneten Kamera 23 erzeugten Abbildung 39 identifiziert werden.

Fig. 3B zeigt eine weitere Ausführungsform eines Bildsensors 95 der zugeordneten Kamera 23, wobei dieser Bildsensor 95 einen in einem zentralen Bereich angeordneten rechteckigen Sensorbereich 113 aufweist, in welchem eine Vielzahl von lichtempfindlichen Sensorelementen 108 in Zeilen und Spalten angeordnet ist. Diese Sensorelemente 108 sind dabei dazu ausgebildet, einen ersten Teil von Bildelementsignalen zu erzeugen, welche einer Abbildung 119 eines Aufnahmegesichtsfelds 109 der zugeordneten Kamera 23 entsprechen und als Aufnahmebilddaten auszugeben (vgl. auch Fig. 10A bis 10C). Mittels der in dem rechteckigen Sensorbereich 113 angeordneten Sensorelemente 108, welche insbesondere im sichtbaren Wellenlängenbereich sensitiv sind, kann dabei eine Abbildung 119 in einem für die Aufnahme der Szene in dem Bildaufnahmestudio 13 vorgesehenen Format erstellt werden. Die von den Sensorelementen 108 erzeugten Aufnahmebilddaten können in der Folge beispielsweise dauerhaft in der zugeordneten Kamera 23 gespeichert oder an einen externen Rekorder ausgegeben und dort gespeichert werden und repräsentieren somit die letztlich gewünschte, von der zugeordneten Kamera 23 erzeugte Abbildung 119 des Aufnahmegesichtsfelds 109 der zugeordneten Kamera 23.

Zusätzlich zu den Sensorelementen 108 umfasst der in Fig. 3B gezeigte Bildsensor 95 jedoch weitere lichtempfindliche Sensorelemente 107, welche dazu ausgebildet sind, einen zweiten Teil von Bildelementsignalen zu erzeugen, welche einer Abbildung 121 eines zu dem Aufnahmegesichtsfeld 109 der zugeordneten Kamera 23 benachbarten Beobachtunggesichtsfelds 111 entsprechen (vgl. Fig. 10A bis 10C). Dabei weist der rechteckige Sensorbereich 113 beispielsweise vier Ränder 117 auf, wobei die Sensorelemente 107 benachbart zu diesen vier Rändern 117 angeordnet sind und den rechteckigen Sensorbereich 113 rahmenartig umgeben. Die Sensorelemente 107 bilden dabei eine Overscan-Bereich 115, welcher den rechteckigen Sensorbereich 113 gewissermaßen nach außen erweitert. Auch diese, außerhalb des rechteckigen Sensorbereichs 113 angeordneten Sensorelemente 107 können dabei insbesondere für sichtbare Wellenlängen sensitiv sein. Jedoch tragen die Bildelementsignale der Sensorelemente 107 nicht zu der Abbildung 119 des Aufnahmegesichtsfelds 109 der zugeordneten Kamera 23 bei. Die Sensorelemente 108 und die Sensorelemente 107 können, abgesehen von der spektralen Empfindlichkeit (etwa aufgrund eines RGB-Farbfiltermusters) zueinander gleichartig sein. Ein vorhandenes Farbfiltermuster kann sich über den rechteckigen Sensorbereich 113 hinaus in den Overscan-Bereich 115 fortsetzen.

Ein solcher Bildsensor 95 mit einem Overscan-Bereich 115 ermöglicht es dabei insbesondere, im sichtbaren Wellenlängenbereich erzeugte Positionsmarker 29 mittels der in dem Overscan-Bereich 115 angeordneten Sensorelemente 107 zu detektieren und in einer von den Sensorelementen 107 erzeugten Abbildung 121 des Beobachtungsgesichtsfelds 121 der zugeordneten Kamera 23 zu identifizieren, um anhand der Lagen L1, L2, L3 und L4 der Positionsmarker 29 innerhalb der Abbildung 121 des Beobachtungsgesichtsfelds 111 die Position A der zugeordneten Kamera 23 ermitteln zu können. Insbesondere kann die Position A der zugeordneten Kamera 23 dadurch anhand von Daten ermittelt werden, welche von der zugeordneten Kamera 23 selbst erzeugt werden, wobei die Aufnahme durch die im sichtbaren Wellenlängenbereich erzeugten Positionsmarker 29 nicht beeinträchtigt wird. Da die Positionsmarker 29 lediglich in dem Beobachtungsgesichtsfeld 111 der Kamera 23 liegen und mittels der Sensorelemente 107 abgebildet werden, sind die Positionsmarker 29 in der Abbildung 119 des Aufnahmegesichtsfelds 109 nicht zu sehen, so dass die Positionsmarker 29 insbesondere nicht nachträglich aus der Abbildung 119 entfernt werden müssen (vgl. Figuren 10A bis 10C).

Insbesondere kann die Einteilung der Sensorelemente 107 und 108 zu dem zentralen rechteckigen Sensorbereich 113, welcher die Abbildung des Aufnahmegesichtsfelds 109 der zugeordneten Kamera 23 erstellt, und zu dem Overscan-Bereich 115 variabel sein. Dabei kann der rechteckige Sensorbereich 113 insbesondere an verschiedene Formate anpassbare sein, so dass die zugeordnete Kamera 23 flexibel eingesetzt werden kann. Entsprechend können bei verschiedenen Aufnahmen eine verschiedene Anzahl von Sensorelementen 107 dem rechteckigen Sensorbereich 113 und eine verschiedene Anzahl von Sensorelementen 108 dem Overscan-Bereich 115 zugeordnet sein. Ferner kann es vorgesehen sein, dass an dem Sucher 79 der zugeordneten Kamera 23 lediglich das Aufnahmegesichtsfeld 109 der zugeordneten Kamera 23 angezeigt wird, oder es kann das gesamte Gesichtsfeld der Kamera 23 mit dem Aufnahmegesichtsfeld 109 sowie dem umgebenden Beobachtungsgesichtsfeld 111 an dem Sucher 79 angezeigt werden (vgl. auch Fig. 2A). Um an dem Sucher 79 eine Unterscheidung zwischen dem Aufnahmegesichtsfeld 109 der zugeordneten Kamera 23 und deren Beobachtungsgesichtsfeld 111 zu ermöglichen, kann das Aufnahmegesichtsfeld 109 insbesondere von einem Rahmen umgeben angezeigt werden (vgl. auch Fig. 10A bis 10C).

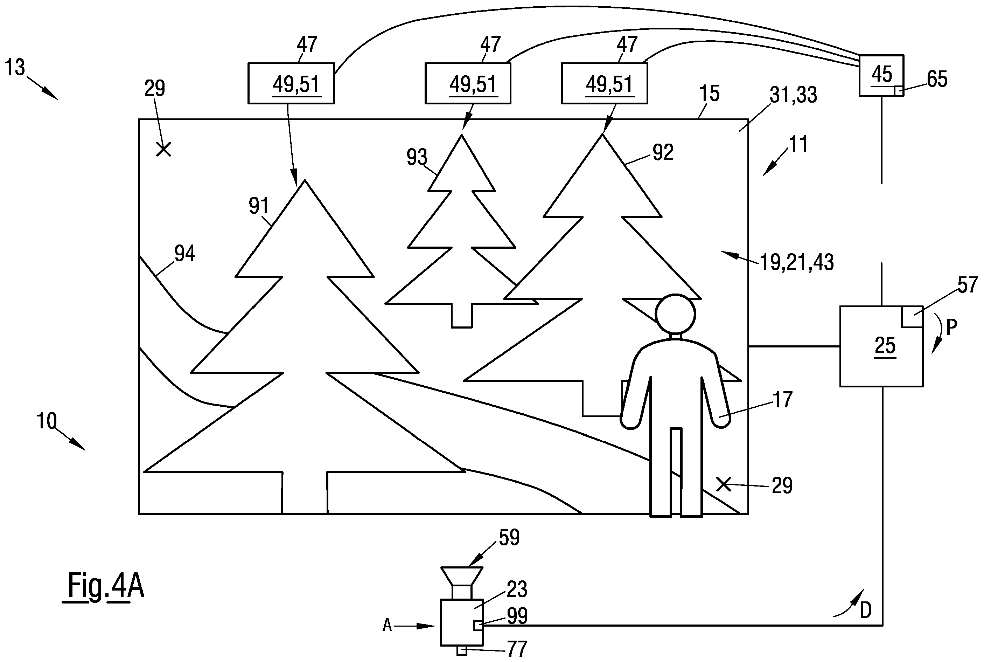

Die Fig. 4A bis 4D zeigen weitere schematische Darstellungen des virtuellen Bildaufnahmestudios 13 bzw. des Aufnahmesystems 10 zur Veranschaulichung der Ermittlung der Position A der Kamera 23 sowie der Steuerung der Hintergrund-Wiedergabeeinrichtung 15 in Abhängigkeit von der Position A der Kamera 73.

Dazu ist die in Fig. 4A gezeigte zugeordnete Kamera 23 zunächst über den Signalausgang 99 mit einer Steuereinrichtung 25 der Hintergrund-Wiedergabeeinrichtung 15 verbunden und dazu ausgebildet, Kameradaten D an die Steuereinrichtung 25 zu übermitteln. Die Übermittlung der Kameradaten D kann dabei beispielsweise kabelgebunden oder kabellos erfolgen, insbesondere über eine WiFi-/WLAN-Verbindung, eine Bluetooth-Verbindung und/oder eine Mobilfunk-Verbindung. Die Kameradaten D können insbesondere eine jeweilige Lage L1 bzw. L2 von abgebildeten Positionsmarkern 41 innerhalb der von Kamera 23 erzeugten Abbildung 39 repräsentieren (vgl. auch Fig. 5). Dabei können die Lagen L1 und L2 beispielsweise als jeweilige Koordinatentupel Y1 und Z1 bzw. Y2 und Z2 in den Kameradaten D enthalten sein, oder die Kameradaten D können den der Abbildung 39 entsprechenden Bilddatensatz B umfassen, aus welchem die Koordinaten Y1 und Z1 bzw. Y2 und Z2 der abgebildeten Positionsmarker 41 ermittelt werden können. Hierbei sind die Positionsmarker 29 und die zugeordnete Kamera 23 bzw. deren Bildsensor 95 somit derart aufeinander abgestimmt, dass die zugeordnete Kamera 23 die Positionsmarker 29 abbilden kann.

Die Steuereinrichtung 25 weist gemäß der Darstellung der Fig. 4A eine Positionsermittlung 57 auf, welche als integraler Bestandteil der Steuereinrichtung 25 gezeigt ist. Grundsätzlich kann die Positionsermittlungseinrichtung 57 jedoch auch als separate Einheit ausgebildet und mit der Steuereinrichtung 25 verbunden sein. Die Positionsermittlungseinrichtung 57 ist dazu ausgebildet, anhand der Lagen L1 und L2 der abgebildeten Positionsmarker 41 in der von der Kamera 23 erzeugten Abbildung 39 die Position A der Kamera 23 zu bestimmen und entsprechende Positionsdaten P an die Steuereinrichtung 25 bzw. die zur Steuerung der Hintergrund-Wiedergabeeinrichtung 15 vorgesehenen Komponenten der Steuereinrichtung 25 zu übermitteln. Dazu kann die Positionsermittlungseinrichtung 57 insbesondere einen Mikroprozessor, eine CPU und/oder eine GPU umfassen. Auch die Steuereinrichtung 25 kann einen Mikroprozessor, eine CPU und/oder eine GPU umfassen, wobei die Hardwarekomponenten der Positionsermittlungseinrichtung 57 und der Steuereinrichtung 25 einander bei einer Integration der Positionsermittlungseinrichtung 57 in die Steuereinrichtung 25 insbesondere entsprechen können.

Eine Möglichkeit, die Position A der Kamera 23 anhand der Lagen L1 und L2 der abgebildeten Positionsmarker 41 innerhalb der von der zugeordneten Kamera 23 erzeugten Abbildung 39 mittels der Positionsermittlungseinrichtung 57 zu ermitteln, wird nachfolgend unter Bezugnahme auf die Fig. 5 bis 7B erläutert. Die Positionsermittlung wird dabei beispielhaft für lediglich zwei Positionsmarker 29 erläutert, wobei grundsätzlich mehr als zwei Positionsmarker 29, insbesondere drei, vier, fünf, sechs, sieben, acht oder mehr als acht Positionsmarker 29, zum Ermitteln der Position A der zugeordneten Kamera 23 herangezogen werden können.

Um die Position A der Kamera 23 zu ermitteln, können zunächst die Lagen L1 und L2 der abgebildeten Positionsmarker 41 in der Abbildung 39 als jeweilige Koordinatentupel Y1 und Z1 bzw. Y2 und Z2 bestimmt werden. Die Abbildung 39 stellt insbesondere eine Projektion eines Frustums der Kamera 23 auf deren Bildsensor 95 dar. Das Bestimmen der Lagen L1 und L2 kann beispielsweise unmittelbar in der Kamera 23 erfolgen, so dass die Lagen L1 und L2 bzw. die Koordinatentupel Y1 und Z1 sowie Y2 und Z2 als Teil der bzw. als die Kameradaten D an die Steuereinrichtung 25 bzw. die Positionsermittlungseinrichtung 57 übermittelt werden können. Alternativ dazu können die Kameradaten D den von der Kamera 23 erzeugten, der Abbildung 39 entsprechenden Bilddatensatz B umfassen und die Positionsermittlungseinrichtung 57 kann dazu ausgebildet sein, die abgebildeten Positionsmarker 41 in dem der Abbildung 39 entsprechenden Bilddatensatz B zu identifizieren und deren Lagen L1 und L2 zu bestimmen. Dies kann beispielsweise mittels eines Bilderkennungsverfahrens bzw. eines Bildanalyseverfahrens erfolgen. Um eine solche Identifikation zu erleichtern, können die Positionsmarker 29 beispielsweise mit dem vorbestimmten Markierungsmuster 30 erzeugt werden (vgl. Fig. 1C). Die Koordinaten Y1, Y2, Z1 und Z2 können dabei insbesondere in einem zweidimensionalen Koordinatensystem innerhalb einer durch den Bildsensor 95 definierten Ebene angegeben sein bzw. bestimmt werden, wobei ein Mittelpunkt 96 des Bildsensors 95 den Ursprung dieses Koordinatensystems bilden kann.

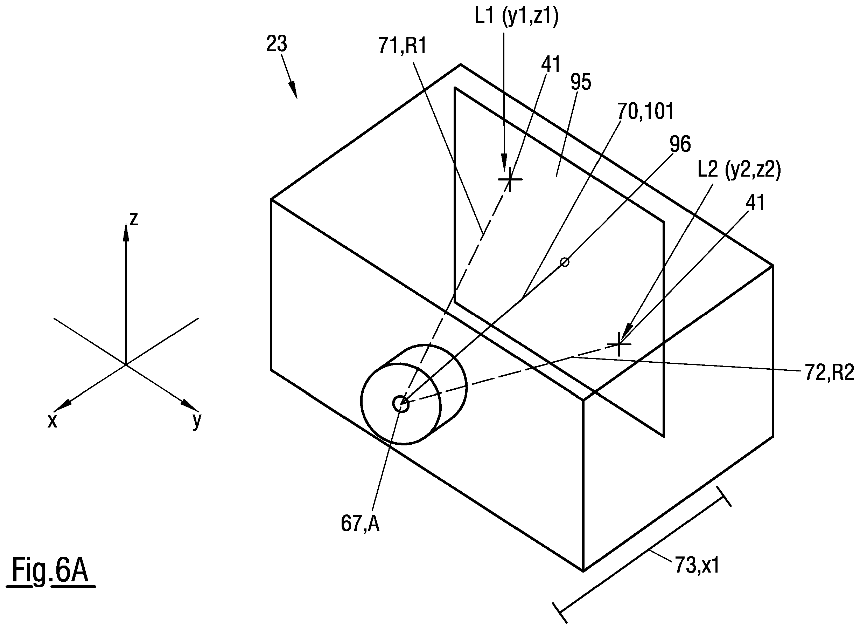

Wie Fig. 6A veranschaulicht, kann anhand der Lagen L1 und L2 der abgebildeten Positionsmarker 41 eine jeweilige Richtung R1 bzw. R2 bestimmt werden, in welcher die entsprechenden Positionsmarker 29 an der Hintergrund-Wiedergabeeinrichtung 15 relativ zu einer Lichteintrittsöffnung 67, welche die Position A der Kamera 23 repräsentiert, angeordnet sind. Hier ist die Kamera 23 vereinfachend lediglich mit einer Lichteintrittsöffnung 67 dargestellt, wobei die Kamera 23 und auch die Hilfskamera 27 grundsätzlich verschiedene optische Elemente wie Linsen, Spiegel, Reflektoren und/oder Filter umfassen können. Um ein solches komplexeres optisches System der Kamera 23 bei der Ermittlung deren Position A im Raum berücksichtigen zu können, kann die Positionsermittlungseinrichtung 57 insbesondere dazu ausgebildet sein, Informationen über das optische System zu empfangen und bei der Ermittlung der Position A der Kamera 23 heranzuziehen. Insbesondere können Einstellungen des optischen Systems, etwa eine Einstellung einer Fokuslage, einer Brennweite, eines Zoom-Faktors und/oder einer Blendenöffnung (Irisblendenöffnung), als Teil der Kameradaten D in Echtzeit an die Positionsermittlungseinrichtung 57 übertragen und bei der Ermittlung der Position der zugeordneten Kamera 23 und insbesondere der Richtungen R1 und R2 berücksichtigt werden. Derartige Einstellungen können insbesondere ein Frustum der Kamera 23 beeinflussen, so dass die Lagen L1 und L2 der abgebildeten Positionsmarker 41 sowohl von der Position A der Kamera 23 als auch den Einstellungen des optischen Systems abhängen können. Die Berücksichtigung der Einstellung des optischen Systems in Echtzeit kann es somit ermöglichen, die Position A der Kamera 23 auch bei sich während einer Aufnahme verändernden Einstellungen des optischen Systems zuverlässig bestimmen zu können.

Auf dem Bildsensor 95 sind in den Fig. 6A bis 7B ferner lediglich die abgebildeten Positionsmarker 41 markiert. Während der Bildsensor 95 der Kamera 23 grundsätzlich auch die Darstellung 19 des virtuellen Hintergrunds 21 abbildet, können insbesondere bei einer Verwendung der Hilfskamera 27 zum Ermitteln der Position A der Kamera 23 und/oder einem Erzeugen der Positionsmarker 29 in einem nicht-sichtbaren Wellenlängenbereich auf dem entsprechenden Bildsensor 95 gegebenenfalls tatsächlich lediglich die Positionsmarker 29 abgebildet werden.

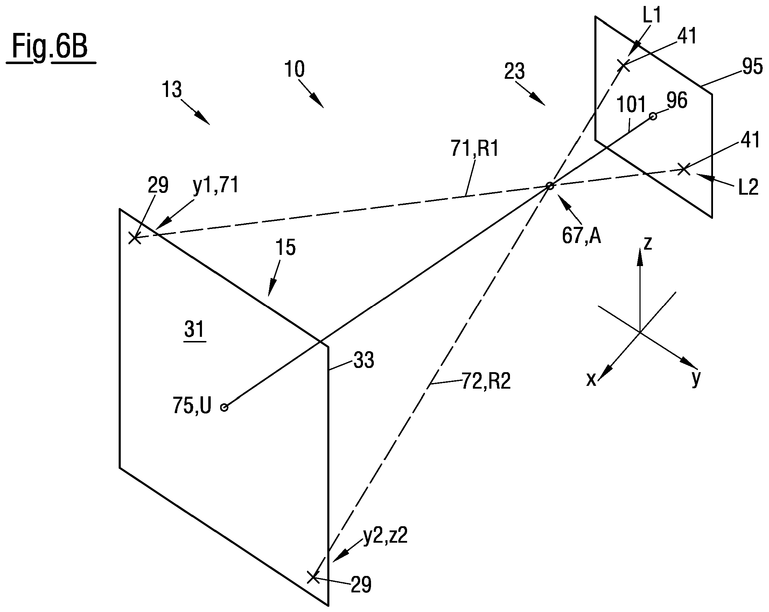

Um die Richtungen R1 und R2 zu bestimmen, können insbesondere jeweilige Mittelpunktstrahlen 71 und 72, welche ausgehend von den Positionsmarkern 29 geradlinig durch die Lichteintrittsöffnung 67 eintreten und auf dem Bildsensor 95 auftreffen, mit einem auf den Mittelpunkt 96 des Bildsensors 95 auftreffenden Mittelpunktstrahl 70 bzw. der optischen Achse 101 der Kamera 23 verglichen werden (vgl. auch Fig. 6B bis 7B). Grundsätzlich verlaufen solche Mittelpunktstrahlen 70, 71 und 72 geradlinig durch den Mittelpunkt des optischen Systems der Kamera 23, welcher hier vereinfachend als die Lichteintrittsöffnung 67 dargestellt ist. Auch bei einer komplexeren Ausbildung der Kamera 23, insbesondere mit einem Linsensystem, kann ein solcher Mittelpunkt des optischen Systems, insbesondere bei einer Berücksichtigung von Informationen über das optische System, jedoch bestimmt und bei dem Ermitteln der Richtungen R1 und R2 berücksichtigt werden.

Der Abstand 73 zwischen der Lichteintrittsöffnung 67 bzw. eine Mittelpunkt des optischen Systems der Kamera 23 und dem Bildsensor 95 kann dabei als eine Koordinate X1 in einen bezüglich der Kamera 23 definierten Koordinatensystem x, y und z bekannt sein. Dabei können die y- und die z-Achse des Koordinatensystem beispielsweise in einer durch den Bildsensor 95 definierten Ebene verlaufen, während die x-Achse der optischen Achse 101 der Kamera 23 (bzw. der Hilfskamera 27 bei anderen Ausführungsformen) entsprechen kann. Die Richtungen R1 und R2 ergeben sich somit aus den Lagen L1 und L2 der abgebildeten Positionsmarker 41 als jeweilige Vektoren R1 = (X1, - Y1, - Z1) und R2 = (X1, - Y2, - Z2).

Wie Fig. 6B veranschaulicht, kann daraufhin die Position A der Kamera 23 in einem bezüglich der Hintergrund-Wiedergabeeinrichtung 15 bzw. des Bildaufnahmestudios 13 definierten Koordinatensystem x, y und z berechnet werden. Dabei kann dieses Koordinatensystem x, y, z beispielsweise derart definiert sein, dass der Ursprung U im Mittelpunkt der Wiedergabefläche 31 der Hintergrund-Wiedergabeeinrichtung 15 liegt.

Um die Position A der zugeordneten Kamera 23 als dreidimensionale Position mit x-, y- und z-Koordinaten zu ermitteln, kann die Positionsermittlungseinrichtung 57 dazu ausgebildet sein, die Position A als Schnittpunkt zweier von den Positionsmarkern 29 entlang der ermittelten Richtungen R1 und R2 ausgehender und den Mittelpunktstrahlen 71 und 72 entsprechender Geraden 71 und 72 zu berechnen. Dabei können die Koordinaten Y1 und Z1 bzw. Y2 und Z2 der Positionsmarker 29 in dem bezüglich der Hintergrund-Wiedergabeeinrichtung 15 definierten Koordinatensystem x, y und z bekannt sein, so dass zum Ermitteln der Position der Kamera 23 die von der Position (0, Y1, Z1) in Richtung - (Minus) R1 ausgehende Gerade 71 mit der von der Position (0, Y2, Z2) Richtung - (Minus) R2 ausgehenden Gerade 72 geschnitten werden kann.

Während die Position A der Kamera 23 grundsätzlich als Schnittpunkt der beiden Geraden 71 und 72 ermittelt werden kann, können die ermittelten Geraden 71 und 72 beispielsweise aufgrund von Messfehlern in der Ermittlung der Lagen L1 und L2 der abgebildeten Positionsmarker 41 windschief zueinander verlaufen, wobei die Positionsermittlungseinrichtung 57 dabei dazu ausgebildet sein kann, die Position A der Kamera 23 als den Punkt zu bestimmen, bei welchem die beiden Geraden 71 und 72 den geringsten Abstand zueinander aufweisen. Dazu kann die Positionsermittlungseinrichtung 57 beispielsweise zum Durchführen von Regressionsverfahren ausgebildet sein, insbesondere bei einem Verwenden von mehr als zwei Positionsmarkern 29 zum Ermitteln der Position A der zugeordneten Kamera 23. Alternativ oder zusätzlich dazu kann die Positionsermittlungseinrichtung 57 auch dazu ausgebildet sein, die Position A der Kamera 23 durch Triangulationsverfahren zu bestimmen, wozu beispielsweise der Abstand zwischen den Positionsmarkern 29 als Basislänge verwendet und aus den Richtungen R1 und R2 jeweilige Winkel zwischen den Mittelpunktstrahlen 71 und 72 und der optischen Achse 101 der Kamera 23 bestimmt werden können.

Ferner kann es, alternativ zu einer Berechnung der Position A der zugeordneten Kamera 23, vorgesehen sein, dass die Positionsermittlungseinrichtung 57 dazu ausgebildet ist, die Position A der zugeordneten Kamera 23 in Abhängigkeit von den Lagen L1 und L2 der abgebildeten Positionsmarker 41 innerhalb der Abbildung 39 aus einer Nachschlagetabelle auszulesen. Dazu kann die Steuereinrichtung 25 bzw. die Positionsermittlungseinrichtung 57 insbesondere mit einem Speicher 45 verbunden sein, in welchem derartige Nachschlagetabelle gespeichert sein können (vgl. Fig. 4A bis 4D).

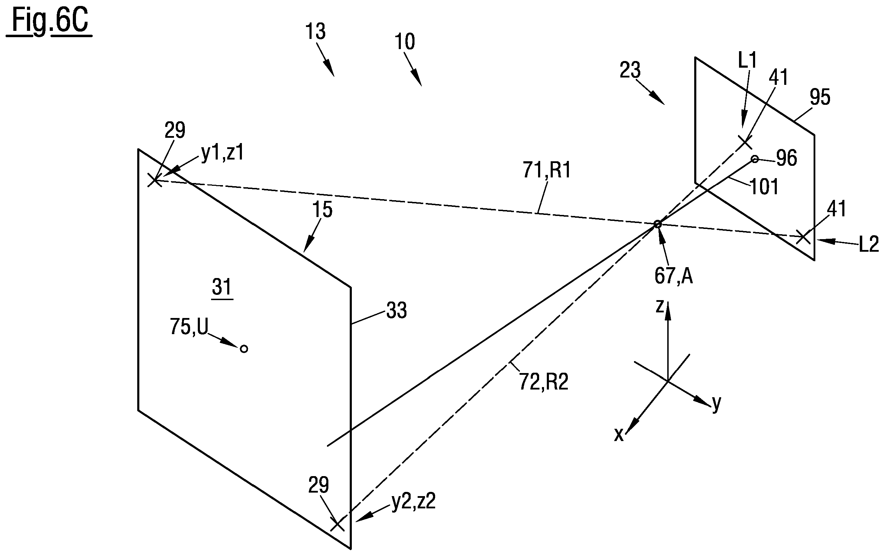

Während der Mittelpunkt 75 der Hintergrund-Wiedergabeeinrichtung 15 in den Fig. 6A und 6B ausgehend von dem Mittelpunkt 96 des Bildsensors 95 der zugeordneten Kamera 23 entlang der optischen Achse 101 der Kamera 23 ausgerichtet ist, veranschaulicht Fig. 6C die Ermittlung der Position A der Kamera 67 nach einer Verschiebung der Kamera 23 entlang der y-Achse in dem bezüglich der Hintergrund-Wiedergabeeinrichtung 15 festgelegten Koordinatensystem x, y und z. Im Vergleich zu den Fig. 6A und 6B werden die Positionsmarker 29 bei anderen Lagen L1 und L2 abgebildet, so dass entsprechend andere Richtungen R1 und R2 ermittelt werden können. Wiederum kann durch Schneiden jeweiliger, von den Positionsmarkern 29 entlang der Richtungen R1 bzw. R2 ausgehender Geraden 71 und 72 die Position A der zugeordneten Kamera 23 ermittelt werden.

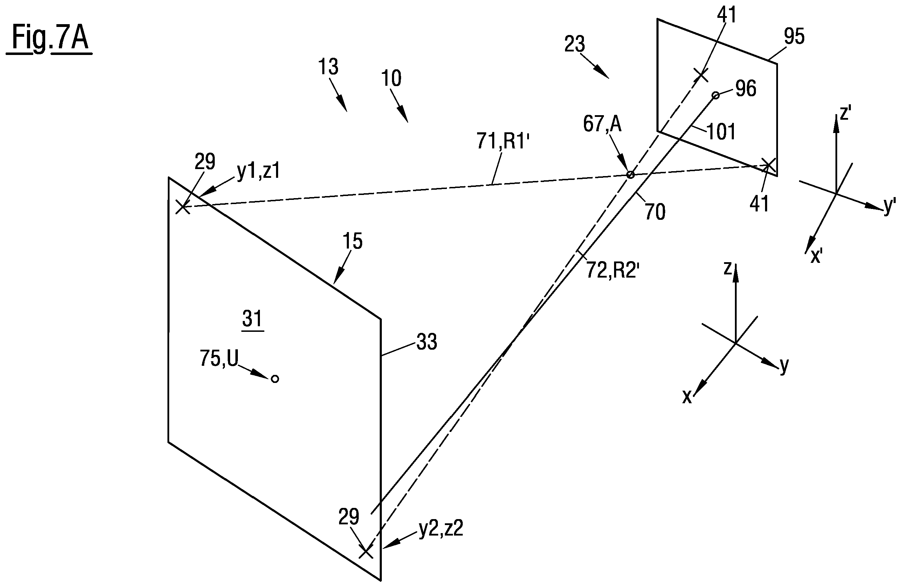

In den Fig. 6A bis 6C ist der Bildsensor 95 der Kamera 23 parallel zu der Wiedergabefläche 31 der Hintergrund-Wiedergabeeinrichtung 15 ausgerichtet, so dass die in dem bezüglich der Kamera 23 bzw. des Bildsensors 95 definierten Koordinatensystem x, y, z bestimmten Richtungen R1 und R2 unmittelbar in das bezüglich der Hintergrund-Wiedergabeeinrichtung 15 bzw. des Bildaufnahmestudios 13 definierte Koordinatensystem x, y, z übertragen werden können. Fig. 7A veranschaulicht hingegen eine Situation, in welcher die Kamera 23 bzw. der Bildsensor 95 relativ zu der Hintergrund-Wiedergabeeinrichtung 15 bzw. der Wiedergabefläche 31 um die z-Achse gedreht ist. Insofern verlaufen Achsen, hier die x'-Achse und die x-Achse, des bezüglich der Kamera 23 definierten Koordinatensystems x', y' und z' und des bezüglich der Hintergrund-Wiedergabeeinrichtung 15 bzw. des Bildaufnahmestudios definierten Koordinatensystems x, y und z, anders als in den Fig. 6A bis 6C, nicht parallel zueinander. Die in dem Koordinatensystem x', y' und z' ermittelten Richtungen R1 und R2 können daher nicht ohne weiteres genutzt werden, um die Position A der Kamera 23 in dem Koordinatensystem x, y, z zu berechnen.

Um solche Drehungen der Kamera 23 berücksichtigen und deren Position A dennoch ermitteln zu können, weist die Kamera 23, wie Fig. 4A zeigt, eine Messeinrichtung 77 auf, welche dazu ausgebildet ist, die Ausrichtung der zugeordneten Kamera 23 und insbesondere etwaige Drehstellungen bzw. Kippstellungen der Kamera 23 zu bestimmen. Dazu kann die Messeinrichtung 77 beispielsweise einen Inkrementaldrehgeber und/oder einen statischen Beschleunigungssensor aufweisen. Die Ausrichtung der Kamera 23 kann als Teil der Kameradaten D an die Steuereinrichtung 25 bzw. die Positionsermittlungseinrichtung 57 übermittelt werden, so dass die Position A der zugeordneten Kamera 23 unter Berücksichtigung einer solchen Drehung und in dem bezüglich der Hintergrund-Wiedergabeeinrichtung 15 bzw. des Bildaufnahmestudios 13 definierten Koordinatensystem x, y und z ermittelt werden kann. Grundsätzlich kann es alternativ zu einem Bestimmen der Drehstellungen oder Kippstellungen der zugeordneten Kamera 23 mittels einer Messeinrichtung 77 auch vorgesehen sein, die Drehstellungen oder Kippstellungen anhand der Lagen L1 und L2 der abgebildeten Positionsmarker 41 innerhalb der Abbildung 39 zu bestimmen, wozu jedoch eine größere Anzahl abgebildeter Positionsmarker 41 als hier beispielhaft gezeigt erforderlich ist.

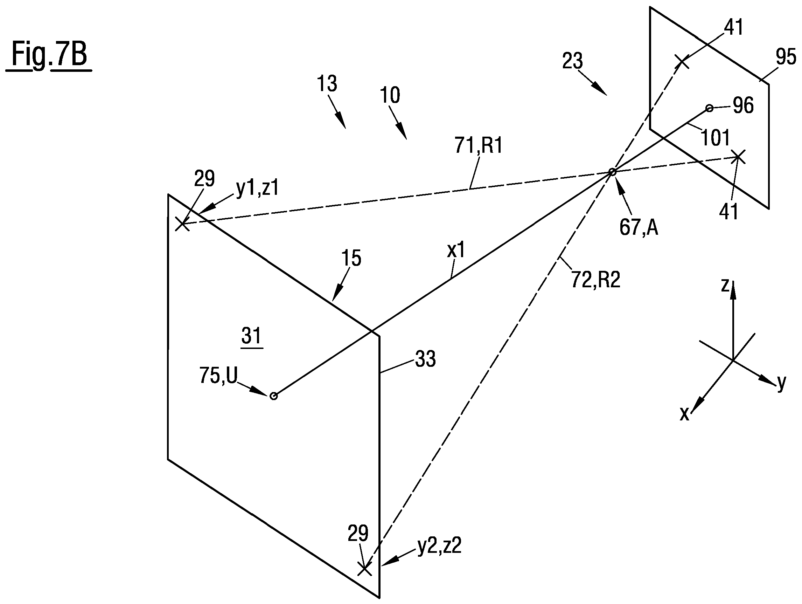

Um die Position A der Kamera 23 in dem Koordinatensystem x, y, z bestimmen zu können, können die in dem dazu gedrehten Koordinatensystem x', y' und z' bestimmten Richtungen R1' und R2' beispielsweise durch Multiplikation mit einer Drehmatrix in das bezüglich der Hintergrund-Wiedergabeeinrichtung 15 bzw. des Bildaufnahmestudios 13 definierte Koordinatensystem x, y, z überführt werden. Gewissermaßen ergibt sich dadurch rechnerisch eine in Fig. 7B gezeigte Situation, in welcher der Bildsensor 95 parallel zu der Wiedergabefläche 31 ausgerichtet ist. Durch Schneiden der Geraden 70 und 71, welche entlang der in das Koordinatensystem x, y, z transformierten Richtungen R1 und R2 verlaufen, kann entsprechend die Position A der Kamera 23 in diesem Koordinatensystem x, y, z ermittelt werden.

Während der Ermittlung der Position A der zugeordneten Kamera 23 mittels der Positionsermittlungseinrichtung 57 derartige geometrische Überlegungen zugrunde liegen können, kann es grundsätzlich vorgesehen sein, dass die Positionsermittlungseinrichtung 57 dazu ausgebildet ist, sich aus diesen Überlegungen ergebende Gleichungssysteme zu lösen. Diese können beispielsweise als Rechenvorschriften, insbesondere in bereits möglichst weit gelöster Form, in dem Speicher 45 gespeichert sein. Dabei können in solche Rechenvorschriften insbesondere die Lagen L1 und L2 der abgebildeten Positionsmarker 41 als Parameter einsetzbar sein, wobei die Position A der Kamera 23 daraufhin durch einen oder mehrere Rechenschritte von der Positionsermittlungseinrichtung 57 ermittelt werden kann.

Ferner kann die Steuereinrichtung 25 dazu ausgebildet sein, Positionen 103,104,105 und 106 der Positionsmarker 29 an der Hintergrund-Wiedergabeeinrichtung 15 in Abhängigkeit von den Kameradaten D zu verändern. Insbesondere kann die Steuereinrichtung 25 dabei dazu ausgebildet sein, die Positionen 103,104,105 und 106 der Positionsmarker 29 an der Hintergrund-Wiedergabeeinrichtung 15 in Abhängigkeit von den Lagen L1, L2, L3 und L4 der Positionsmarker 29 innerhalb der von der zugeordneten Kamera 23 erzeugten Abbildung 39 zu verändern. Dabei können die Positionen 103,104,105 und 106 der Positionsmarker 29 insbesondere während der Aufnahme derart verändert werden, dass die Positionsmarker 29 dem Gesichtsfeld der zugeordneten Kamera 23 nachgeführt werden, so dass die Positionsmarker 29 stets von der zugeordneten Kamera 23 abgebildet werden können, um eine Ermittlung der Position A der Kamera 23 zu ermöglichen (vgl. Fig. 10A bis 10C).

In den Fig. 10A bis 10C ist eine solche Steuerung der Hintergrund-Wiedergabeeinrichtung 15 während eines Kameraschwenks von dem Objekt 91 des virtuellen Hintergrunds 21 auf den Schauspieler 17 veranschaulicht, wobei die zugeordnete Kamera 23 eine Bewegtbildsequenz mit mehreren Abbildungen 39 erzeugt bzw. aufnimmt. Dabei weist die zugeordnete Kamera 23 insbesondere den in Fig. 3B veranschaulichten Bildsensor 95 mit einem rechteckigen Sensorbereich 113 zum Abbilden eines Aufnahmegesichtsfelds 109 der zugeordneten Kamera 23 sowie einem den rechteckigen Sensorbereich 113 umgebenden Overscan-Bereich 115 zum Abbilden eines außerhalb des Aufnahmegesichtsfelds 109 der zugeordneten Kamera 23 liegenden Beobachtungsgesichtsfelds 111. Die von der zugeordneten Kamera 23 erzeugte Abbildung 39 umfasst somit eine Abbildung 119 des Aufnahmegesichtsfelds 109, in welcher insbesondere die aufzunehmende Szene in einem vorgesehenen Format abgebildet ist. Insbesondere kann dabei ausschließlich diese Abbildung 119 dauerhaft in der Kamera 23 oder einem mit der Kamera 23 verbundenen, nicht gezeigten Rekorder gespeichert werden. Zusätzlich wird jedoch mittels der Sensorelemente 107 eine Abbildung 121 des Beobachtungsgesichtsfelds 111 der zugeordneten Kamera 23 erzeugt, innerhalb welcher die Positionsmarker 29 detektiert werden können, um anhand deren Lagen L1, L2, L3 und L4 die Position A der zugeordneten Kamera 23 mittels der Positionsermittlungseinrichtung 57 bestimmen zu können.

Wie Fig. 10A zeigt, sind die Positionsmarker 29 zu Beginn des Kameraschwenks an jeweiligen Positionen 103,104,105 und 106 an der Hintergrund-Wiedergabeeinrichtung 15 angeordnet. Dabei liegen die Positionsmarker 29 innerhalb des Beobachtungsgesichtsfelds 111 der zugeordneten Kamera 23, jedoch nicht innerhalb des Aufnahmegesichtsfelds 109. Folglich trifft an den Positionen 103,104,105 und 106 von jeweiligen Lichtquellen 34, welche die Positionsmarker 29 erzeugen, emittiertes Licht auf die Sensorelemente 107 des Overscan-Bereichs 115 des Bildsensors 95, so dass die Positionsmarker 29 in der Abbildung 121 des Beobachtungsgesichtsfelds 111, nicht jedoch in der Abbildung 119 des Aufnahmegesichtsfelds 109 detektiert werden. Anhand der von der zugeordneten Kamera 23 übermittelten Kameradaten D bzw. der Lagen L1, L2, L3 und L4 der abgebildeten Positionsmarker 41 in der Abbildung 121 kann sodann, wie vorstehend erläutert, die Position A der zugeordneten Kamera 23 im Raum von der Positionsermittlungseinrichtung 57 ermittelt werden. Hierbei sind in den Fig. 10A bis 10C in den jeweiligen Abbildungen 121 des Beobachtungsgesichtsfelds 111 der zugeordneten Kamera 23 lediglich die abgebildeten Positionsmarker 41 dargestellt, während in den Abbildungen 21 grundsätzlich auch innerhalb des Beobachtungsgesichtsfelds 111 liegende Teil der Darstellung 19 des virtuellen Hintergrunds 21 bzw. des realen Motivs 17 abgebildet sein kann.

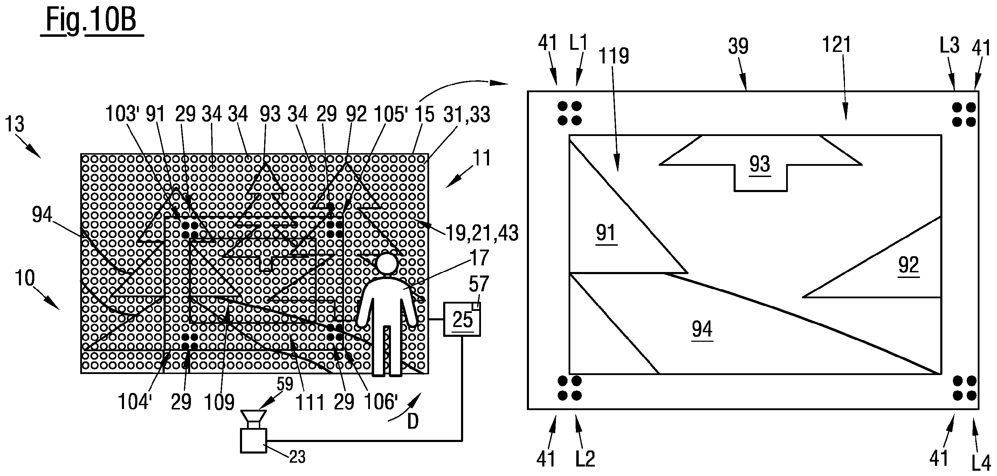

Indem die Steuereinrichtung 25 nun dazu ausgebildet ist, die Positionen 103,104,105 und 106 der Positionsmarker 29 an der Hintergrund-Wiedergabeeinrichtung 15 in Abhängigkeit von den Kameradaten D zu verändern, können die Positionsmarker 29 insbesondere dem Beobachtungsgesichtsfeld 111 der zugeordneten Kamera 23 nachgeführt werden. Wie Fig. 10B zeigt, verändern sich das Gesichtsfeld der zugeordneten Kamera 23 und somit deren Aufnahmegesichtsfeld 109 und Beobachtungsgesichtsfeld 111 während des Kameraschwenks. Aufgrund dieser Bewegung der Kamera 23 verändern sich auch grundsätzlich die Lagen L1, L2, L3 und L4 innerhalb der Abbildung 121. Die Steuereinrichtung 25 kann dabei die Positionen 103,104,105 und 106 der Positionsmarker 29, wie in Fig. 10A gezeigt, in Abhängigkeit von den Kameradaten D derart verändern, dass die an den Positionen 103', 104', 105' und 106' angeordneten Positionsmarker 29 bei der in Fig. 10B gezeigten Ausrichtung der zugeordneten Kamera 23 wiederum in dem Beobachtungsgesichtsfeld 111, nicht jedoch in dem Aufnahmegesichtsfeld 109 der zugeordneten Kamera 23 liegen. Folglich können die Positionsmarker 29 auch bei der geänderten Ausrichtung der zugeordneten Kamera 23 von den Sensorelementen 107 des Overscan-Bereichs 115 des Bildsensors 95 detektiert werden (vgl. Fig. 3B).

Um die Positionsmarker 29 dem Gesichtsfeld bzw. dem Beobachtungsgesichtsfeld der zugeordneten Kamera 23 nachführen zu können, kann die Steuereinrichtung 25 und/oder die mit der Steuereinrichtung 25 verbundene Positionsermittlungseinrichtung 57 dazu ausgebildet sein, die Lagen L1, L2, L3 und L4 der Positionsmarker 29 und/oder Veränderungen dieser Lagen L1, L2, L3 und L4 in aufeinanderfolgenden Abbildungen 39 bzw. 121 anhand der empfangenen Kameradaten D in Echtzeit zu bestimmen. Daraufhin können die Positionen 103,104,105 und 106 der Positionsmarker 29 an der Hintergrund-Wiedergabeeinrichtung derart verändert werden, dass die Positionsmarker 29 der zugeordneten Kamera 23 nachgeführt werden. Insbesondere kann die Steuereinrichtung 25 und/oder die Positionsermittlungseinrichtung 57 dabei ein Bildanalyseverfahren nutzen bzw. ausführen, um die abgebildeten Positionsmarker 41 in der Abbildung 121 des Beobachtungsgesichtsfelds 111 der Kamera 23 zu identifizieren. Ferner können die an veränderbaren Positionen 103,104,105 und 106 erzeugten Positionsmarker 29 als Markierungsmuster 30 erzeugt werden, so dass die Identifikation der abgebildeten Positionsmarker 41 in der Abbildung 121 erleichtert werden kann. Beispielhaft werden die Positionsmarker 29 dabei in den Fig. 10A bis 10C als Quadrate erzeugt.

Auch in Fig. 10B kann die Position A der zugeordneten Kamera 23 somit anhand der von den Sensorelementen 107 erzeugten Bilddaten bzw. anhand der Lagen L1, L2, L3 und L4 der abgebildeten Positionsmarker 41 innerhalb der Abbildung 121 des Beobachtungsgesichtsfelds 111 von der Positionsermittlungseinrichtung 57 ermittelt werden. Die von der zugeordneten Kamera 23 erzeugte Abbildung 119 des Aufnahmegesichtsfelds 109 wird hingegen auch infolge der Bewegung der Kamera 23 von der Fig. 10A zu der Fig. 10B durch die erzeugten Positionsmarker 29 nicht beeinträchtigt, da die Positionsmarker 29 sich stets außerhalb des Aufnahmegesichtsfelds 109 der Kamera 23 befinden. Ferner kann die Steuereinrichtung 25 dazu ausgebildet sein, die geänderten Positionen 103', 104', 105' und 106' der Positionsmarker 29 an der Hintergrund-Wiedergabeeinrichtung 15 in Echtzeit an die Positionsermittlungseinrichtung 57 zu übermitteln, so dass die Positionsermittlungseinrichtung 57 stets die aktuellen bzw. gegebenenfalls geänderten Positionen 103', 104', 105' und 106' bei der Ermittlung der Position A der zugeordneten Kamera 23 berücksichtigen kann.

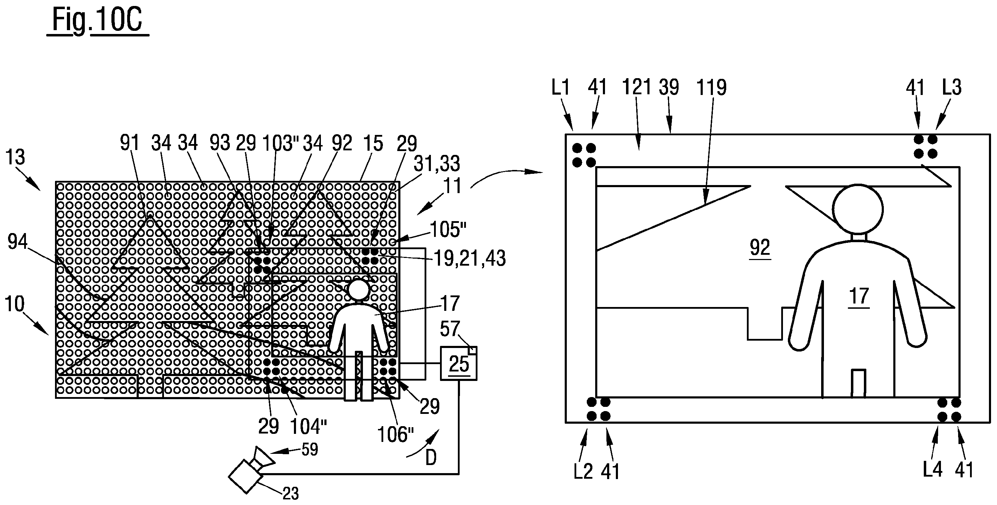

Wie Fig. 10C zeigt, können die Positionen 103', 104', 105' und 106' der Positionsmarker 29 mittels der Steuereinrichtung 25 auch während der folgenden Bewegung der zugeordneten Kamera 23 derart verändert werden, dass die in Fig. 10C an den Positionen 103", 104", 105" und 106" angeordneten Positionsmarker 29 wiederum in dem Beobachtungsgesichtsfeld 111 der zugeordneten Kamera 23, nicht jedoch in dem Aufnahmegesichtsfeld 109 liegen. Die Positionsmarker 29 können somit während des gesamten Kameraschwenks von den Sensorelementen 107 des Overscan-Bereichs 115 des Bildsensors 95 der zugeordneten Kamera dran 20 detektiert werden, während die von den in dem rechteckigen Sensorbereich 113 angeordneten Sensorelementen 108 erzeugte Abbildung 119 des Aufnahmegesichtsfeld 109 der zugeordneten Kamera 23 durch die Positionsmarker 29 vollkommen unbeeinträchtigt ist.

Insbesondere kann es eine derartige Steuerung der Hintergrund-Wiedergabeeinrichtung 15 in Kombination mit der zugeordneten Kamera 23, welche einen Bildsensor 95 mit Overscan-Bereich 115 aufweist, ermöglichen, die Positionsmarker 29 im sichtbaren Wellenlängenbereich zu erzeugen, ohne dass die vorgesehene Aufnahme der Szene mittels der zugeordneten Kamera 23 beeinträchtigt wird oder die Positionsmarker 29 nachträglich aus der Abbildung 119 des Aufnahmegesichtsfelds 109 der zugeordneten Kamera 23 entfernt werden müssen. Dabei kann die Hintergrund-Wiedergabeeinrichtung insbesondere eine Vielzahl von Lichtquellen 34 aufweisen, welche dazu ausgebildet sind, wahlweise die Darstellung 19 des virtuellen Hintergrunds 21 bzw. einen Teil derselben oder einen Positionsmarker 29 bzw. einen Teil eines Positionsmarker 29 zu erzeugen. Die Positionsmarker 29 können dabei gewissermaßen als Überlagerung der Darstellung 19 des virtuellen Hintergrunds 21 wiedergegeben werden, wobei die Steuereinrichtung 25 dazu ausgebildet sein kann, in Abhängigkeit von den Kameradaten D eine jeweilige Auswahl von Lichtquellen 34 zum Erzeugen von Positionsmarkern 29 anzusteuern, so dass die Positionsmarker 29 in dem Beobachtungsgesichtsfeld 111 der zugeordneten Kamera 23, nicht jedoch in deren Aufnahmegesichtsfeld 109 liegen. Zum Verändern der Position 103, 104, 105 oder 106 eines Positionsmarkers 29 kann die Steuereinrichtung insbesondere die Auswahl an Lichtquellen 34 verändern, welche zum Erzeugen des jeweiligen Positionsmarkers 29 verwendet werden. Zuvor zum Erzeugen des Positionsmarkers 29 genutzte Lichtquellen 34 können darauffolgend unmittelbar wieder an der Darstellung 19 des virtuellen Hintergrunds 21 beteiligt werden, so dass beispielsweise die in Fig. 10A Positionsmarker 29 erzeugenden Lichtquellen 34 in Fig. 10B an der Darstellung 19 des virtuellen Hintergrunds 21 beteiligt sind.

Letztlich ermöglicht die genannte Kombination einer solchen Hintergrund-Wiedergabeeinrichtung 15 mit einer zugeordneten Kamera 23, die einen Bildsensor 95 mit einem Overscan-Bereich 115 aufweist, die Position A der zugeordneten Kamera 23 ohne jeglichen konstruktiven Aufwand zu bestimmen. Vielmehr kann bei einer grundsätzlich herkömmlichen Hintergrund-Wiedergabeeinrichtung 15, die eine Vielzahl von Lichtquellen 34 umfasst, eine Steuereinrichtung 25 vorgesehen werden, um einige der Lichtquellen 34 nicht für die Darstellung 19 des virtuellen Hintergrunds 21, sondern zum Erzeugen von Positionsmarkern 29 zu verwenden und die Positionsmarker 29 dem Beobachtungsgesichtsfeld 111 der zugeordneten Kamera 23 nachzuführen. Dies ermöglicht es, die Position A der zugeordneten Kamera 23 auf einfache Weise und durch im sichtbaren Wellenlängenbereich an der Hintergrund-Wiedergabeeinrichtung erzeugte Positionsmarker 29 zu ermitteln, ohne dass diese sichtbaren Positionsmarker 29 die von der zugeordneten Kamera 23 zu erzeugende Abbildung 111 der Szene in dem Bildaufnahmestudio 13 beeinträchtigen.

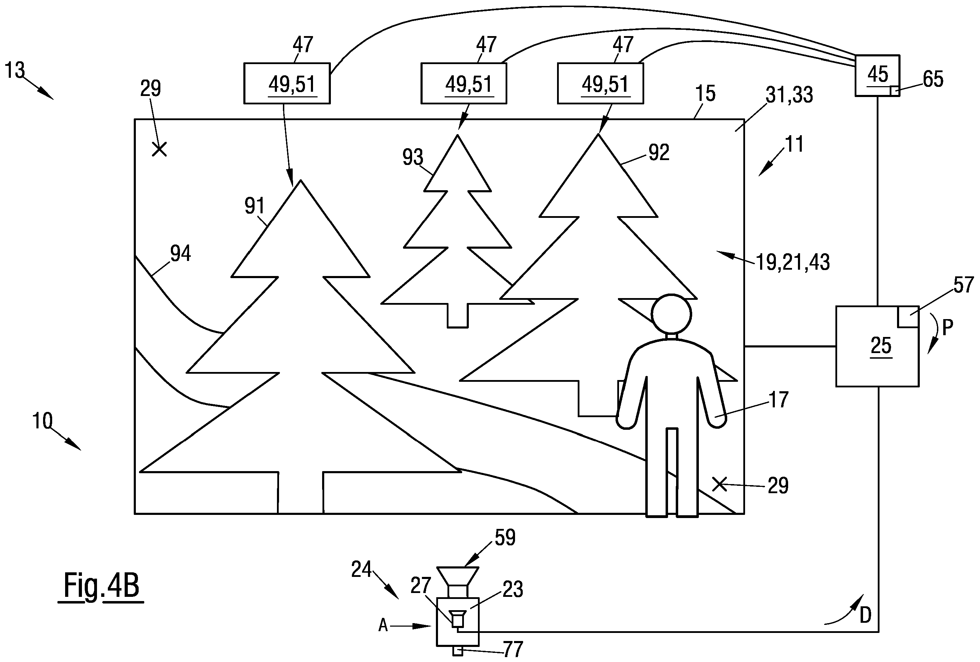

Alternativ zu einer Ermittlung der Position A der zugeordneten Kamera 23 anhand einer von der Kamera 23 erzeugten Abbildung 39 kann, wie Fig. 4B zeigt, anstelle der ausschließlich verwendeten Hauptkamera 23 auch das Kamerasystem 24 zum Bestimmen der Position A der Kamera 23 vorgesehen sein, wobei die mit der Hauptkamera 23 verbundene Hilfskamera 27 dazu ausgebildet sein kann, Kameradaten D an die Steuereinrichtung 25 der Hintergrund-Wiedergabeeinrichtung 15 bzw. an die Positionsermittlungseinrichtung 57 zu übermitteln. Hierbei kann beispielsweise, wie vorstehend erläutert, zunächst eine Position der Hilfskamera 27 von der Positionsermittlungseinrichtung 57 anhand der Lagen L1 und L2 der Positionsmarker 29 in der von der Hilfskamera 27 erzeugten Abbildung 39 ermittelt werden, woraus aufgrund der relativ zu der Hauptkamera 23 definierten Position der Hilfskamera 27 unmittelbar die Position A der Kamera 23 bestimmt werden kann. Alternativ dazu können in der von der Hilfskamera 27 erzeugten Abbildung 39 bestimmte Lagen L1 und L2 zunächst mittels einer Parallaxenkorrektur in erwartete Lagen L1 und L2 bei einer an der Position A der Hauptkamera erfolgenden Abbildung überführt werden, um daraus anhand dieser überführten Lagen L1 und L2 die Position A der Hauptkamera 23 unmittelbar bestimmen zu können. Die - auch zu einer solchen Parallaxenkorrektur benötigte - relative Position zwischen der Hilfskamera 27 und der Hauptkamera 23 kann beispielsweise während einer Kalibrierung in die Positionsermittlungseinrichtungen 57 eingebbar sein, so dass das Hintergrundwiedergabesystem 11 mit verschiedenen Kamerasystemen 24, insbesondere verschiedenen Hauptkameras 23, genutzt werden kann.

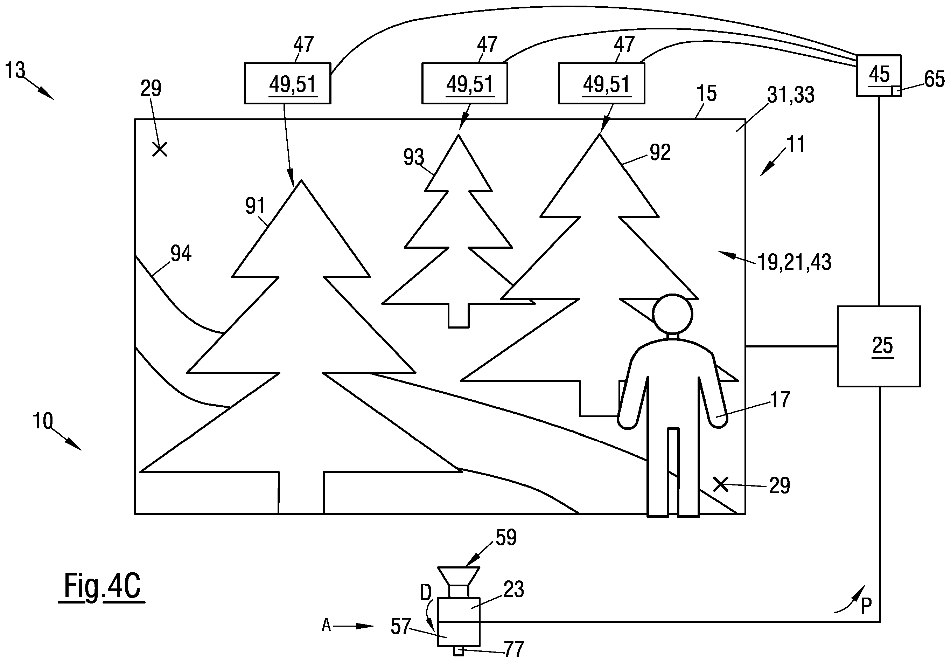

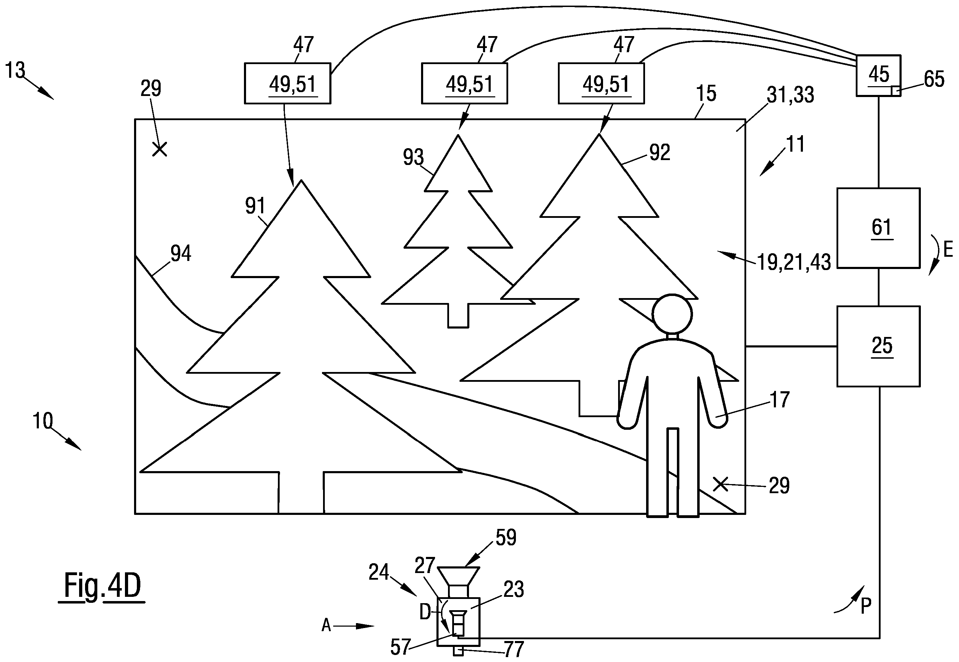

Gemäß den in den Fig. 4C und 4D veranschaulichten Ausführungsformen kann es auch vorgesehen sein, dass die Hauptkamera 23 bzw. die Hilfskamera 27 eine Positionsermittlungseinrichtung 57 umfasst. Hierbei können folglich unmittelbar Positionsdaten P an die Steuereinrichtung 25 der Hintergrund-Wiedergabeeinrichtung 15 übermittelt werden, während die Kameradaten D innerhalb der Kamera 23 bzw. des Kamerasystems 24 verarbeitet werden.

Eine solche, in die Kamera 23 bzw. die Hilfskamera 27 integrierte Positionsermittlungseinrichtung 57 kann beispielsweise dazu ausgebildet sein, zunächst Positionen der Positionsmarker 29 in einem bezüglich der Kamera 23 definierten Koordinatensystem x, y, z zu bestimmen, dessen Ursprung insbesondere an der Position A der Kamera 23 definiert sein kann (vgl. Fig. 6A bis 7B). Dabei können beispielsweise relative Positionen der Positionsmarker 29 zueinander vor dem Beginn der Aufnahme in die Kamera 23, beispielsweise durch Anschließen eines Computers bzw. PCs oder über ein Eingabemenü der Kamera 23 bzw. der Hilfskamera 27, eingegeben werden, so dass die Positionsermittlungseinrichtung 57 gewissermaßen auf das Bildaufnahmestudio 13 bzw. die Hintergrund-Wiedergabeeinrichtung 15 kalibriert werden kann.

Eine unbekannte Position eines Positionsmarkers 29 mit den Koordinaten (X, Y, Z) kann dabei beispielsweise ermittelt werden, indem eine von diesem Positionsmarker 29 ausgehende, entlang der zuvor bestimmten Richtung R1 zeigende Gerade 71 und eine von einem weiteren Positionsmarker 29 ausgehende, entlang der zuvor bestimmten Richtung R2 zeigende Gerade 72 betrachtet werden, die sich an der Position der Kamera 23 bzw. der Hilfskamera 27, insbesondere im Ursprung, schneiden. Aufgrund der bekannten relativen Positionen der Positionsmarker 29 können die Koordinaten des weiteren Positionsmarkers 29 als (X, Y + Y1, Z + Z1) angegeben werden, wobei Y1 und Z1 bekannt sind. Nachdem daraufhin die Positionen der Positionsmarker 29 in dem bezüglich der Kamera 23 festgelegten Koordinatensystem x, y, z ermittelt wurden, kann durch einen Vergleich dieser Koordinaten der Positionsmarker 29 mit den Koordinaten der Positionsmarker 29 in einem bezüglich der Hintergrund-Wiedergabeeinrichtung 15 festen Koordinatensystem x, y, z die Position A der Kamera 23 in diesem Koordinatensystem x, y, z berechnet werden. Die Richtungen R1 und R2 können auch hierbei zunächst durch Berücksichtigen einer Ausrichtung der zugeordneten Kamera 23 und/oder der Hilfskamera 27 in ein gegenüber dem bezüglich der Hintergrund-Wiedergabeeinrichtung 15 bzw. des Bildaufnahmestudios 13 definierten Koordinatensystem x, y, z allenfalls translatorisch verschobenes Koordinatensystem x, y, z überführt werden.

Grundsätzlich kann die ermittelte Position A der Kamera 23 von der Steuereinrichtung 25 dazu genutzt werden, die Darstellung 19 des virtuellen Hintergrunds 21 in Abhängigkeit von dieser Position A anzupassen. Dabei kann die Steuereinrichtung 25 beispielsweise auf den Speicher 45 zurückgreifen, in welchem zumindest ein Modell zum Erzeugen der Darstellung 19 des virtuellen Hintergrunds 21 gespeichert sein kann. Dabei kann ein solches Modell beispielsweise für jeweilige Hintergrundbereiche 47, die insbesondere den Objekten 91, 92, 93 und 94 des virtuellen Hintergrunds 21 zugeordnet sein können, jeweilige Bildinformationen 49 und jeweilige Positionsinformationen 51 umfassen. Die Steuereinrichtung 25 kann dabei dazu ausgebildet sein, die Darstellung 19 des virtuellen Hintergrunds 21 anhand der Bildinformationen 49 zu erzeugen und unter Berücksichtigung der Positionsinformationen 51 sowie in Abhängigkeit von der Position A der zugeordneten Kamera 23 anzupassen. Insbesondere können die Positionsinformationen 51 dabei jeweilige Abstände der Hintergrundbereiche 47 zu der Wiedergabefläche 31 umfassen.

Um die Darstellung 19 des virtuellen Hintergrunds 21 zu erzeugen und/oder anzupassen, kann die Steuereinrichtung 25 insbesondere auf eine Game-Engine zurückgreifen, welche als ein Softwaremodul zum Erzeugen und/oder Anpassen der Darstellung 19 des virtuellen Hintergrunds 21 ausgebildet sein kann. Eine solche Game-Engine kann dabei beispielsweise auf eine in dem Speicher 45 gespeicherte Datenbank 65 zurückgreifen und die Darstellung 19 des virtuellen Hintergrunds 21 in Abhängigkeit von der Position A der Kamera 23 in Echtzeit anpassen.

Anhand der Fig. 8A bis 9F werden nachstehend verschiedene Möglichkeiten zur Steuerung der Hintergrund-Wiedergabeeinrichtung 15 in Abhängigkeit von der Position A der Kamera 23 beispielhaft erörtert, um mittels der zugeordneten Kamera 23 eine Abbildung 39 erzeugen zu können, die einer erwarteten Abbildung eines dem virtuellen Hintergrund 21 entsprechenden realen Hintergrunds 20 entspricht.

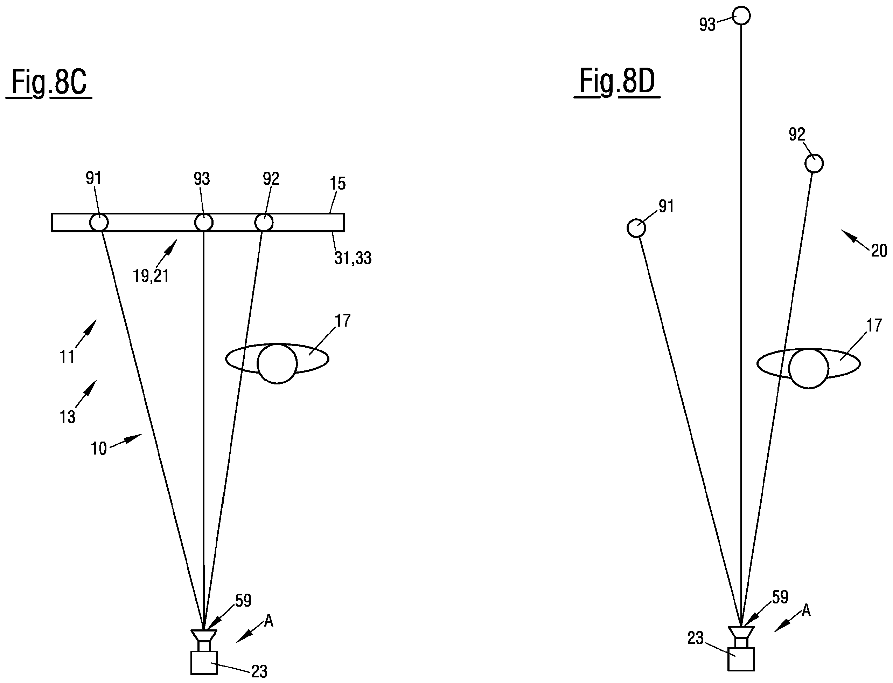

Fig. 8A veranschaulicht dabei zunächst eine Aufnahme in dem virtuellen Bildaufnahmestudio 13, wobei die Objekte 91, 92 und 93 an der Wiedergabefläche 31 derart wiedergegeben werden, dass von den Objekten 91, 92 und 93 ausgehende Strahlen in denselben Winkeln auf das Objektiv 59 der Kamera 23 auftreffen wie von entsprechenden Objekten 91, 92 und 93 in dem realen Hintergrund 20 ausgehende Strahlen, wobei der reale Hintergrund 20 dreidimensional ist und dem virtuellen Hintergrund 21 entspricht (vgl. Fig. 8B). Wird nun die Position A der Kamera 23 verändert, ändern sich diese Winkel bei einer Abbildung 39 der Darstellung 19 des virtuellen Hintergrunds 21 anders als bei einem Abbilden des realen Hintergrunds 20, da die Objekte 92 und 93 in dem realen Hintergrund 20 in einem anderen Abstand zu der Kamera 23 angeordnet sind als bei deren Wiedergabe auf der Wiedergabefläche 31 der Hintergrund-Wiedergabeeinrichtung 15 (vgl. Fig. 8C und 8D). Die von der Kamera 23 erzeugte Abbildung 39 der Darstellung 19 des virtuellen Hintergrunds 21 entspricht somit bei der veränderten Position A der Kamera 23 nicht der Abbildung, die ein Betrachter bei einem Abbilden des realen Hintergrunds 20 erwarten würde.

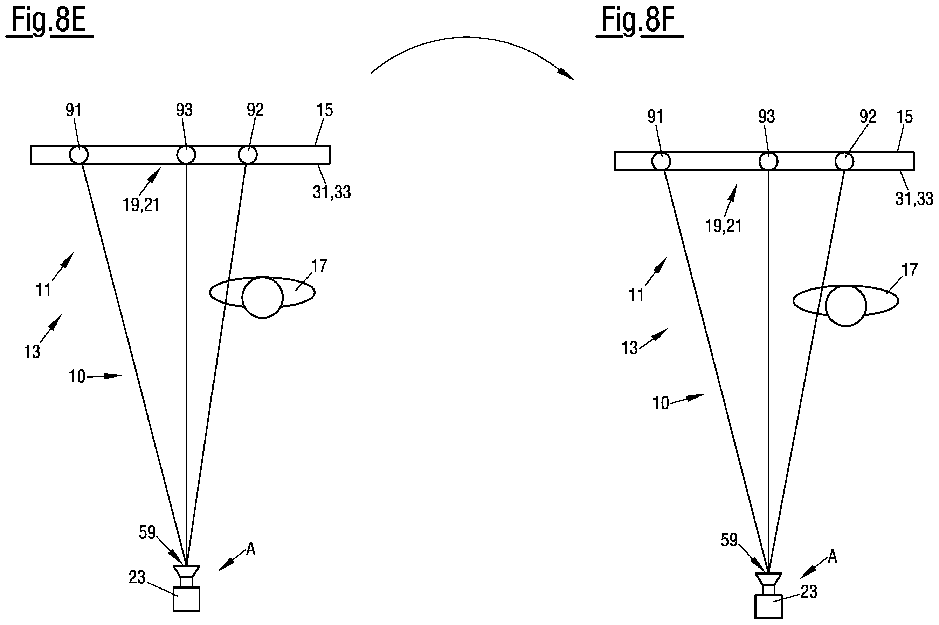

Durch das Bestimmen der Position A der Kamera 23 kann die Darstellung 19 des virtuellen Hintergrunds 21, insbesondere unter Berücksichtigung jeweiliger Positionsinformationen 51 von Hintergrundbereichen 47 des virtuellen Hintergrunds 21, jedoch derart angepasst werden, dass die von der Kamera 23 erzeugte Abbildung 39 der Darstellung 19 des virtuellen Hintergrunds 21 der erwarteten Abbildung des realen Hintergrunds 20 entspricht. Wie die Fig. 8E und 8F zeigen, können die Objekte 91, 92 und 93 dazu ausgehend von der Darstellung der Fig. 8E verschoben werden, so dass die Objekte 91, 92 und 93 letztlich in der erwarteten Anordnung von der Kamera 23 abgebildet werden können (vgl. Fig. 8F).

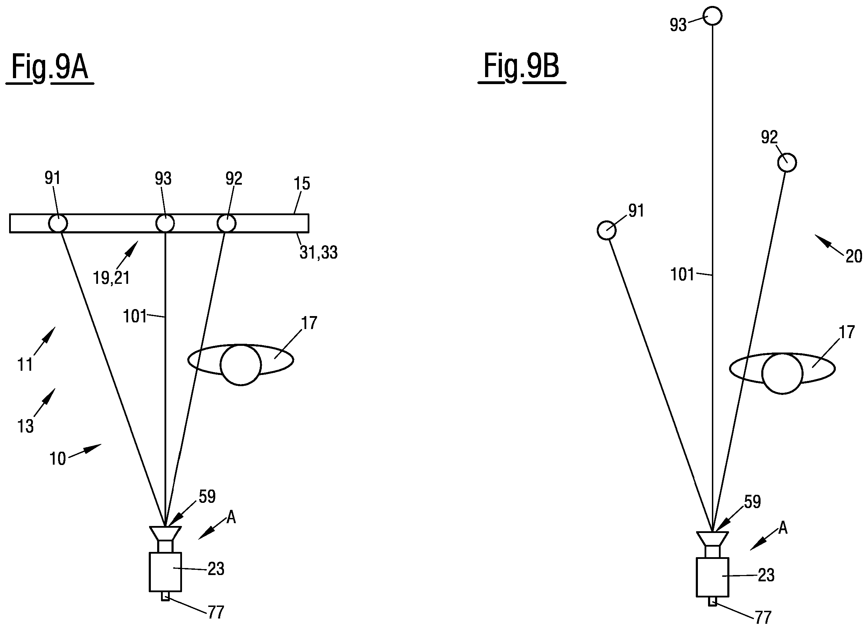

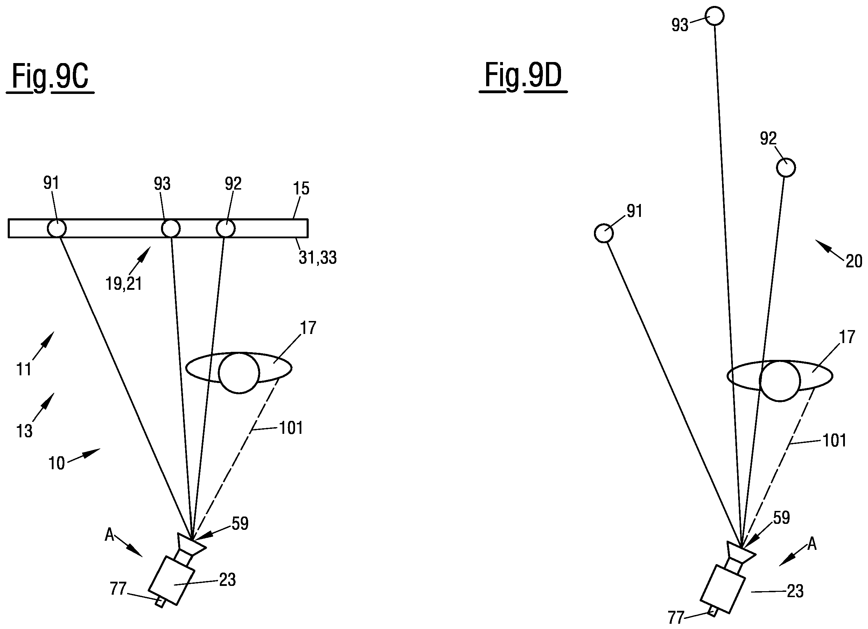

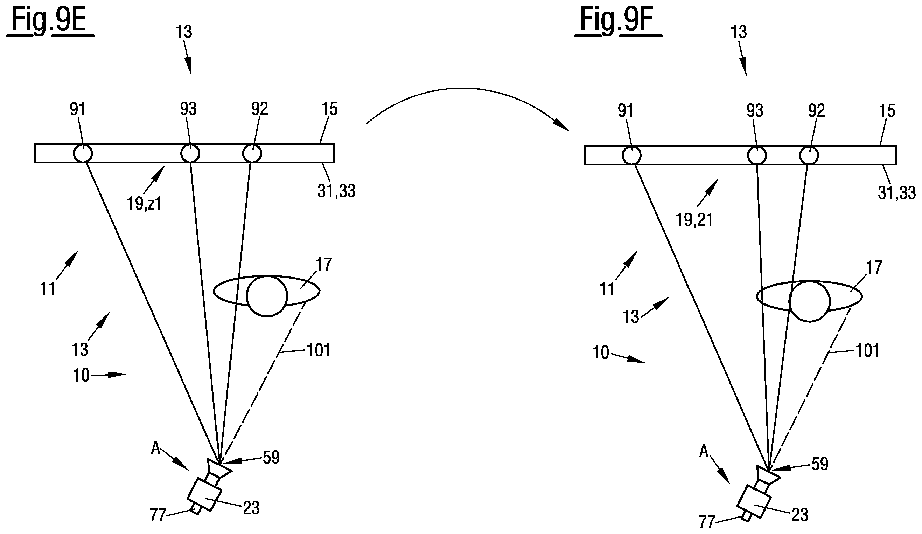

Die Fig. 9A bis 9F veranschaulichen ferner eine Möglichkeit, die Darstellung 19 des virtuellen Hintergrunds 21 in Abhängigkeit von der Position A der zugeordneten Kamera 23 sowie unter Berücksichtigung der Ausrichtung der Kamera 23 bzw. deren Drehstellung anzupassen. Wiederum zeigen die Fig. 9A und 9B eine Situation, in welcher die Kamera 23 bei einer Ausrichtung auf die Wiedergabefläche 31 der Hintergrund-Wiedergabeeinrichtung 15 eine Abbildung 39 erzeugt, welche einer erwarteten Abbildung bei Abbilden des realen Hintergrunds 20 entspricht. Wird die Kamera 23 daraufhin gedreht, werden die Objekte 92 und 93 in der Darstellung 19 des virtuellen Hintergrunds 21 in Winkeln zu der optischen Achse 101 der Kamera 23 wiedergegeben, die nicht den Winkeln bei einem Abbilden des realen Hintergrunds 20 entsprechen (vgl. Fig. 9C und 9D). Wie die Fig. 9E und 9F zeigen, kann jedoch auch dieser Effekt durch Verschieben der Objekte 92 und 93 auf der Wiedergabefläche 31 bei Kenntnis der Position A der Kamera 23 sowie deren Ausrichtung, die insbesondere mittels der Messeinrichtung 77 ermittelt werden kann, korrigiert werden. Auch zu einer solchen Korrektur ist jedoch die Kenntnis der Position A der Kamera 23 erforderlich, welche, wie vorstehend erläutert, anhand der Lagen L1 und L2 der Positionsmarker 29 in der von der Kamera 23 bzw. einer damit verbundenen Hilfskamera 27 erzeugten Abbildung 39 der Hintergrund-Wiedergabeeinrichtung 15 ermittelt werden kann. Die Steuereinrichtung 25 kann insbesondere dazu ausgebildet sein, die Darstellung 19 des virtuellen Hintergrunds 21 in Echtzeit in Abhängigkeit von sich ändernden Positionen A und/oder sich ändernden Ausrichtungen der Kamera 23 anzupassen.

Die an der Hintergrund-Wiedergabeeinrichtung 15 angebrachten Positionsmarker 29 ermöglichen es somit auf einfache Weise, die Position A der Kamera 23 zu bestimmen und die Darstellung 19 des virtuellen Hintergrunds 21 unter Berücksichtigung dieser Position A anzupassen. Zudem sind verschiedene Ausführungsformen der zugeordneten Kamera 23 oder eines Kamerasystems 24 möglich, um die Position A der Kamera 23 aus einer an dieser Position A erstellten Abbildung 39 ermitteln zu können. Auf konstruktiv aufwendige Lösungen, bei welchen die Kamera 23 von externen bzw. weiteren hochauflösenden Kameras beobachtet wird, kann hierbei folglich verzichtet werden.

### Bezugszeichenliste

- 10: Aufnahmesystem
- 11: Hintergrundwiedergabesystem
- 13: Bildaufnahmestudio
- 15: Hintergrund-Wiedergabeeinrichtung
- 17: reales Motiv, Schauspieler
- 19: Darstellung
- 20: realer Hintergrund
- 21: virtueller Hintergrund
- 23: Kamera, Hauptkamera
- 24: Kamerasystem
- 25: Steuereinrichtung
- 27: Hilfskamera
- 29: Positionsmarker
- 30: Markierungsmuster
- 31: Wiedergabefläche
- 33: Lichtquellen-Wand
- 34: Lichtquelle
- 35: Bildelement-Lichtquelle
- 36: Raster der Bildelement-Lichtquellen
- 37: Positionsmarker-Lichtquelle
- 38: Leuchtdiode
- 39: Abbildung
- 41: abgebildeter Positionsmarker
- 43: dreidimensionale Szene
- 45: Speicher
- 47: Hintergrundbereich
- 49: Bildinformation
- 51: Positionsinformation
- 53: Kamerakörper
- 55: Hauptsensorelement oder Hilfssensorelement
- 57: Positionsermittlungseinrichtung
- 59: Kameraobjektiv, Wechselobjektiv
- 61: Ergänzungssensorelement
- 63: Ergänzungssensorbereich
- 65: Datenbank
- 67: Lichteintrittsöffnung
- 69: Hauptsensorbereich
- 70: Mittelpunktstrahl
- 71: Mittelpunktstrahl
- 72: Mittelpunktstrahl
- 73: Abstand zwischen Lichteintrittsöffnung und Bildsensor
- 75: Mittelpunkt der Wiedergabefläche
- 77: Messeinrichtung
- 79: Sucher
- 81: Objektivring
- 83: Objektiv-Stellmotor
- 85: Objektivring-Antriebseinheit
- 87: Haltestange
- 89: Kopplungsstange
- 91: erstes Objekt
- 92: zweites Objekt
- 93: drittes Objekt
- 94: viertes Objekt
- 95: Bildsensor
- 96: Mittelpunkt des Bildsensors
- 97: Ausleseelektronik
- 99: Signalausgang
- 101: optische Achse
- 103, 103', 103": Position des Positionsmarkers
- 104, 104', 104": Position des Positionsmarkers
- 105, 105', 105": Position des Positionsmarkers
- 106, 106', 106": Position des Positionsmarkers
- 107: Sensorelement
- 108: Sensorelement
- 109: Aufnahmegesichtsfeld
- 111: Beobachtungsgesichtsfeld
- 113: rechteckiger Sensorbereich
- 115: Overscan-Bereich
- 117: Rand
- 119: Abbildung des Aufnahmegesichtsfeld
- 121: Abbildung des Beobachtungsgesichtsfeld
- 123: Wiedergabemodul
- 125: seitlicher Rand
- A: Position
- B: Bilddaten, Bilddatensatz
- D: Kameradaten
- L1, L2, L3, L4: Lage
- P: Positionsdaten
- R1, R2: Richtung
- S: Bildelement-Lichtsignale
- U: Ursprung
- x, x': Achse
- X1: Koordinate
- y, y': Achse
- Y1, Y2: Koordinate
- z, z': Achse
- Z1, Z2: Koordinate

## Patentansprüche

1. Hintergrund-Wiedergabeeinrichtung (15) für ein virtuelles Bildaufnahmestudio (13),
welche dazu ausgebildet ist, hinter oder über einem realen Motiv (17) eine Darstellung (19) eines virtuellen Hintergrunds (21) für eine Aufnahme mittels einer zugeordneten Kamera (23) wiederzugeben,
wobei die Hintergrund-Wiedergabeeinrichtung (15) ferner dazu ausgebildet ist, mehrere vorbestimmte optisch detektierbare Positionsmarker (29) wiederzugeben, um eine Ermittlung einer Position (A) der zugeordneten Kamera (23) relativ zu der Hintergrund-Wiedergabeeinrichtung (15) durch Identifizieren der Positionsmarker (29) in einer Abbildung der Hintergrund-Wiedergabeeinrichtung (15)_zu ermöglichen,
wobei die Hintergrund-Wiedergabeeinrichtung (15) eine Lichtquellen-Wand (33) aufweist, die eine Vielzahl von Lichtquellen (35) umfasst, wobei die Lichtquellen (35) dazu ausgebildet sind, die Darstellung (19) des virtuellen Hintergrunds (21) wiederzugeben und die mehreren Positionsmarker (29) zu erzeugen,
**dadurch gekennzeichnet, dass**
die Hintergrund-Wiedergabeeinrichtung (15) mehrere Positionsmarker-Lichtquellen (37) aufweist, welche die mehreren Positionsmarker (29) erzeugen, und wobei die Lichtquellen-Wand (33) eine Vielzahl von individuell ansteuerbaren Bildelement-Lichtquellen (35) umfasst, welche in einer flächigen Anordnung jeweilige Bildelement-Lichtsignale (S) erzeugen, um den virtuellen Hintergrund (21) wiederzugeben,
wobei die Vielzahl von Bildelement-Lichtquellen (35) in einem regelmäßigen Raster (36) angeordnet ist, wobei eine jeweilige der mehreren Positionsmarker-Lichtquellen (37) zwischen mehreren der Bildelement-Lichtquellen (35) des regelmäßigen Rasters (36) angeordnet ist;
und/oder
wobei die Hintergrund-Wiedergabeeinrichtung (15) mehrere Wiedergabemodule (123) mit seitlichen Rändern (125) aufweist, wobei die mehreren Wiedergabemodule (123) an ihren seitlichen Rändern (125) aneinandergrenzen, wobei jedes der mehreren Wiedergabemodule (123) einen Teil der Vielzahl von Bildelement-Lichtquellen (35) aufweist, wobei die mehreren Positionsmarker-Lichtquellen (37) an den seitlichen Rändern (125) der mehreren Wiedergabemodule (123) angeordnet sind.

2. Hintergrund-Wiedergabeeinrichtung (15) nach Anspruch 1,
wobei die Hintergrund-Wiedergabeeinrichtung (15) eine Wiedergabefläche (31) für die Darstellung (19) des virtuellen Hintergrunds (21) aufweist und sich in einer vertikalen und/oder horizontalen Ausrichtung erstreckt.

3. Hintergrund-Wiedergabeeinrichtung (15) nach Anspruch 1 oder 2,
wobei die Hintergrund-Wiedergabeeinrichtung (15) dazu ausgebildet ist, die mehreren Positionsmarker (29) mit teilweise oder vollständig anderen Wellenlängen als die Bildelement-Lichtsignale (S) zu erzeugen, und/oder
wobei die Hintergrund-Wiedergabeeinrichtung (15) dazu ausgebildet ist, die mehreren Positionsmarker (29) mit teilweise oder vollständig nicht-sichtbaren Wellenlängen zu erzeugen.

4. Hintergrund-Wiedergabeeinrichtung (15) nach einem der vorhergehenden Ansprüche, wobei die Hintergrund-Wiedergabeeinrichtung (15) dazu ausgebildet ist, die Positionsmarker (29) als wenigstens ein vorbestimmtes Markierungsmuster (30) zu erzeugen.

5. Hintergrundwiedergabesystem (11) für ein virtuelles Bildaufnahmestudio (13), umfassend:
- eine Hintergrund-Wiedergabeeinrichtung (15) nach einem der vorhergehenden Ansprüche; und
- eine Positionsermittlungseinrichtung (57), welche dazu ausgebildet ist, in Abhängigkeit von Kameradaten (D), welche Lagen (L1, L2) der mehreren Positionsmarker (29) innerhalb einer Abbildung (39) der Hintergrund-Wiedergabeeinrichtung (15) repräsentieren, die Position (A) der zugeordneten Kamera (23) zu ermitteln.

6. Hintergrundwiedergabesystem (11) nach Anspruch 5,
wobei die Kameradaten (D) Koordinaten (Y1, Z1; Y2, Z2) der Lagen (L1, L2) der mehreren Positionsmarker (29) innerhalb einer von der zugeordneten Kamera (23) - welche eine Hauptkamera (23) bildet und zum Abbilden der Darstellung (19) des virtuellen Hintergrunds (21) und des realen Motivs (17) vorgesehen ist - und/oder von zumindest einer Hilfskamera (27) - welche lediglich zum Bestimmen der Position (A) der Hauptkamera (23) vorgesehen ist - erzeugten Abbildung (39) der Hintergrund-Wiedergabeeinrichtung (15) umfassen; und/oder
wobei die Kameradaten (D) Bilddaten (B) einer von der zugeordneten Kamera (23) - welche eine Hauptkamera (23) bildet und zum Abbilden der Darstellung (19) des virtuellen Hintergrunds (21) und des realen Motivs (17) vorgesehen ist - und/oder von zumindest einer Hilfskamera (27) - welche lediglich zum Bestimmen der Position (A) der Hauptkamera (23) vorgesehen ist - erzeugten Abbildung (39) der Hintergrund-Wiedergabeeinrichtung (15) umfassen, wobei die Positionsermittlungseinrichtung (57) dazu ausgebildet ist, die Lagen (L1, L2) der mehreren Positionsmarker (29) innerhalb der Abbildung (39) zu bestimmen; und/oder
wobei die Kameradaten (D) ferner eine Ausrichtung der zugeordneten Kamera (23), insbesondere eine Drehstellung und/oder Kippstellung der zugeordneten Kamera (23), umfassen, wobei die Positionsermittlungseinrichtung (57) dazu ausgebildet ist, die Ausrichtung bei dem Ermitteln der Position (A) der zugeordneten Kamera (23) zu berücksichtigen.

7. Hintergrundwiedergabesystem (11) nach Anspruch 5 oder 6,
wobei die Positionsermittlungseinrichtung (57) dazu ausgebildet ist, aus den Lagen (L1, L2) der mehreren Positionsmarker (29) innerhalb der Abbildung (39) jeweilige Richtungen (R1, R2) zu bestimmen, in welchen die an der Hintergrund-Wiedergabeeinrichtung (15) erzeugten mehreren Positionsmarker (29) relativ zu der zugeordneten Kamera (23) angeordnet sind;
wobei die Positionsermittlungseinrichtung (57) insbesondere dazu ausgebildet ist, die Position (A) der zugeordneten Kamera (23) als Schnittpunkt von Geraden (71, 72) zu bestimmen, welche von den mehreren Positionsmarkern (29) in den jeweiligen Richtungen (R1, R2) ausgehen.

8. Hintergrundwiedergabesystem (11) nach einem der Ansprüche 5 bis 7,
ferner mit einer Steuereinrichtung (25), welche dazu ausgebildet ist, die Darstellung (19) des virtuellen Hintergrunds (21) in Abhängigkeit von einer ermittelten Position (A) der zugeordneten Kamera (23) anzupassen.

9. Aufnahmesystem (10) mit einem Hintergrundwiedergabesystem (11) nach einem der Ansprüche 5 bis 8 und ferner mit der zugeordneten Kamera (23), welche eine Hauptkamera (23) bildet und zum Abbilden der Darstellung (19) des virtuellen Hintergrunds (21) und des realen Motivs (17) vorgesehen ist, und/oder mit zumindest einer Hilfskamera (27), welche lediglich zum Bestimmen der Position (A) der Hauptkamera (23) vorgesehen ist, wobei die Kamera und/oder die zumindest eine Hilfskamera (27) dazu ausgebildet ist/sind, die Kameradaten (D) für die Positionsermittlungseinrichtung (57) zu erzeugen.

10. Aufnahmesystem (10) nach Anspruch 9,
wobei die zugeordnete Kamera (23) oder die Hilfskamera (27) dazu ausgebildet ist, Licht einer nicht-sichtbaren Wellenlänge zu detektieren; und/oder
wobei lediglich der Bildsensor (95) der Hilfskamera (27), nicht jedoch der Bildsensor (95) der zugeordneten Kamera (23) für nicht-sichtbare Wellenlängen lichtempfindlich ist; und/oder wobei die Hilfskamera (27) dazu ausgebildet ist, lösbar, jedoch in einer definierten Position an der zugeordneten Kamera (23) befestigt zu werden; und/oder
wobei die zugeordnete Kamera (23) die Positionsermittlungseinrichtung (57) umfasst und wobei die zugeordnete Kamera (23) einen Signalausgang (99) aufweist, der dazu ausgebildet ist, die ermittelte Position (A) der Kamera (23) an die Hintergrund-Wiedergabeeinrichtung (15) zu übermitteln.

11. Verfahren zum Steuern einer Hintergrund-Wiedergabeeinrichtung (15), welche hinter oder über einem realen Motiv (17) eine Darstellung (19) eines virtuellen Hintergrunds (21) für eine Aufnahme mittels einer zugeordneten Kamera (23) wiedergibt und mehrere vorbestimmte optisch detektierbare Positionsmarker (29) erzeugt, in einem Aufnahmesystem (10) nach Anspruch 9 oder 10, mit dem Schritt:
- Ermitteln einer Position (A) der zugeordneten Kamera (23) in Abhängigkeit von Kameradaten (D), die Lagen (L1, L2) der mehreren Positionsmarker (29) innerhalb einer Abbildung (39) der Hintergrund-Wiedergabeeinrichtung (15) repräsentieren.

12. Verfahren nach Anspruch 11,
wobei die Darstellung (19) des virtuellen Hintergrunds (21) in Abhängigkeit von der ermittelten Position (A) der zugeordneten Kamera (23) angepasst wird; und/oder
wobei die Position (A) der zugeordneten Kamera (23) in Abhängigkeit von den Kameradaten (D) berechnet wird; und/oder
wobei die Position (A) der zugeordneten Kamera (23) in Abhängigkeit von den Kameradaten (D) in einer Nachschlagetabelle nachgeschlagen wird.

13. Verfahren nach Anspruch 11 oder 12,
wobei die Hintergrund-Wiedergabeeinrichtung (15) eine Lichtquellen-Wand (33) aufweist, wobei die Positionsmarker (29) von Lichtquellen (35, 37) der Lichtquellen-Wand (33) erzeugt werden; und/oder
wobei die Positionsmarker (29) in einem nicht-sichtbaren Wellenlängenbereich erzeugt werden; und/oder
wobei die Positionsmarker (29) als wenigstens ein vorbestimmtes Markierungsmuster (30) erzeugt werden.

## Claims

1. A background display device (15) for a virtual image recording studio (13), which is configured to display, behind or above a real subject (17), a representation (19) of a virtual background (21) for a recording by an associated camera (23),
wherein the background display device (15) is further configured to display a plurality of predetermined optically detectable position markers (29) in order to enable a determination of a position (A) of the associated camera (23) relative to the background display device (15) by identifying the position markers (29) in an image of the background display device (15), wherein the background display device (15) comprises a light-source wall (33) including a plurality of light sources (35), wherein the light sources (35) are configured to display the representation (19) of the virtual background (21) and to generate the plurality of position markers (29),
**characterized in that**
the background display device (15) comprises a plurality of position marker light sources (37) which generate the plurality of position markers (29), and wherein the light-source wall (33) comprises a plurality of individually controllable picture-element light sources (35) which generate respective picture-element light signals (S) in a planar arrangement in order to display the virtual background (21),
wherein the plurality of picture-element light sources (35) is arranged in a regular grid (36), wherein a respective one of the plurality of position marker light sources (37) is arranged between the plurality of picture-element light sources (35) of the regular grid (36),
and/or
wherein the background display device (15) comprises a plurality of display modules (123) having lateral edges (125), wherein the plurality of display modules (123) adjoin one another at their lateral edges (125), wherein each of the plurality of display modules (123) comprises a part of the plurality of picture-element light sources (35), wherein the plurality of position marker light sources (37) is arranged at the lateral edges (125) of the plurality of display modules (123).

2. A background display device (15) according to claim 1,
wherein the background display device (15) comprises a display surface (31) for the representation (19) of the virtual background (21) and extends in a vertical and/or horizontal orientation.

3. A background display device (15) according to claim 1 or 2,
wherein the background display device (15) is configured to generate the plurality of position markers (29) with partially or completely different wavelengths than the picture-element light signals (S), and/or
wherein the background display device (15) is configured to generate the plurality of position markers (29) with partially or completely non-visible wavelengths.

4. A background display device (15) according to any one of the preceding claims,
wherein the background display device (15) is configured to generate the position markers (29) as at least one predetermined marking pattern (30).

5. A background display system (11) for a virtual image recording studio (13), comprising:
- a background display device (15) according to any one of the preceding claims; and
- a position-determining device (57) which is configured to determine the position (A) of the associated camera (23) in dependence on camera data (D) which represent locations (L1, L2) of the plurality of position markers (29) within an image (39) of the background display device (15).

6. A background display system (11) according to claim 5,
wherein the camera data (D) include coordinates (Y1, Z1; Y2, Z2) of the locations (L1, L2) of the plurality of position markers (29) within an image (39) of the background display device (15) generated by the associated camera (23) - which forms a main camera (23) and is provided for imaging the representation (19) of the virtual background (21) and of the real subject (17) - and/or by at least one auxiliary camera (27) - which is only provided for determining the position (A) of the main camera (23); and/or
wherein the camera data (D) include image data (B) of an image (39) of the background display device (15) generated by the associated camera (23) - which forms a main camera (23) and is provided for imaging the representation (19) of the virtual background (21) and of the real subject (17) - and/or by at least one auxiliary camera (27) - which is only provided for determining the position (A) of the main camera (23) -, wherein the position-determining device (57) is configured to determine the locations (L1, L2) of the plurality of position markers (29) within the image (39); and/or
wherein the camera data (D) further include an orientation of the associated camera (23), in particular a rotational position and/or tilt position of the associated camera (23), wherein the position-determining device (57) is configured to consider the orientation when determining the position (A) of the associated camera (23).

7. A background display system (11) according to claim 5 or 6,
wherein the position-determining device (57) is configured to determine, from the locations (L1, L2) of the plurality of position markers (29) within the image (39), respective directions (R1, R2) in which the plurality of position markers (29) generated on the background display device (15) are arranged relative to the associated camera (23);
wherein the position-determining device (57) is in particular configured to determine the position (A) of the associated camera (23) as the intersection of straight lines (71, 72) which extend from the multiple position markers (29) in the respective directions (R1, R2).

8. A background display system (11) according to any one of the claims 5 to 7, further comprising a control device (25) configured to adapt the representation (19) of the virtual background (21) in dependence on a determined position (A) of the associated camera (23).

9. A recording system (10) comprising a background display system (11) according to any one of the claims 5 to 8 and further comprising the associated camera (23) which forms a main camera (23) and is provided for imaging the representation (19) of the virtual background (21) and of the real subject (17); and/or at least one auxiliary camera (27) which is only provided for determining the position (A) of the main camera (23), wherein the camera and/or the at least one auxiliary camera (27) is/are configured to generate the camera data (D) for the position-determining device (57).

10. A background display system (11) according to claim 9,
wherein the associated camera (23) or the auxiliary camera (27) is configured to detect light of a non-visible wavelength; and/or wherein only the image sensor (95) of the auxiliary camera (27) is light-sensitive to non-visible wavelengths but not the image sensor (95) of the associated camera (23); and/or
wherein the auxiliary camera (27) is configured to be detachable, but to be fastened to the associated camera (23) in a defined position; and/or wherein the associated camera (23) comprises the position-determining device (57) and wherein the associated camera (23) comprises a signal output (99) which is configured to transmit the determined position (A) of the camera (23) to the background display device (15).

11. A method for controlling a background display device (15), which displays, behind or above a real subject (17), a representation (19) of a virtual background (21) for a recording by an associated camera (23) and generates a plurality of predetermined optically detectable position markers (29), in a recording system (10) according to claim 9 or 10, comprising the step:
- determining a position (A) of the associated camera (23) in dependence on camera data (D) which represent locations (L1, L2) of the plurality of position markers (29) within an image (39) of the background display device (15).

12. A method according to claim 11,
wherein the representation (19) of the virtual background (21) is adapted in dependence on the determined position (A) of the associated camera (23); and/or
wherein the position (A) of the associated camera (23) is calculated in dependence on the camera data (D); and/or
wherein the position (A) of the associated camera (23) is looked up in dependence on the camera data (D) in a look-up table.

13. A method according to claim 11 or 12,
wherein the background display device (15) comprises a light-source wall (33), wherein the position markers (29) of light sources (35, 37) of the light source wall (33) are generated;
and/or
wherein the position markers (29) are generated in a non-visible wavelength range;
and/or
wherein the position markers (29) are generated as at least one predetermined marking pattern (30).

## Revendications

1. Dispositif de reproduction d'arrière-plan (15) pour un studio de prise de vue virtuel (13), qui est conçu pour reproduire une représentation (19) d'un arrière-plan virtuel (21) derrière ou au-dessus d'un sujet réel (17) pour une prise de vue au moyen d'une caméra associée (23),
dans lequel
le dispositif de reproduction d'arrière-plan (15) est en outre conçu pour reproduire une pluralité de marqueurs de position prédéfinis (29) détectables optiquement afin de permettre la détermination d'une position (A) de la caméra associée (23) par rapport au dispositif de reproduction d'arrière-plan (15) en identifiant les marqueurs de position (29) dans une image du dispositif de reproduction d'arrière-plan (15),
le dispositif de reproduction d'arrière-plan (15) comprend une paroi de sources lumineuses (33) comprenant une pluralité de sources lumineuses (35), les sources lumineuses (35) étant conçues pour reproduire la représentation (19) de l'arrière-plan virtuel (21) et pour générer la pluralité de marqueurs de position (29),
**caractérisé en ce que**
le dispositif de reproduction d'arrière-plan (15) comprend une pluralité de sources lumineuses de marqueurs de position (37) qui génèrent la pluralité de marqueurs de position (29), la paroi de sources lumineuses (33) comprenant une pluralité de sources lumineuses de pixels (35) pouvant être commandées individuellement, qui génèrent des signaux lumineux de pixels respectifs (S) en une disposition surfacique pour reproduire l'arrière-plan virtuel (21),
la pluralité de sources lumineuses de pixels (35) étant disposées selon une trame régulière (36), une source lumineuse respective de la pluralité de sources lumineuses de marqueurs de position (37) étant disposée entre plusieurs des sources lumineuses de pixels (35) de la trame régulière (36) ; et/ou
le dispositif de reproduction d'arrière-plan (15) comprenant une pluralité de modules de reproduction (123) ayant des bords latéraux (125), la pluralité de modules de reproduction (123) étant adjacents les uns aux autres au niveau de leurs bords latéraux (125), chacun de la pluralité de modules de reproduction (123) comprenant une partie de la pluralité de sources lumineuses de pixels (35), la pluralité de sources lumineuses de marqueurs de position (37) étant disposées au niveau des bords latéraux (125) de la pluralité de modules de reproduction (123).

2. Dispositif de reproduction d'arrière-plan (15) selon la revendication 1, dans lequel le dispositif de reproduction d'arrière-plan (15) comprend une surface de reproduction (31) pour la représentation (19) de l'arrière-plan virtuel (21) et s'étend selon une orientation verticale et/ou horizontale.

3. Dispositif de reproduction d'arrière-plan (15) selon la revendication 1 ou 2, dans lequel le dispositif de reproduction d'arrière-plan (15) est conçu pour générer la pluralité de marqueurs de position (29) avec des longueurs d'onde partiellement ou totalement différentes de celles des signaux lumineux de pixels (S), et/ou
le dispositif de reproduction d'arrière-plan (15) est conçu pour générer la pluralité de marqueurs de position (29) avec des longueurs d'onde partiellement ou totalement non visibles.

4. Dispositif de reproduction d'arrière-plan (15) selon l'une des revendications précédentes,
dans lequel le dispositif de reproduction d'arrière-plan (15) est conçu pour générer les marqueurs de position (29) sous la forme d'au moins un motif de marquage prédéfini (30).

5. Système de reproduction d'arrière-plan (11) pour un studio de prise de vue virtuel (13), comprenant :
- un dispositif de reproduction d'arrière-plan (15) selon l'une des revendications précédentes ; et
- un dispositif de détermination de position (57) conçu pour déterminer la position (A) de la caméra associée (23) en fonction des données de caméra (D) qui représentent des positions (L1, L2) de la pluralité de marqueurs de position (29) à l'intérieur d'une image (39) du dispositif de reproduction d'arrière-plan (15).

6. Système de reproduction d'arrière-plan (11) selon la revendication 5, dans lequel les données de caméra (D) incluent des coordonnées (Y1, Z1 ; Y2, Z2) des positions (L1, L2) de la pluralité de marqueurs de position (29) à l'intérieur d'une image (39) du dispositif de reproduction d'arrière-plan (15) générée par la caméra associée (23) - qui constitue une caméra principale (23) et est prévue pour reproduire la représentation (19) de l'arrière-plan virtuel (21) et du sujet réel (17) - et/ou par au moins une caméra auxiliaire (27) - qui est prévue uniquement pour définir la position (A) de la caméra principale (23) ; et/ou
les données de caméra (D) incluent des données d'image (B) d'une image (39) du dispositif de reproduction d'arrière-plan (15) générée par la caméra associée (23) - qui constitue une caméra principale (23) et est prévue pour reproduire la représentation (19) de l'arrière-plan virtuel (21) et du sujet réel (17) - et/ou par au moins une caméra auxiliaire (27) - qui est prévue uniquement pour définir la position (A) de la caméra principale (23), le dispositif de détermination de position (57) étant conçu pour définir les positions (L1, L2) de la pluralité de marqueurs de position (29) à l'intérieur de l'image (39) ; et/ou
les données de caméra (D) incluent en outre une orientation de la caméra associée (23), en particulier une position de rotation et/ou une position de basculement de la caméra associée (23), le dispositif de détermination de position (57) étant conçu pour prendre en compte l'orientation lors de la détermination de la position (A) de la caméra associée (23).

7. Système de reproduction d'arrière-plan (11) selon la revendication 5 ou 6, dans lequel le dispositif de détermination de position (57) est conçu pour définir, à partir des positions (L1, L2) de la pluralité de marqueurs de position (29) à l'intérieur de l'image (39), des directions respectives (R1, R2) dans lesquelles la pluralité de marqueurs de position (29) générés sur le dispositif de reproduction d'arrière-plan (15) sont disposés par rapport à la caméra associée (23) ;
en particulier, le dispositif de détermination de position (57) est conçu pour définir la position (A) de la caméra associée (23) en tant que point d'intersection de lignes droites (71, 72) qui partent de la pluralité de marqueurs de position (29) dans les directions respectives (R1, R2).

8. Système de reproduction d'arrière-plan (11) selon l'une des revendications 5 à 7,
comprenant en outre un dispositif de commande (25) conçu pour adapter la représentation (19) de l'arrière-plan virtuel (21) en fonction d'une position déterminée (A) de la caméra associée (23).

9. Système de prise de vue (10) comprenant un système de reproduction d'arrière-plan (11) selon l'une des revendications 5 à 8 et comprenant en outre la caméra associée (23) qui constitue une caméra principale (23) et est prévue pour reproduire la représentation (19) de l'arrière-plan virtuel (21) et du sujet réel (17), et/ou comprenant au moins une caméra auxiliaire (27) qui est prévue uniquement pour définir la position (A) de la caméra principale (23), la caméra et/ou ladite au moins une caméra auxiliaire (27) étant conçue(s) pour générer les données de caméra (D) pour le dispositif de détermination de position (57).

10. Système de prise de vue (10) selon la revendication 9,
dans lequel la caméra associée (23) ou la caméra auxiliaire (27) est conçue pour détecter la lumière d'une longueur d'onde non visible ; et/ou seul le capteur d'image (95) de la caméra auxiliaire (27), mais pas le capteur d'image (95) de la caméra associée (23), est sensible à la lumière de longueurs d'onde non visibles ; et/ou
la caméra auxiliaire (27) est conçue pour être fixée de manière amovible, mais dans une position définie, à la caméra associée (23) ; et/ou la caméra associée (23) comprend le dispositif de détermination de position (57), et la caméra associée (23) présente une sortie de signal (99) conçue pour transmettre la position déterminée (A) de la caméra (23) au dispositif de reproduction d'arrière-plan (15).

11. Procédé de commande d'un dispositif de reproduction d'arrière-plan (15) qui reproduit une représentation (19) d'un arrière-plan virtuel (21) derrière ou au-dessus d'un sujet réel (17) pour une prise de vue au moyen d'une caméra associée (23) et qui génère une pluralité de marqueurs de position prédéfinis (29) détectables optiquement, dans un système de prise de vue (10) selon la revendication 9 ou 10, comprenant l'étape consistant à :
- déterminer une position (A) de la caméra associée (23) en fonction de données de caméra (D) représentant des positions (L1, L2) de la pluralité de marqueurs de position (29) à l'intérieur d'une image (39) du dispositif de reproduction d'arrière-plan (15).

12. Procédé selon la revendication 11,
dans lequel la représentation (19) de l'arrière-plan virtuel (21) est adaptée en fonction de la position déterminée (A) de la caméra associée (23) ; et/ou la position (A) de la caméra associée (23) est calculée en fonction des données de caméra (D) ; et/ou
la position (A) de la caméra associée (23) est recherchée dans une table de consultation en fonction des données de caméra (D).

13. Procédé selon la revendication 11 ou 12,
dans lequel le dispositif de reproduction d'arrière-plan (15) comprend une paroi de sources lumineuses (33), les marqueurs de position (29) étant générés par des sources lumineuses (35, 37) de la paroi de sources lumineuses (33) ;
et/ou
les marqueurs de position (29) sont générés dans une plage de longueurs d'onde non visibles ;
et/ou
les marqueurs de position (29) sont générés sous la forme d'au moins un motif de marquage prédéfini (30).
